# EUROPEAN PATENT APPLICATION

(11) **EP 4 451 140 A1**
(43) Date of publication of application: **23.10.2024**
(21) Application number: 23745823.7
(22) Date of filing: 05.01.2023
(51) Int. Cl.: G06F 16/242

(54) **MAP QUERY METHOD AND ELECTRONIC DEVICE**

(30) Priority: 27.01.2022 CN 202210103861
(71) Applicant: Huawei Technologies Co., Ltd., Shenzhen, Guangdong 518129 (CN)
(72) Inventor: SUN, Fan, Shenzhen, Guangdong 518129 (CN)
(74) Representative: Goddar, Heinz J.
(86) International application number: PCT/CN2023/070626
(87) International publication number: WO 2023/142938

(57) **Abstract**

Embodiments of this application provide a map query method and an electronic device. The method includes: An electronic device receives a first query request; displays a first interface, where the first interface includes a first search result, and the first search result includes at least one geographical location that is related to the first query request and that is within a map range indicated by a first map area; displays a second interface, where the second interface includes a first historical record, and the first historical record is related to the first query request; receives a second query request that is based on the first historical record; and displays a third interface, where the third interface is the same as the first interface. According to embodiments of this application, a search result obtained through previous query can be reproduced during historical record-based query, user operations are reduced, and the search result is more accurate.

## Description

This application claims priority to Chinese Patent Application No. 202210103861.7, filed with the China National Intellectual Property Administration on January 27, 2022 and entitled "MAP QUERY METHOD AND ELECTRONIC DEVICE", which is incorporated herein by reference in its entirety.

### TECHNICAL FIELD

This application relates to the field of computer technologies, and in particular, to a map query method and an electronic device.

### BACKGROUND

An electronic map usually records user history or keywords that have been queried before. For example, if the user searches for a keyword "Gulou", the map records user search history "Gulou". However, when the user performs search again, the search is limited to a current city. For example, although there is a search result for "Gulou" in both Tianjin and Shanghai, a city in which an electronic device is currently located is Tianjin, and therefore, a search result provided by a map search engine is only a search result for "Gulou" in Tianjin. Consequently, historical record-based query results provided by the electronic map are inaccurate.

### SUMMARY

Embodiments of this application disclose a map query method and an electronic device, so that a search result obtained through previous query can be reproduced during historical record-based query, the search result is more accurate, and query operations of a user are reduced.

According to a first aspect, this application provides a map query method, applied to an electronic device. The method includes: receiving a first query request; displaying a first interface, where the first interface includes a first search result, and the first search result includes at least one geographical location that is related to the first query request and that is within a map range indicated by a first map area; displaying a second interface, where the second interface includes a first historical record, and the first historical record is related to the first query request; receiving a second query request that is based on the first historical record; and displaying a third interface, where the third interface is the same as the first interface.

In the foregoing method, a search result obtained by the electronic device through query based on the first historical record is the first search result that is obtained through previous query. A user can reproduce the search result obtained through previous query without performing complex query operations, the search result is more accurate, user experience is improved, and processing pressure of the device is reduced.

In a possible implementation, the electronic device is located at a first geographical location when receiving the second query request that is based on the first historical record, the first geographical location is within a map range indicated by a second map area, and the second map area is different from the first map area.

In the foregoing method, the first map area is a map area in which the electronic device performs previous query. When the electronic device receives, in the second map area other than the first map area, the second query request that is based on the first historical record, a search result obtained in this case is the first search result obtained through previous query, instead of a search result related to the second query request in the second map area. Therefore, a geographical location obtained through previous search is accurately reproduced, and the search result is more accurate, which meets a user requirement.

In a possible implementation, the first historical record includes a first keyword and the first map area, and the first keyword is related to the first query request.

In the foregoing method, the first historical record includes the first map area in which the first search result obtained through previous query is located. In this way, the user can quickly obtain, by using a historical record, map area information of a search result obtained through historical query, to assist the user in selecting a required historical record for query. Therefore, user operations are more convenient.

In a possible implementation, the at least one geographical location includes a second geographical location, and the second geographical location is within the map range indicated by the first map area; or the at least one geographical location includes a third geographical location and a fourth geographical location, the third geographical location is within a map range indicated by a third map area, the fourth geographical location is within a map range indicated by a fourth map area, and the map range indicated by the first map area includes the map range indicated by the third map area and the map range indicated by the fourth map area.

In a possible implementation, the method further includes: receiving a third query request; displaying a fourth interface, where the fourth interface includes a second search result, and the second search result includes at least one geographical location that is related to the third query request and that is within a map range indicated by a fifth map area; receiving a first user operation; displaying a fifth interface, where the fifth interface includes the second search result, and a size of the fifth map area displayed on the fifth interface is different from a size of the fifth map area displayed on the fourth interface; displaying a sixth interface, where the sixth interface includes a second historical record, the second historical record includes a second keyword and the fifth map area, and the second keyword is related to the third query request; receiving a fourth query request that is based on the second historical record; and displaying a seventh interface, where the seventh interface is the same as the fifth interface.

In a possible implementation, the first user operation is a zoom out gesture or a zoom in gesture.

In the foregoing method, a size of a map area displayed when the electronic device displays the second search result obtained through query based on the second historical record is a size of a map area displayed when the second search result obtained through query is displayed previously, and the user does not need to adjust a size of a displayed map area. This further reduces user operations and improves accuracy of the search result.

In a possible implementation, the method further includes: receiving a fifth query request; displaying an eighth interface, where the eighth interface includes a third search result, the third search result includes a fifth geographical location and a sixth geographical location that are related to the fifth query request, the fifth geographical location is within a map range indicated by a sixth map area, the sixth geographical location is within a map range indicated by a seventh map area, and the sixth map area is different from the seventh map area; receiving a second user operation for the fifth geographical location on the eighth interface; displaying a ninth interface, where the ninth interface includes the fifth geographical location within the map range indicated by the sixth map area; displaying a tenth interface, where the tenth interface includes a third historical record, the third historical record includes a third keyword and the sixth map area, and the third keyword is related to the fifth query request; receiving a sixth query request that is based on the third historical record; and displaying an eleventh interface, where the eleventh interface is the same as the ninth interface.

In the foregoing method, when map query is performed previously, the third search result obtained by the electronic device through query includes a plurality of geographical locations, the user selects the fifth geographical location in the plurality of geographical locations, and the correspondingly displayed third historical record includes the sixth map area in which the fifth geographical location selected by the user is located. In this case, a search result obtained through query based on the third historical record is the fifth geographical location previously selected by the user, instead of the third search result, and the user does not need to select the fifth geographical location. This further reduces user operations and improves accuracy of the search result.

In a possible implementation, the fifth geographical location and the sixth geographical location are within a map range indicated by an eighth map area, and the map range indicated by the eighth map area includes the map range indicated by the sixth map area and the map range indicated by the seventh map area.

In a possible implementation, the tenth interface further includes a fourth historical record, the fourth historical record includes information about a first point of information POI, the first POI is the fifth geographic location, and the information about the first POI includes a name of the fifth geographic location and the sixth map area.

In a possible implementation, the method further includes: receiving a seventh query request; displaying a twelfth interface, where the twelfth interface includes a fourth search result, and the fourth search result includes a seventh geographical location that is related to the seventh query request; receiving a third user operation for the seventh geographical location on the twelfth interface; displaying a thirteenth interface, where the thirteenth interface includes the seventh geographical location within a map range indicated by a ninth map area; receiving an eighth query request; displaying a fourteenth interface, where the fourteenth interface includes a fifth search result, and the fifth search result includes the seventh geographical location that is related to the eighth query request; displaying a fifteenth interface, where the fifteenth interface includes a fifth historical record, the fifth historical record includes a fourth keyword and the ninth map area, and the fourth keyword is related to the seventh query request; receiving a ninth query request that is based on the fifth historical record; and displaying a sixteenth interface, where the sixteenth interface is the same as the thirteenth interface.

In the foregoing method, when map query is performed previously, the user performs query a plurality of times in a short period of time, and the user selects, during first query, the seventh geographical location obtained through query. The electronic device may display only the fifth historical record corresponding to the first query. This may be understood as determining a displayed historical record based on whether an operation of selecting a geographical location by the user exists, to avoid displaying an invalid and redundant historical record, help the user view more conveniently, and reduce storage pressure of the device. In addition, a search result obtained through query based on the fifth historical record is the seventh geographical location previously selected by the user, instead of the fourth search result or the fifth search result. This further reduces user operations and improves accuracy of the search result.

In a possible implementation, the fourth keyword is different from a fifth keyword, and the fifth keyword is related to the eighth query request.

In a possible implementation, before the receiving a first query request, the method further includes: receiving a tenth query request; and displaying a seventeenth interface, where the seventeenth interface includes a sixth search result, and the sixth search result includes at least one geographical location that is related to the tenth query request.

In the foregoing method, when map query is performed previously, the user performs query a plurality of times in a short period of time, and the electronic device may display only the first historical record corresponding to the latest query. This may be understood as determining a displayed historical record based on query time, to avoid displaying an invalid and redundant historical record, help the user view more conveniently, and reduce storage pressure of the device. In addition, a search result obtained through query based on the first historical record is the first search result obtained by the user through the latest query, and the search result is more accurate.

In a possible implementation, the method further includes: receiving an eleventh query request; displaying an eighteenth interface, where the eighteenth interface includes a seventh search result, and the seventh search result includes an eighth geographical location that is related to the eleventh query request; receiving a fourth user operation for the eighth geographical location on the eighteenth interface; displaying a nineteenth interface, where the nineteenth interface includes the eighth geographical location within a map range indicated by a tenth map area; displaying a twentieth interface, where the twentieth interface includes a sixth historical record, the sixth historical record includes a sixth keyword and the tenth map area, and the sixth keyword is related to a name of the eighth geographic location; receiving a twelfth query request that is based on the sixth historical record; and displaying a twenty-first interface, where the twenty-first interface is the same as the nineteenth interface.

In the foregoing method, when map query is performed previously, a keyword entered by the user is different from the eighth geographical location selected by the user, and a keyword included in the sixth historical record displayed by the electronic device may not be the keyword entered by the user, but is related to the name of the eighth geographical location selected by the user. This may be understood as performing automatic error correction, to reduce impact of an incorrect input by the user. In this way, the user does not need to select the eighth geographical location, which further reduces user operations and improves accuracy of the search result.

In a possible implementation, before the displaying a third interface, the method further includes: sending a first request message to a network device, where the first request message is used to request to obtain a search result related to the second query request, and the first request message includes the first keyword and the first map area; and obtaining the first search result sent by the network device, where the first search result is used by the electronic device to display the third interface.

In a possible implementation, before the displaying a seventh interface, the method further includes: sending a second request message to a network device, where the second request message is used to request to obtain a search result related to the fourth query request, the second request message includes the second keyword, the fifth map area, and a first parameter, and the first parameter indicates the size of the fifth map area displayed on the fifth interface; and obtaining the second search result sent by the network device, where the second search result is used by the electronic device to display the seventh interface.

According to a second aspect, this application provides another map query method, applied to a network device. The method includes: receiving a first request message, where the first request message is sent by an electronic device when the electronic device receives a first query request, and the first request message is used to request to obtain a search result related to the first query request; and sending a first search result to the electronic device, where the first search result is used by the electronic device to display a first interface, and the first search result includes at least one geographical location that is related to the first query request and that is within a map range indicated by a first map area; receiving a second request message, where the second request message is sent by the electronic device when the electronic device receives a second query request that is based on a first historical record, the first historical record is displayed after the electronic device displays the first interface, the first historical record is related to the first query request, and the second request message is used to request to obtain a search result related to the second query request; and sending the first search result to the electronic device, where the first search result is used by the electronic device to display a second interface, and the second interface is the same as the first interface.

In the foregoing method, a search result obtained by the electronic device through query based on the first historical record is the first search result that is obtained through previous query. A user can reproduce the search result obtained through previous query without performing complex query operations, the search result is more accurate, user experience is improved, and processing pressure of the device is reduced.

In a possible implementation, when the electronic device receives the second query request, the electronic device is located at a first geographical location, the first geographical location is within a map range indicated by a second map area, and the second map area is different from the first map area.

In the foregoing method, the first map area is a map area in which the electronic device performs previous query. When the electronic device receives, in the second map area other than the first map area, the second query request that is based on the first historical record, a search result obtained in this case is the first search result obtained through previous query, instead of a search result related to the second query request in the second map area. Therefore, a geographical location obtained through previous search is accurately reproduced, and the search result is more accurate, which meets a user requirement.

In a possible implementation, the first historical record includes a first keyword and the first map area, and the first keyword is related to the first query request.

In the foregoing method, the first historical record includes the first map area in which the first search result obtained through previous query is located. In this way, the user can quickly obtain, by using a historical record, map area information of a search result obtained through historical query, to assist the user in selecting a required historical record for query. Therefore, user operations are more convenient.

In a possible implementation, the second request message includes the first keyword and the first map area.

In a possible implementation, the at least one geographical location includes a second geographical location, and the second geographical location is within the map range indicated by the first map area; or the at least one geographical location includes a third geographical location and a fourth geographical location, the third geographical location is within a map range indicated by a third map area, the fourth geographical location is within a map range indicated by a fourth map area, and the map range indicated by the first map area includes the map range indicated by the third map area and the map range indicated by the fourth map area.

In a possible implementation, the method further includes: receiving a third request message, where the third request message is sent by the electronic device when the electronic device receives a third query request, and the third request message is used to request to obtain a search result related to the third query request; sending a second search result to the electronic device, where the second search result is used to display a third interface by the electronic device, and the second search result includes at least one geographical location that is related to the third query request and that is within a map range indicated by a fifth map area; receiving a fourth request message, where the fourth request message is sent by the electronic device when the electronic device receives a first user operation, and the first user operation is used to adjust a size of the fifth map area displayed by the electronic device on the third interface; sending the adjusted fifth map area to the electronic device, where the adjusted fifth map area is used to display a fourth interface by the electronic device, the fourth interface includes the second search result, and a size of the fifth map area displayed on the third interface is different from a size of the fifth map area displayed on the fourth interface; receiving a fifth request message, where the fifth request message is sent by the electronic device when the electronic device receives a fourth query request that is based on a second historical record, the second historical record is displayed after the electronic device displays the fourth interface, the second historical record is related to the third query request, and the fifth request message is used to request to obtain a search result related to the fourth query request; and sending the second search result and the adjusted fifth map area to the electronic device, where the second search result and the adjusted fifth map area are used by the electronic device to display a fifth interface, and the fifth interface is the same as the fourth interface.

In a possible implementation, the first user operation is a zoom out gesture or a zoom in gesture.

In the foregoing method, a size of a map area displayed when the electronic device displays the second search result obtained through query based on the second historical record is a size of a map area displayed when the second search result obtained through query is displayed previously, and the user does not need to adjust a size of a displayed map area. This further reduces user operations and improves accuracy of the search result.

In a possible implementation, the second historical record includes a second keyword and the fifth map area, and the second keyword is related to the third query request.

In a possible implementation, the fifth request message includes the second keyword, the fifth map area, and a first parameter, and the first parameter indicates the size of the fifth map area displayed on the fourth interface.

In a possible implementation, the method further includes: receiving a sixth request message, where the sixth request message is sent by the electronic device when the electronic device receives a fifth query request, and the sixth request message is used to request to obtain a search result related to the fifth query request; sending a third search result to the electronic device, where the third search result is used by the electronic device to display a sixth interface, the third search result includes a fifth geographical location and a sixth geographical location that are related to the fifth query request, the fifth geographical location is within a map range indicated by a sixth map area, the sixth geographical location is within a map range indicated by a seventh map area, and the sixth map area is different from the seventh map area; receiving a seventh request message, where the seventh request message is sent by the electronic device when the electronic device receives a second user operation for the fifth geographical location on the sixth interface; sending the fifth geographical location to the electronic device, where the fifth geographical location is used by the electronic device to display a seventh interface; receiving an eighth request message, where the eighth request message is sent by the electronic device when the electronic device receives a sixth query request that is based on a third historical record, the third historical record is displayed after the electronic device displays the seventh interface, the third historical record is related to the fifth query request, and the eighth request message is used to request to obtain a search result related to the sixth query request; and sending the fifth geographical location to the electronic device, where the fifth geographical location is used by the electronic device to display an eighth interface, and the eighth interface is the same as the seventh interface.

In the foregoing method, when map query is performed previously, the third search result obtained by the electronic device through query includes a plurality of geographical locations, the user selects the fifth geographical location in the plurality of geographical locations, and the correspondingly displayed third historical record includes the sixth map area in which the fifth geographical location selected by the user is located. In this case, a search result obtained through query based on the third historical record is the fifth geographical location previously selected by the user, instead of the third search result, and the user does not need to select the fifth geographical location. This further reduces user operations and improves accuracy of the search result.

In a possible implementation, the third historical record includes a third keyword and the sixth map area, and the third keyword is related to the fifth query request.

In a possible implementation, the eighth request message includes the third keyword and the sixth map area.

In a possible implementation, the fifth geographical location and the sixth geographical location are within a map range indicated by an eighth map area, and the map range indicated by the eighth map area includes the map range indicated by the sixth map area and the map range indicated by the seventh map area.

In a possible implementation, when displaying the third historical record, the electronic device further displays a fourth historical record, where the fourth historical record includes information about a first point of information POI, the first POI is the fifth geographic location, and the information about the first POI includes a name of the fifth geographic location and the sixth map area.

In a possible implementation, the method further includes: receiving a ninth request message, where the ninth request message is sent by the electronic device when the electronic device receives a seventh query request, and the ninth request message is used to request to obtain a search result related to the seventh query request; sending a fourth search result to the electronic device, where the fourth search result is used by the electronic device to display a ninth interface, and the fourth search result includes a seventh geographical location related to the seventh query request; receiving a tenth request message, where the tenth request message is sent by the electronic device when the electronic device receives a third user operation for the seventh geographical location on the ninth interface; sending the seventh geographical location to the electronic device, where the seventh geographical location is used by the electronic device to display a tenth interface, and the seventh geographical location is within a map range indicated by a ninth map area; receiving an eleventh request message, where the eleventh request message is sent by the electronic device when the electronic device receives an eighth query request, and the eleventh request message is used to request to obtain a search result related to the eighth query request; sending a fifth search result to the electronic device, where the fifth search result is used by the electronic device to display an eleventh interface, and the fifth search result includes the seventh geographical location related to the eighth query request; receiving a twelfth request message, where the twelfth request message is sent by the electronic device when the electronic device receives a ninth query request that is based on a fifth historical record, the fifth historical record is displayed after the electronic device displays the eleventh interface, the fifth historical record is related to the seventh query request, and the twelfth request message is used to request to obtain a search result related to the ninth query request; and sending the seventh geographical location to the electronic device, where the seventh geographical location is used by the electronic device to display a twelfth interface, and the twelfth interface is the same as the tenth interface.

In the foregoing method, when map query is performed previously, the user performs query a plurality of times in a short period of time, and the user selects, during first query, the seventh geographical location obtained through query. The electronic device may display only the fifth historical record corresponding to the first query. This may be understood as determining a displayed historical record based on whether an operation of selecting a geographical location by the user exists, to avoid displaying an invalid and redundant historical record, help the user view more conveniently, and reduce storage pressure of the device. In addition, a search result obtained through query based on the fifth historical record is the seventh geographical location previously selected by the user, instead of the fourth search result or the fifth search result. This further reduces user operations and improves accuracy of the search result.

In a possible implementation, the fifth historical record includes a fourth keyword and the ninth map area, and the fourth keyword is related to the seventh query request.

In a possible implementation, the twelfth request message includes the fourth keyword and the ninth map area.

In a possible implementation, the fourth keyword is different from a fifth keyword, and the fifth keyword is related to the eighth query request.

In a possible implementation, before the receiving a first request message, the method further includes: receiving a thirteenth request message, where the thirteenth request message is sent by the electronic device when the electronic device receives a tenth query request, and the thirteenth request message is used to request to obtain a search result related to the tenth query request; and sending a sixth search result to the electronic device, where the sixth search result is used by the electronic device to display a thirteenth interface, and the sixth search result includes at least one geographical location related to the tenth query request.

In the foregoing method, when map query is performed previously, the user performs query a plurality of times in a short period of time, and the electronic device may display only the first historical record corresponding to the latest query. This may be understood as determining a displayed historical record based on query time, to avoid displaying an invalid and redundant historical record, help the user view more conveniently, and reduce storage pressure of the device. In addition, a search result obtained through query based on the first historical record is the first search result obtained by the user through the latest query, and the search result is more accurate.

In a possible implementation, the method further includes: receiving a fourteenth request message, where the fourteenth request message is sent by the electronic device when the electronic device receives an eleventh query request, and the fourteenth request message is used to request to obtain a search result related to the eleventh query request; sending a seventh search result to the electronic device, where the seventh search result is used by the electronic device to display a fourteenth interface, and the seventh search result includes an eighth geographical location related to the eleventh query request; receiving a fifteenth request message, where the fifteenth request message is sent by the electronic device when the electronic device receives a fourth user operation for the eighth geographical location on the fourteenth interface; sending the eighth geographical location to the electronic device, where the eighth geographical location is used by the electronic device to display a fifteenth interface, and the eighth geographical location is within a map range indicated by a tenth map area; receiving a sixteenth request message, where the sixteenth request message is sent by the electronic device when the electronic device receives a twelfth query request that is based on a sixth historical record, and the sixteenth request message is used to request to obtain a search result related to the twelfth query request; and sending an eighth geographical location to the electronic device, where the eighth geographical location is used by the electronic device to display a sixteenth interface, and the sixteenth interface is the same as the fifteenth interface.

In the foregoing method, when map query is performed previously, a keyword entered by the user is different from the eighth geographical location selected by the user, and a keyword included in the sixth historical record displayed by the electronic device may not be the keyword entered by the user, but is related to the name of the eighth geographical location selected by the user. This may be understood as performing automatic error correction, to reduce impact of an incorrect input by the user. In this way, the user does not need to select the eighth geographical location, which further reduces user operations and improves accuracy of the search result.

In a possible implementation, the sixth historical record includes a sixth keyword and the tenth map area, and the sixth keyword is related to a name of the eighth geographic location.

In a possible implementation, the sixteenth request message includes the sixth keyword and the tenth map area.

According to a third aspect, this application provides a communication apparatus, including a transceiver, a processor, and a memory. The memory is configured to store a computer program, and the processor invokes the computer program to perform the map query method according to any possible implementation of any one of the foregoing aspects.

According to a fourth aspect, this application provides a communication apparatus, including one or more processors and one or more memories. The one or more memories are coupled to the one or more processors, the one or more memories are configured to store computer program code, the computer program code includes computer instructions, and when the one or more processors execute the computer instructions, the foregoing communication apparatus is enabled to perform the map query method according to any possible implementation of any one of the foregoing aspects.

According to a fifth aspect, an embodiment of this application provides a computer storage medium. The computer storage medium stores a computer program, and when the computer program is executed by a processor, the map query method according to any possible implementation of any one of the foregoing aspects is implemented.

According to a sixth aspect, an embodiment of this application provides a computer program product. When the computer program product is run on a computer, the computer is enabled to perform the map query method according to any possible implementation of any one of the foregoing aspects.

### BRIEF DESCRIPTION OF DRAWINGS

The following describes accompanying drawings used in embodiments of this application.
FIG. 1A is a schematic diagram of an architecture of a map query system according to an embodiment of this application;
FIG. 1B is a schematic diagram of interaction of a map query system according to an embodiment of this application;
FIG. 2A is a schematic diagram of a hardware structure of an electronic device according to an embodiment of this application;
FIG. 2B is a schematic diagram of a software architecture of an electronic device according to an embodiment of this application;
FIG. 2C is a schematic diagram of a hardware structure of a network device according to an embodiment of this application;
FIG. 3 is a schematic diagram of an interface of a historical record according to an embodiment of this application;
FIG. 4A(1) and FIG. 4A(2) are a schematic diagram of interfaces of one query behavior according to an embodiment of this application;
FIG. 4B is a schematic diagram of an interface of another historical record according to an embodiment of this application;
FIG. 4C(1) and FIG. 4C(2) are a schematic diagram of interfaces of adjusting a displayed map area according to an embodiment of this application;
FIG. 5A(1) and FIG. 5A(2) are a schematic diagram of interfaces of another query behavior according to an embodiment of this application;
FIG. 5B is a schematic diagram of an interface of another historical record according to an embodiment of this application;
FIG. 6A(1) and FIG. 6A(2) are a schematic diagram of interfaces of another query behavior according to an embodiment of this application;
FIG. 6B is a schematic diagram of an interface of another historical record according to an embodiment of this application;
FIG. 6C is a schematic diagram of an interface of another historical record according to an embodiment of this application;
FIG. 7A(1) to FIG. 7C(2) are schematic diagrams of interfaces of other query behaviors according to an embodiment of this application;
FIG. 7D is a schematic diagram of an interface of another historical record according to an embodiment of this application;
FIG. 7E(1) and FIG. 7E(2) are a schematic diagram of interfaces of another query behavior according to an embodiment of this application;
FIG. 7F is a schematic diagram of an interface of another historical record according to an embodiment of this application;
FIG. 8 is a schematic flowchart of a map query method according to an embodiment of this application;
FIG. 9 is a schematic flowchart of another map query method according to an embodiment of this application; and
FIG. 10 is a schematic flowchart of another map query method according to an embodiment of this application.

### DESCRIPTION OF EMBODIMENTS

Terms used in description of this application in this specification are merely intended to describe specific embodiments, but are not intended to limit this application. Terms "one", "a", "the", "this", and "the one" of singular forms used in this specification and the appended claims of the present invention are also intended to include plural forms, unless otherwise specified in the context clearly. It should also be understood that, the term "and/or" used in this specification indicates and includes any or all possible combinations of one or more associated listed items.

Concepts related to this application are first described.

Query may also be referred to as "search", "retrieve", or the like, and may be understood as that starting from an information requirement of a user, information (namely, a query result) that matches the information requirement of the user is found from an information set according to some rules by using some technical means. The information requirement of the user is, for example, determined based on a query statement entered by the user. The query in this application is implemented for a map. Therefore, the foregoing information set may be a set of geographical locations, is usually a map range, and may be referred to as a query map area. Usually, a default map area is preset in a map application of an electronic device, for example, a city in which current positioning is performed, and a geographical location related to the query statement entered by the user is searched in the default map area. The query result may be a geographical location.

In this application, any geographical location may be a point of information (point of information, POI). In a geographic information system, a POI may be any entity, for example, a building, a store, a bus station, or a mail box. Each POI includes but is not limited to at least one piece of the following information: name, coordinates, and classification, where a form of the coordinates includes, for example, but is not limited to, longitude and latitude.

In this application, a map area of any geographical location may indicate a map range including the geographical location. A same geographical location may belong to map areas of different levels. A map area of a higher level indicates a larger geographical range, and a map area of a high level may include a map area of a low level. For example, map areas to which a geographical location "Gulou District in Nanjing" belongs are "China", "Jiangsu Province", "Nanjing City", and "Gulou District in Nanjing" in descending order of levels. In some embodiments, a map area of a geographical location is a map area of a lowest level including the geographical location. For example, a map area of a geographical location "Gulou District, Nanjing" is "Gulou District, Nanjing". For ease of description, this application provides description by using an example in which a map area of any geographical location is the map area of the lowest level and the map area of the lowest level is a region in a city to which the geographical location belongs.

The form of the query statement entered by the user may include but is not limited to a text, a picture, a voice, a video, a motion posture, and the like. For ease of description, in this application, the text is used as an example for description. Other forms are similar. It may be understood that input information in any form is converted into text information for processing. The query statement in this application may also be referred to as a keyword.

The following describes a map query system 10 in embodiments of this application.

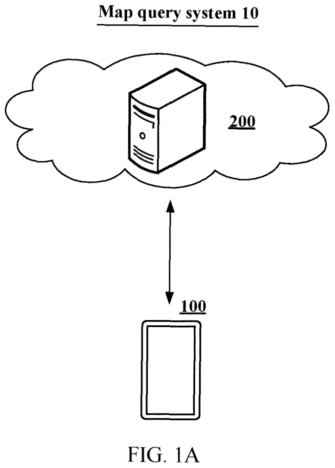

FIG. 1A is a schematic diagram of an example of an architecture of the map query system 10 according to an embodiment of this application.

As shown in FIG. 1A, the map query system 10 may include an electronic device 100 and a network device 200. The electronic device 100 may communicate with the network device in a wired (for example, a universal serial bus (universal serial bus, USB), a twisted pair, a coaxial cable, and an optical fiber) or wireless (for example, a wireless local area network (wireless local area network, WLAN), Bluetooth, and a mobile device network) manner.

The electronic device 100 may be a mobile terminal like a mobile phone, a tablet computer, a handheld computer, or a personal digital assistant (Personal Digital Assistant, PDA), a smart household appliance like a smart television or a smart camera, a wearable device like a smart band, a smart watch, or smart glasses, or other devices such as a desktop computer, a laptop computer, a notebook computer, an ultra-mobile personal computer (Ultra-mobile Personal Computer, UMPC), a netbook, and a smart screen. A specific type of the electronic device 100 is not specifically limited in embodiments of this application.

The network device 200 may include at least one server. In some embodiments, any server may be a hardware server. In some embodiments, any server may be a cloud server.

In some embodiments, the electronic device 100 may communicate with the network device 200 based on a browser/server (browser/server, B/S) architecture, or may communicate with the network device 200 based on a client/server (client/server, C/S) architecture. The electronic device 100 may receive a query request entered by a user, and send a request message to the network device 200, to obtain a search result (at least one geographical location) related to the query request. After receiving the search result sent by the network device 200, the electronic device 100 may display the search result.

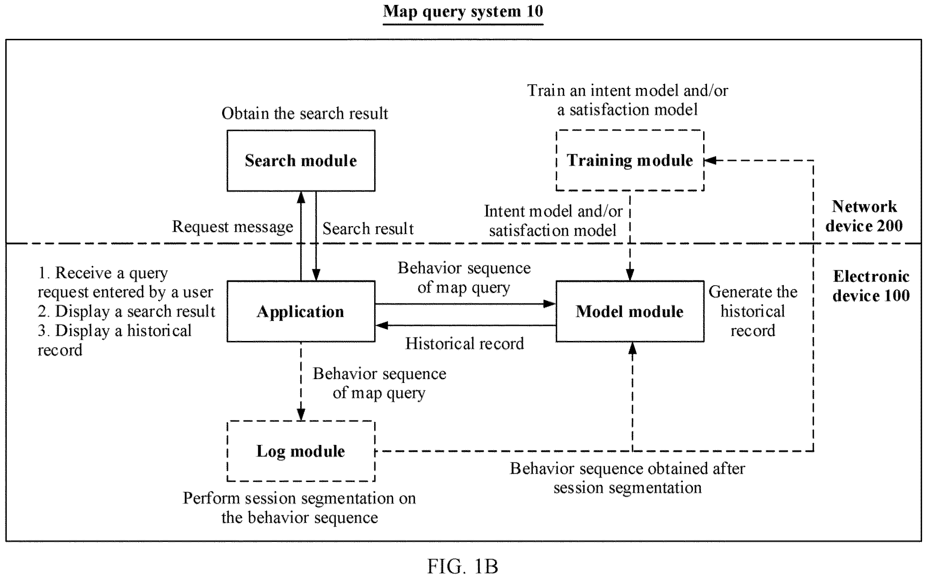

FIG. 1B is a schematic diagram of an example of interaction of the map query system 10 according to an embodiment of this application.

As shown in FIG. 1B, the electronic device 100 in the map query system 10 may include an application (for example, a map application) and a model module. The network device 200 in the map query system 10 may include a search module.

The application of the electronic device 100 may be configured to receive a keyword entered by the user and a query request based on the keyword. In some embodiments, the application may send a request message to the search module of the network device 200, where the request message is used to obtain a search result related to the query request. In some embodiments, the application may record a behavior sequence of map query corresponding to the query request, for example, information such as the keyword entered by the user, and send the behavior sequence to the model module of the electronic device 100.

When receiving the request message sent by the application of the electronic device 100, the search module of the network device 200 may obtain a related search result based on the request message. In some embodiments, the search module may obtain at least one geographical location related to the keyword in a current map area (for example, a city in which the electronic device 100 is currently located). The search module of the network device 200 may send the obtained search result to the application of the electronic device 100.

After receiving the search result sent by the search module of the network device 200, the application of the electronic device 100 may display the search result.

After receiving the behavior sequence of map query sent by the application, the model module of the electronic device 100 may generate a historical record corresponding to the behavior sequence. The historical record may include a keyword in the behavior sequence and a map area of a target location corresponding to the behavior sequence. In some embodiments, the model module may predict the target location corresponding to the behavior sequence. For example, the behavior sequence is used as an input of an intent model, to obtain an output target location. In some other embodiments, the model module may determine a search result corresponding to the behavior sequence as the corresponding target location. The model module can send the generated historical record to the application.

After receiving the historical record sent by the model module, the application of the electronic device 100 may display the historical record.

In a possible implementation, the application of the electronic device 100 may be further configured to receive a historical record-based query request entered by the user. The application may send a request message to the search module of the network device 200. When receiving the request message sent by the application of the electronic device 100, the search module of the network device 200 may obtain at least one search result that is in the map area included in the historical record and that is related to a keyword included in the historical record, that is, obtain a search result related to the query request. The search module of the network device 200 may send the obtained search result to the application of the electronic device 100, and the application may display the search result.

In a possible implementation, the electronic device 100 in the map query system 10 may further include a log module. The log module is configured to receive the behavior sequence of map query sent by the application, and perform session segmentation on the behavior sequence. For example, behavior sequences whose query time is within a same preset time period belong to a same session.

In some embodiments, the network device 200 in the map query system 10 may further include a training module. The log module may send the behavior sequence obtained after session segmentation to the training module, and the training module may train the intent model and/or a satisfaction model based on the received behavior sequence. The training module of the network device 200 may send the intent model and/or the satisfaction model to the model module of the electronic device 100, for example, send the intent model and/or the satisfaction model at intervals of preset duration, and for another example, send a model of an updated version when a version is updated. The intent model is used to obtain a target location corresponding to any behavior sequence, and the target location is used to determine a historical record corresponding to the behavior sequence. For example, the historical record includes a map area of the target location. The satisfaction model is used to obtain a satisfaction corresponding to at least one behavior sequence, and the satisfaction is used to determine whether to display a historical record corresponding to the behavior sequence.

In some embodiments, the log module may send the behavior sequence obtained after the session segmentation to the model module. After receiving the intent model and/or the satisfaction model sent by the training module of the network device 200, the model module of the electronic device 100 may train the intent model and/or the satisfaction model based on the received behavior sequence.

In some embodiments, after receiving the behavior sequence that is obtained after the session segmentation and that is sent by the log module, the model module may use the behavior sequence as an input of the intent model to obtain an output target location, and then determine whether there is a behavior sequence that is the same as the target location of the behavior sequence and that belongs to a same session. If there is the behavior sequence, the model module determines, based on a satisfaction corresponding to the behavior sequence, whether to display a historical record corresponding to the behavior sequence. For example, if the satisfaction corresponding to the behavior sequence is higher, it is determined to display the historical record corresponding to the behavior sequence, where the satisfaction corresponding to the behavior sequence is an output obtained by using the behavior sequence as an input of the satisfaction model.

The following describes an example of the electronic device provided in embodiments of this application.

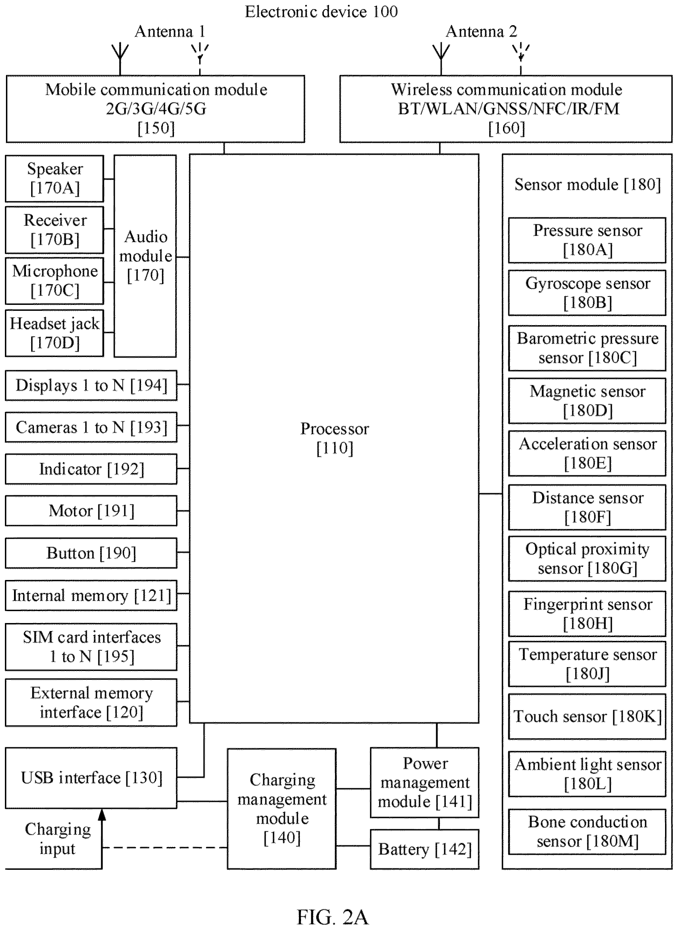

FIG. 2A is a schematic diagram of a structure of the electronic device 100.

The electronic device 100 may include a processor 110, an external memory interface 120, an internal memory 121, a USB interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors.

The controller may generate an operation control signal based on an instruction operation code and a time sequence signal, to complete control of instruction fetching and instruction execution.

A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor may directly invoke the instructions or the data from the memory. This avoids repeated access and reduces waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identification module (subscriber identification module, SIM) interface, a universal serial bus (universal serial bus, USB) interface, and/or the like.

It may be understood that an interface connection relationship between the modules shown in this embodiment of this application is merely an example for description, and constitutes no limitation on the structure of the electronic device 100. In some other embodiments of this application, the electronic device 100 may alternatively use different interface connection manners or a combination of a plurality of interface connection manners in the foregoing embodiment.

The charging management module 140 is configured to receive a charging input from the charger. The charger may be a wireless charger or a wired charger. In some embodiments of wired charging, the charging management module 140 may receive a charging input of the wired charger through the USB interface 130. In some embodiments of wireless charging, the charging management module 140 may receive a wireless charging input through a wireless charging coil of the electronic device 100. The charging management module 140 may further supply power to the electronic device by using the power management module 141 while charging the battery 142.

The power management module 141 is configured to connect to the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like. The power management module 141 may further be configured to monitor parameters such as a battery capacity, a battery cycle count, and a battery health status (electric leakage or impedance). In some other embodiments, the power management module 141 may be further disposed in the processor 110. In some other embodiments, the power management module 141 and the charging management module 140 may be alternatively disposed in a same component.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to: transmit and receive electromagnetic wave signals. Each antenna in the electronic device 100 may be configured to cover one or more communication frequency bands. Different antennas may also be reused to improve antenna utilization. For example, the antenna 1 may be multiplexed as a diversity antenna in a wireless local area network. In some other embodiments, the antennas may be used in conjunction with a tuning switch.

The mobile communication module 150 may provide a wireless communication solution that includes 2G/3G/4G/5G or the like and that is applied to the electronic device 100. The mobile communication module 150 may include at least a filter, a switch, a power amplifier, a low noise amplifier (low noise amplifier, LNA), and the like. The mobile communication module 150 may receive an electromagnetic wave by using the antenna 1, perform processing such as filtering and amplification on the received electromagnetic wave, and transmit a processed electromagnetic wave to the modem processor for demodulation. The mobile communication module 150 may further amplify a signal modulated by the modem processor, and convert the signal into an electromagnetic wave for radiation by using the antenna 1. In some embodiments, at least some function modules of the mobile communication module 150 may be disposed in the processor 110. In some embodiments, at least some functional modules of the mobile communication module 150 and at least some modules of the processor 110 may be disposed in a same device.

The modem processor may include a modulator and a demodulator. The modulator is configured to modulate a to-be-sent low-frequency baseband signal into a medium/high-frequency signal. The demodulator is configured to demodulate the received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by an audio device (which is not limited to the speaker 170A, the receiver 170B, or the like), or displays an image or a video by the display 194. In some embodiments, the modem processor may be an independent component. In some other embodiments, the modem processor may be independent of the processor 110, and is disposed in the same device with the mobile communication module 150 or another functional module.

The wireless communication module 160 may provide a wireless communication solution that is applied to the electronic device 100 and that includes a WLAN (for example, a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), an infrared (infrared, IR) technology, or the like. The wireless communication module 160 may be one or more components integrating at least one communication processor module. The wireless communication module 160 receives an electromagnetic wave by using the antenna 2, performs frequency modulation and filtering on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation by using the antenna 2.

In some embodiments, in the electronic device 100, the antenna 1 and the mobile communication module 150 are coupled, and the antenna 2 and the wireless communication module 160 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 implements a display function through a GPU, the display 194, the application processor, and the like. The GPU is an image processing microprocessor, and is connected to the display 194 and the application processor. The GPU is configured to perform mathematical and geometric calculations, and is configured for graphics rendering. The processor 110 may include one or more GPUs that execute program instructions to generate or change display information.

The display 194 is configured to display an image, a video, or the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 194, where N is a positive integer greater than 1.

The electronic device 100 may implement a photographing function through the ISP, the camera 193, the video codec, the GPU, the display 194, the application processor, or the like.

The ISP is configured to process data fed back by the camera 193. For example, during photographing, a shutter is pressed, light is transmitted to a photosensitive element of the camera through a lens, an optical signal is converted into an electrical signal, and the photosensitive element of the camera transmits the electrical signal to the ISP for processing, to convert the electrical signal into a visible image. The ISP may further perform algorithm optimization on noise, brightness and the like of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected to the photosensitive element. The photosensitive element may be a charge-coupled device (charge-coupled device, CCD) or a complementary metal-oxide-semiconductor (complementary metal-oxide-semiconductor, CMOS) photoelectric transistor. The light-sensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format like RGB or YUV. In some embodiments, the electronic device 100 may include one or N cameras 193, where N is a positive integer greater than 1.

The external memory interface 120 may be configured to connect to an external memory card, for example, a micro SD card, to extend a storage capability of the electronic device 100. The external memory card communicates with the processor 110 through the external memory interface 120, to implement a data storage function. For example, files such as music and videos are stored in the external memory card.

The internal memory 121 may be configured to store computer-executable program code, and the executable program code includes instructions. The internal memory 121 may include a program storage area and a data storage area. The program storage area may store an operating system, an application required by at least one function (for example, a voice playing function or an image playing function), and the like. The data storage area may store data (for example, audio data or a phone book) created during use of the electronic device 100, and the like. In addition, the internal memory 121 may include a high-speed random access memory, and may further include a nonvolatile memory, for example, at least one magnetic disk storage device, a flash storage device, or a universal flash storage (universal flash storage, UFS). The processor 110 runs the instructions stored in the internal memory 121 and/or the instructions stored in the memory disposed in the processor, to execute various function applications and data processing of the electronic device 100.

The electronic device 100 may implement an audio function, for example, music playback and recording, through the audio module 170, the speaker 170A, the receiver 170B, the microphone 170C, the headset jack 170D, the application processor, and the like.

The audio module 170 is configured to convert digital audio information into an analog audio signal output, and is also configured to convert an analog audio input into a digital audio signal. The audio module 170 may be further configured to code and decode audio signals. In some embodiments, the audio module 170 may be disposed in the processor 110, or some functional modules of the audio module 170 may be disposed in the processor 110.

The speaker 170A, also referred to as a "loudspeaker", is configured to convert an electrical audio signal into a sound signal. The electronic device 100 may be configured to listen to music or answer a hands-free call by using the speaker 170A.

The receiver 170B, also referred to as an "earpiece", is configured to convert an audio electrical signal into a sound signal. When a call is answered or speech information is received by using the electronic device 100, the receiver 170B may be put close to a human ear to listen to a speech.

The microphone 170C, also referred to as a "mike" or a "mic", is configured to convert a sound signal into an electrical signal. When making a call or sending speech information, a user may place the mouth of the user near the microphone 170C to make a sound, to input a sound signal to the microphone 170C. At least one microphone 170C may be disposed in the electronic device 100. In some other embodiments, two microphones 170C may be disposed in the electronic device 100, to implement a noise reduction function, in addition to collecting a sound signal. In some other embodiments, three, four, or more microphones 170C may alternatively be disposed in the electronic device 100, to collect a sound signal, reduce noise, further identify a sound source, implement a directional recording function, and the like.

The pressure sensor 180A is configured to sense a pressure signal, and may convert the pressure signal into an electrical signal. In some embodiments, the pressure sensor 180A may be disposed on the display 194. There are a plurality of types of pressure sensors 180A such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on a capacitance change. When a touch operation is performed on the display 194, the electronic device 100 detects intensity of the touch operation through the pressure sensor 180A. The electronic device 100 may also calculate a touch location based on a detection signal of the pressure sensor 180A. In some embodiments, touch operations that are performed at a same touch position but have different touch operation intensity may correspond to different operation instructions. For example, when a touch operation whose touch operation intensity is less than a first pressure threshold is performed on an SMS message application icon, an instruction for viewing an SMS message is executed. When a touch operation whose touch operation intensity is greater than or equal to a first pressure threshold is performed on an SMS message application icon, an instruction for creating an SMS message is executed.

The touch sensor 180K is also referred to as a "touch device". The touch sensor 180K may be disposed on the display 194, and the touch sensor 180K and the display 194 form a touchscreen, which is also referred to as a "touch screen". The touch sensor 180K is configured to detect a touch operation performed on or near the touch sensor 180K. The touch sensor may transfer the detected touch operation to the application processor, to determine a touch event type. A visual output related to the touch operation may be provided through the display 194. In some other embodiments, the touch sensor 180K may alternatively be disposed on a surface of the electronic device 100, and is at a location different from that of the display 194.

The button 190 includes a power button, a volume button, and the like. The button 190 may be a mechanical button, or may be a touch button. The electronic device 100 may receive a button input, and generate a button signal input related to user settings and function control of the electronic device 100.

A software system of the electronic device 100 may use a layered architecture, an event-driven architecture, a microkernel architecture, a micro service architecture, or a cloud architecture. For example, a software system of the layered architecture may be an Android (Android) system, or may be a Huawei mobile services (Huawei mobile services, HMS) system, or another software system. In embodiments of this application, an Android system with a layered architecture is used as an example to describe a software structure of the electronic device 100.

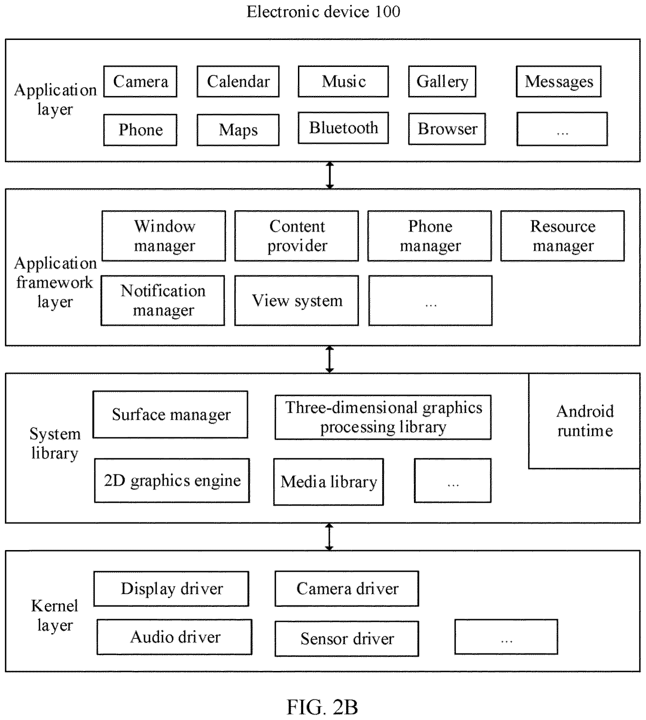

FIG. 2B is a block diagram of a software structure of the electronic device 100 according to an embodiment of this application.

In a layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom.

The application layer may include a series of application packages.

As shown in FIG. 2B, the application packages may include applications such as "Camera", "Calendar", "Music", "Gallery", "Messages", "Phone", "Maps", "Bluetooth", and "Browser".

The application framework layer provides an application programming interface (application programming interface, API) and a programming framework for an application at the application layer. The application framework layer includes some predefined functions.

As shown in FIG. 2B, the application framework layer may include a window manager, a content provider, a view system, a phone manager, a resource manager, a notification manager, and the like.

The window manager is configured to manage a window program. The window manager may obtain a size of the display, determine whether there is a status bar, perform screen locking, take a screenshot, and the like.

The content provider is configured to: store and obtain data, and enable the data to be accessed by an application. The data may include a video, an image, audio, calls that are made and received, a browsing history, a bookmark, an address book, and the like.

The view system includes a visual control, for example, a control for displaying a text or a control for displaying an image. The view system may be configured to construct an application. A display interface may include one or more views. For example, a display interface including an SMS message notification icon may include a text display view and an image display view.

The phone manager is configured to provide a communication function of the electronic device 100, for example, management of a call status (including answering, declining, or the like).

The resource manager provides various resources such as a localized character string, an icon, an image, a layout file, and a video file for an application.

The notification manager enables an application to display notification information in a status bar, and may be configured to transmit a notification-type message. The displayed information may automatically disappear after a short pause without user interaction. For example, the notification manager is configured to notify download completion, give a message notification, and the like. The notification manager may alternatively be a notification that appears in a top status bar of the system in a form of a graph or a scroll bar text, for example, a notification of an application that is run on a background, or may be a notification that appears on a screen in a form of a dialog window. For example, text information is displayed in the status bar, an announcement is given, the electronic device vibrates, or the indicator light blinks.

The Android runtime includes a kernel library and a virtual machine. The Android runtime is responsible for Android system scheduling and management.

The kernel library includes two parts: One part is a performance function that needs to be invoked by the java language, and the other part is an Android kernel library.

The application layer and the application framework layer run in the virtual machine. The virtual machine executes Java files at the application layer and the application framework layer as binary files. The virtual machine is configured to perform functions such as object life cycle management, stack management, thread management, security and exception management, and garbage collection.

The system library may include a plurality of functional modules, for example, a surface manager (surface manager), a media library (Media Library), a three-dimensional graphics processing library (for example, OpenGL ES), and a 2D graphics engine (for example, SGL).

The surface manager is configured to manage a display subsystem and provide fusion of 2D and 3D image layers for a plurality of applications.

The media library supports playback and recording in a plurality of commonly used audio and video formats, and static image files. The media library may support a plurality of audio and video encoding formats such as MPEG-4, H.264, MP3, AAC, AMR, JPG, and PNG.

The three-dimensional graphics processing library is configured to implement three-dimensional graphics drawing, image rendering, compositing, layer processing, and the like.

The 2D graphics engine is a drawing engine for 2D drawing.

The kernel layer is a layer between hardware and software. The kernel layer includes at least a display driver, a camera driver, an audio driver, and a sensor driver.

The following describes an example of a working process of software and hardware of the electronic device 100 with reference to a map query scenario.

When the touch sensor 180K receives a touch operation, a corresponding hardware interrupt is sent to the kernel layer. The kernel layer processes the touch operation into an original input event (including information such as touch coordinates and a time stamp of the touch operation). The original input event is stored at the kernel layer. The application framework layer obtains the original input event from the kernel layer, and identifies a control corresponding to the input event. For example, the touch operation is a single-tap operation and a control corresponding to the single-tap operation is a control, indicating a historical record 1, of a map application icon. The map application invokes an interface at the application framework layer to obtain a geographical location that is related to a keyword included in the historical record 1 and that is in a map range indicated by a map area included in the historical record 1, then enables a display driver by invoking the kernel layer, and displays the geographical location through the display 194.

The following describes an example of the network device provided in embodiments of this application.

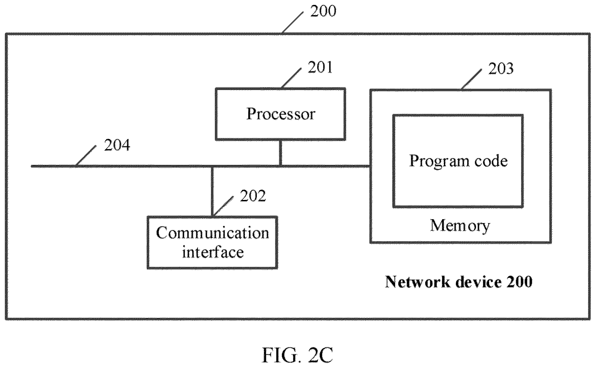

FIG. 2C is a schematic diagram of a structure of the network device 200.

As shown in FIG. 2C, the network device 200 may include one or more processors 201, a communication interface 202, and a memory 203. The processor 201, the communication interface 202, and the memory 203 may be connected through a bus or in another manner, for example, through a bus 204 in this embodiment of this application.

The processor 201 may include one or more general-purpose processors, for example, CPUs. The processor 201 may be configured to run related program code of a device control method.

The communication interface 202 may be a wired interface (for example, an Ethernet interface) or a wireless interface (for example, a cellular network interface or a wireless local area network interface), and is configured to communicate with another node. In this embodiment of this application, the communication interface 202 may be specifically configured to communicate with the electronic device 100.

The memory 203 may include a volatile memory (volatile memory), for example, a RAM. The memory may alternatively include a nonvolatile memory (nonvolatile memory), for example, a ROM, a flash memory (flash memory), an HDD, or a solid-state drive SSD. The memory 203 may alternatively include a combination of the foregoing types of memories. The memory 203 may be configured to store a group of program code, so that the processor 201 invokes the program code stored in the memory 203 to implement the method implemented by the server in embodiments of this application. In this embodiment of this application, the memory 203 may alternatively be a storage array, or the like.

In some embodiments, the network device 200 may include a plurality of servers, for example, a web server, a background server, and a download server. For hardware structures of the plurality of servers, refer to a hardware structure of the network device 200 shown in FIG. 2C.

It should be noted that the network device 200 shown in FIG. 2C is merely an implementation of this embodiment of this application, and during actual application, the network device 200 may further include more or fewer components. This is not limited herein.

The following describes an application scenario in embodiments of this application and a user interface embodiment in this scenario.

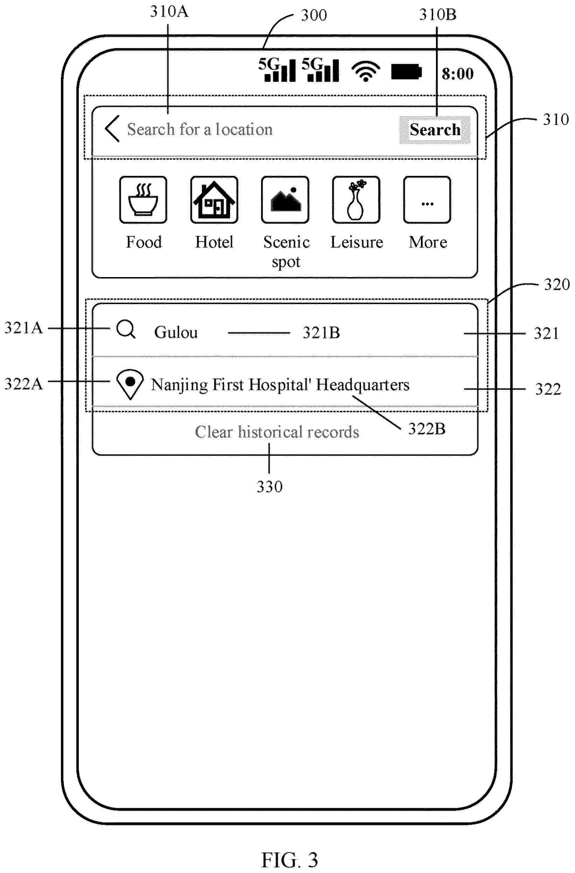

FIG. 3 is a schematic diagram of an example of a user interface.

As shown in FIG. 3, an electronic device may display a user interface 300 of a map application. The user interface 300 may include a search bar 310, a historical record 320, and a clear control 330.

The search bar 310 may include a search box 310A and a search control 310B. The search box 310A may be configured to receive a keyword entered by a user, for example, include characters "Search for a location", which is used to prompt the user to enter the keyword. The search control 310B may be configured to trigger query. The electronic device may receive a touch operation (for example, a tap operation) performed on the search control 310B, and in response to the touch operation, search a preset default map area for a related geographical location based on the keyword entered by the user. The foregoing process may be understood as one query behavior. After the query behavior, the electronic device may record the keyword entered by the user, and display the keyword to the user, for example, display, by using the historical record 320, a keyword that has been queried by the user.

For ease of description, in this embodiment of this application, for example, the default map area is a city to which a location of the electronic device belongs.

The historical record 320 is used to display the keyword that has been queried by the user. Each historical record may include an icon and characters, where the characters are the keyword that has been queried by the user, and the icon may represent a type of the keyword. The type of the keyword may include query (query) and a POI. A keyword of a type of query is a query statement entered by the user. A keyword of a type of a POI is a name of a corresponding POI, where the POI is a geographical location, for example, a bus station or a store, pre-stored in an electronic map. For example, the historical record 320 includes a record 321 and a record 322.

The record 321 includes an icon 321A and characters 321B. The icon 321A represents that a type of a keyword in the record 321 is query (query), and the characters 321B are content of the keyword: "Gulou". In other words, the record 321 may represent behavior of historically querying the keyword "Gulou" of the type of query by the user. In some embodiments, the electronic device may receive a query statement "Gulou" entered by the user through the search box 310A, receive a touch operation (for example, a tap operation) performed on the search control 310B, and obtain, through query in response to this user operation, a search result related to "Gulou". After this query behavior, the electronic device may record the query statement entered by the user, and store and display the record 321.

The record 322 includes an icon 322A and characters 322B. The icon 322A represents that a type of the record 322 is a POI, and the characters 322B are a name of the POI: "Nanjing First Hospital' Headquarters". The POI records geographical location information obtained by the map application from a server, and describes location identification information of a geographical location. In other words, the record 322 may represent behavior of historically querying a keyword "Nanjing First Hospital' Headquarters" of the type of a POI by the user. In some embodiments, the electronic device may receive a query statement entered by the user through the search box 310A. In this case, a plurality of search results related to the query statement may be displayed. Then, the electronic device may receive a touch operation (for example, a tap operation) performed on a search result in the plurality of search results. The search result is a POI whose name is "Nanjing First Hospital' Headquarters", and display detailed information about the POI in response to the touch operation. After this query behavior, the electronic device may record the name of the POI, and store and display the record 322. This case may be understood as directly querying the POI by the user. This is not limited thereto. In some other embodiments, after receiving the query statement entered by the user through the search box 310A, the electronic device may first receive the touch operation (for example, the tap operation) performed on the search control 310B, and in response to this user operation, display the plurality of search results related to the query statement. A subsequent process is consistent with the foregoing description, and details are not described again. This case may be understood as first performing query once and selecting a POI obtained through the query by the user.

The historical record shown in FIG. 3 is merely an example, and should not constitute a limitation on this application. A case in which the user enters another query statement is similar, and details are not described again.

This is not limited to the foregoing examples. In some other examples, the POI may further have a plurality of types, for example, a subway station, a restaurant, and a scenic spot. Icons in the historical record may have a plurality of different forms, to represent the foregoing plurality of types. For example, when an icon is in a shape of a fork, it represents that a type of a keyword is a POI and is a restaurant. This is not limited in this application.

The clear control 330 is configured to delete a historical record that has been queried. The electronic device may delete, in response to a touch operation (for example, a tap operation) performed on the clear control 330, all records (namely, information included in the historical record 320) queried by the user based on the map application. In this case, a displayed user interface does not include the historical record 320.

It may be understood that the electronic device may receive a user operation performed on any historical record, and in response to the user operation, search the default map area for a geographical location related to a keyword included in the historical record. For example, it is assumed that the user historically queries a keyword "Gulou" (corresponding to the record 321) of the type of query. In this case, the electronic device is located in Nanjing, so that a search result obtained through historical query includes at least one geographical location related to the keyword "Gulou" in the current default map area "Nanjing". It is assumed that a POI is named "Gulou District, Nanjing". When the electronic device is located in Wuhan, the electronic device may receive a user operation performed on the record 321, and obtain, through query in response to this user operation, at least one geographical location related to a keyword "Gulou" in a current default map area "Wuhan", instead of the POI named "Gulou District, Nanjing". If the user wants to obtain the previous search result (the POI named "Gulou District, Nanjing"), the user needs to switch the map area to "Nanjing". In this way, operations are complex. In other words, when search is performed based on a historical record of the map application, a previous search result may not be accurately reproduced, and a search requirement of the user cannot be met. If the previous search result needs to be reproduced, the user needs to perform complex query operations. In this way, processing pressure of the device is high, and user experience is poor.

In this application, for a query request based on any historical record, a search result obtained by an electronic device may be a search result obtained by querying a keyword included in the historical record previously. The search result is more accurate, and a user does not need to perform complex query operations. This improves user experience and reduces processing pressure of the device.

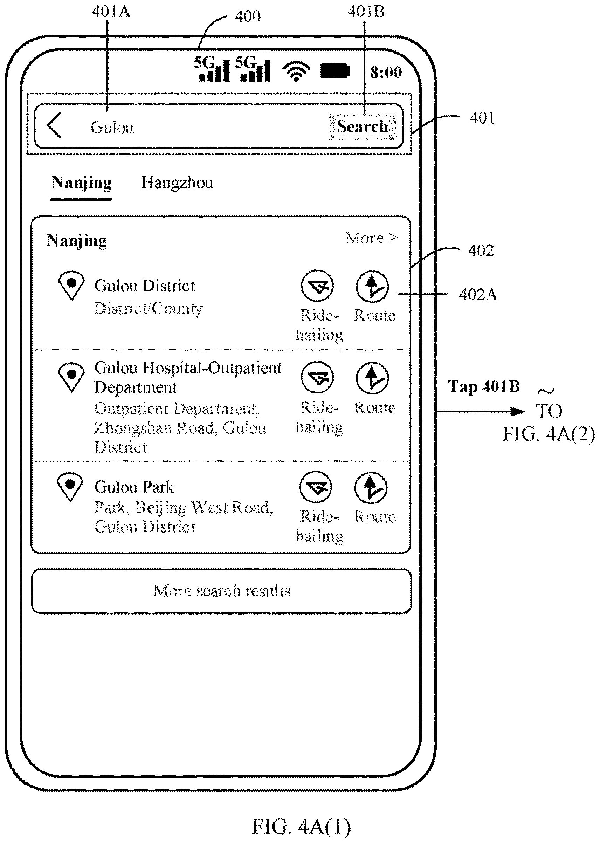

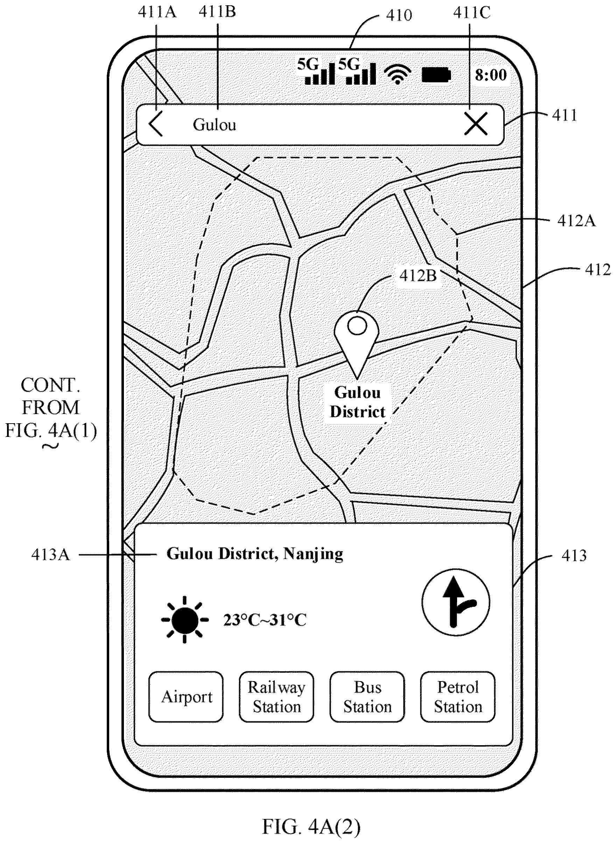

Scenario 1: It is assumed that the user wants to search for Gulou in Nanjing. When the electronic device is located in Nanjing, that is, when a default map area is "Nanjing", the user may enter a query statement "Gulou" and perform search. For a specific example, refer to FIG. 4A(1) and FIG. 4A(2). FIG. 4A(1) and FIG. 4A(2) are a schematic diagram of examples of interfaces of one query behavior.

As shown in FIG. 4A(1), an electronic device may display a user interface 400 of a map application. The user interface 400 includes a search bar 401, and the search bar 401 includes a search box 401A and a search control 401B whose specific description is similar to the description of the search box 310A and the search control 310B on the user interface 300 shown in FIG. 3. A difference lies in that characters included in the search box 401A are the query statement "Gulou" currently entered by the user. The user interface 400 further includes a preview list 402. The preview list 402 is used to display geographical locations, for example, in a top-down order, a geographical location 402A named "Gulou District", a geographical location named "Gulou Hospital-Outpatient Department", and a geographical location named "Gulou Park", related to the query statement "Gulou" included in the search box 401Ain Nanjing. The electronic device may receive a touch operation (for example, a tap operation) performed on the search control 3 10B, and obtain, through query in response to this touch operation, a search result related to the query statement "Gulou" in Nanjing. Optionally, the electronic device displays the geographical location 402A ranked first in the preview list 402. For details, refer to FIG. 4A(2).

As shown in FIG. 4A(2), the electronic device may display a user interface 410 of the map application. The user interface 410 includes a search result (which is also a geographical location) named "Gulou District, Nanjing", which may be referred to as a search result "Gulou District, Nanjing" for short or may be referred to as a geographical location "Gulou District, Nanjing" for short, corresponding to the geographical location 402A on the user interface 400 shown in FIG. 4A(1). The user interface 410 may include a search bar 411, a map area field of view 412, and location information 413.

The search bar 411 may include a return control 411A, a search box 411B, and a cancel control 411C. The return control 411A is configured to return to a previous-level interface, for example, the user interface 400 shown in FIG. 4A(1). The search box 411B is similar to the search box 401A on the user interface 400 shown in FIG. 4A(1). The cancel control 411C may be configured to cancel this search, and optionally, may be further configured to return to the previous-level interface or a home page of the map application.

The map area field of view 412 is a map area currently displayed on the user interface. A location range 412A and a location identifier 412B are used to display a location of the search result "Gulou District, Nanjing" on a map. The location identifier 412B is located within the location range 412A, includes characters "Gulou District", and may represent a map range of the geographical location indicated by the location range 412A. In some embodiments, the electronic device may display a default map area on the user interface, and different geographical locations correspond to different default map areas. For example, the map area field of view 412 on the user interface 410 is a default map area when the electronic device displays the geographical location "Gulou District, Nanjing". A size and a location of the map area displayed on the user interface may be adjusted. It should be noted that a size of an area used to display the map area is usually fixed (which may be understood as that a size of the user interface is fixed). Therefore, adjusting the size of the map area displayed on the user interface is actually adjusting a map range indicated by the map area.

In some embodiments, the electronic device may receive a two-finger pinch-in gesture (for example, a gesture of sliding inward with two fingers simultaneously) performed on the user interface 410, and zoom out the map area field of view 412 in response to the gesture. In this case, the map range indicated by the map area field of view 412 becomes larger. In some other embodiments, the electronic device may receive a two-finger pinch-out gesture (for example, a gesture of sliding outward with two fingers simultaneously) performed on the user interface 410, and zoom in the map area field of view 412 in response to the gesture. In this case, the map range indicated by the map area field of view 412 becomes smaller. In some other embodiments, the electronic device may receive a drag operation performed on the user interface 410, and in response to the operation, adjust a location of the map area field of view 412 on the map.

The location information 413 may include a name 413A of a geographical location (including characters "Gulou District, Nanjing"). The location information 413 may be used to display detailed information about the geographical location "Gulou District, Nanjing", for example, a weather condition of the geographical location, a navigate control, and surrounding geographical information. The navigate control may be used to obtain navigation information whose destination is the geographical location.

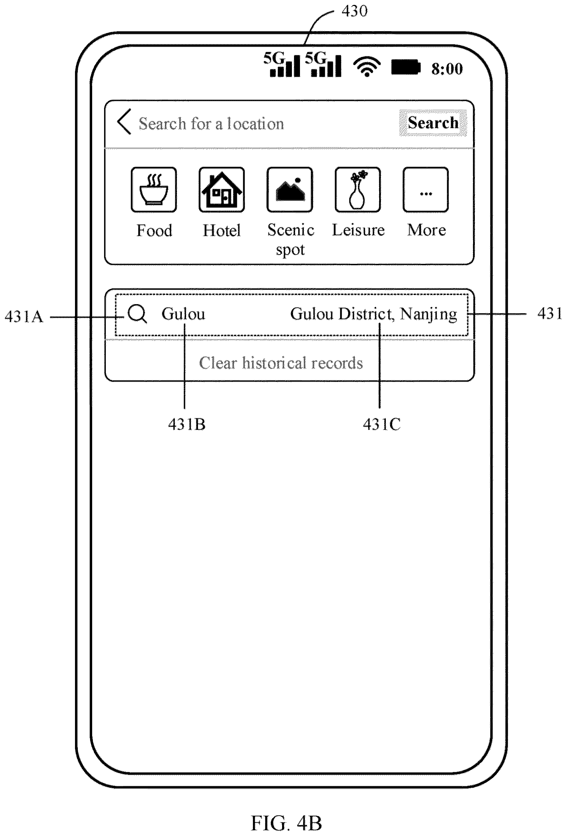

In some embodiments, after the operation shown in FIG. 4A(1) and FIG. 4A(2), the electronic device may display a historical record corresponding to this query behavior. The historical record includes the queried keyword "Gulou" and the map area of the search result "Gulou District, Nanjing". For a specific example, refer to FIG. 4B.

As shown in FIG. 4B, the electronic device may display a user interface 430 of the map application. The user interface 430 is configured to display a historical record of map query. The user interface 430 may include a record 431, and the record 431 may include an icon 431A, characters 431B, and a map area 431C. The icon 431A and the characters 431B are similar to the icon 321A and the characters 321B included in the record 321 on the user interface 300 shown in FIG. 3, and may indicate that the record 431 corresponds to the behavior of historically querying the keyword "Gulou" of the type of query by the user. The map area 431C indicates that the map area of the search result "Gulou District, Nanjing" obtained by the user by historically querying "Gulou" is "Gulou District, Nanjing". In this way, the user can quickly obtain, by using the historical record, map area information of the search result through historical query, to assist the user in selecting a required historical record for query. Therefore, user operations are more convenient.

In some embodiments, after the operation shown in FIG. 4A(1) and FIG. 4A(2), when the electronic device is located in a city (assumed as Beijing) other than "Nanjing", the electronic device may display the historical record, for example, the record 431 on the user interface 430 shown in FIG. 4B. The electronic device may receive a touch operation (for example, a tap operation) performed on the record 431, and in response to the touch operation, display the geographical location, namely, the geographical location "Gulou District, Nanjing", that is related to the keyword "Gulou" indicated by the characters 431B and that is within a map range "Gulou District, Nanjing" indicated by the map area 431C. For example, the user interface 410 shown in FIG. 4A(2) is displayed, but a search result related to "Gulou" in "Beijing" is not displayed. In other words, when the electronic device performs search based on the historical record of the map application, a previously searched geographical location can be accurately reproduced, which is implemented by one step. No additional user operation is required. This reduces processing pressure of the device.

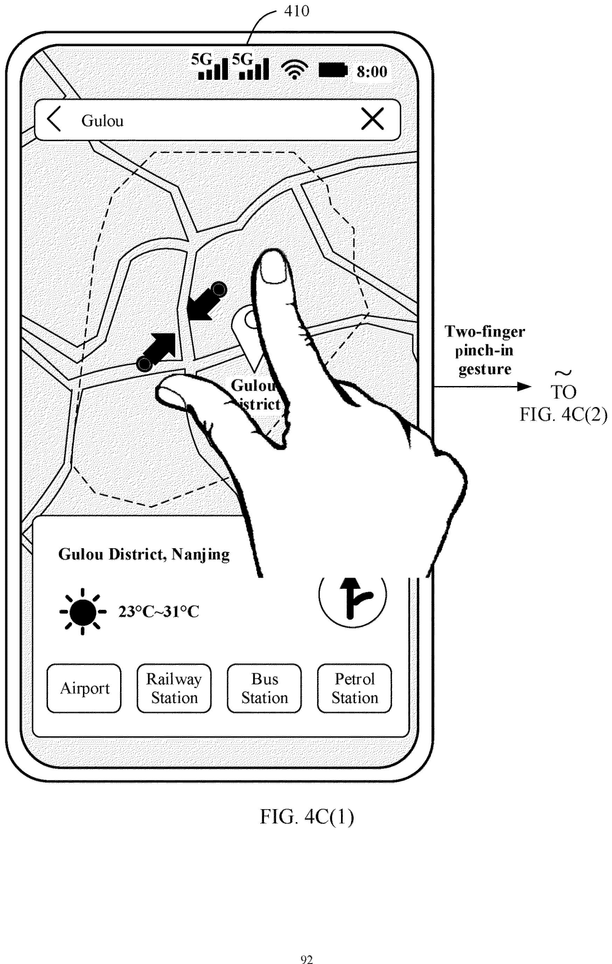

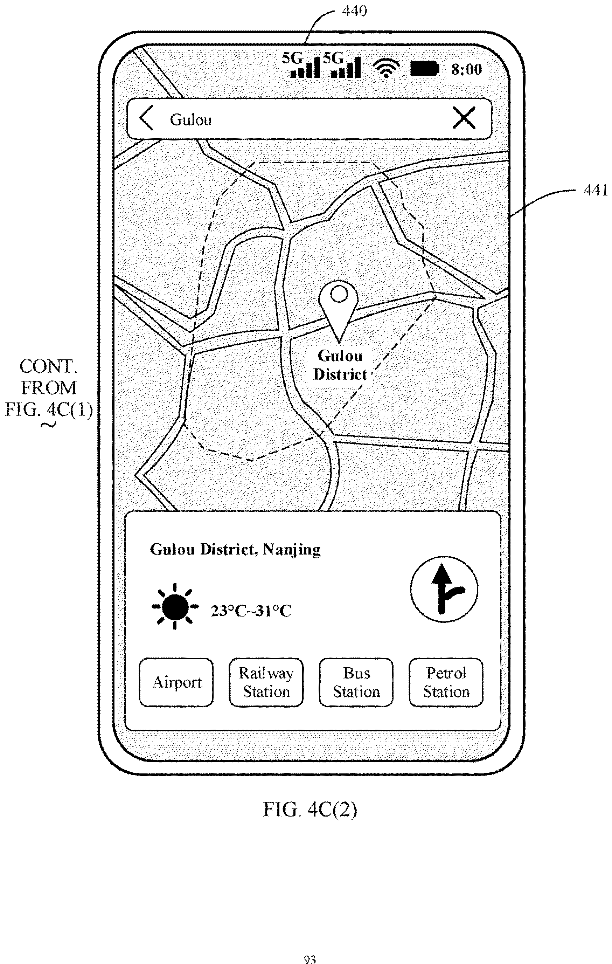

In some embodiments, after the operation shown in FIG. 4A(1) and FIG. 4A(2), when displaying the search result related to the keyword entered by the user, the electronic device may zoom out or zoom in the currently displayed map area in response to the user operation. For details, refer to FIG. 4C(1) and FIG. 4C(2).

As shown in FIG. 4C(1), when displaying the user interface 410 shown in FIG. 4A(2), the electronic device receives the two-finger pinch-in gesture performed on the user interface 410, and zooms out the map area field of view 412 in response to the gesture. For details, refer to FIG. 4C(2).

As shown in FIG. 4C(2), the electronic device may display a user interface 440 of the map application. The user interface 440 is similar to the user interface 410. A difference lies in that a map area field of view 441 on the user interface 440 is a zoomed-out map area field of view, and a map range indicated by the map area field of view 441 is greater than the map range indicated by the map area field of view 412 on the user interface 410.

In some embodiments, after the operation shown in FIG. 4C(1) and FIG. 4C(2), the electronic device may record the historical record corresponding to the query behavior shown in FIG. 4A(1) and FIG. 4A(2) and a map area displayed after the operation shown in FIG. 4C(1) and FIG. 4C(2). The historical record includes the queried keyword "Gulou" and the map area of the search result "Gulou District, Nanjing". For a specific example, refer to the record 431 on the user interface 430 shown in FIG. 4B. After the operation shown in FIG. 4C(1) and FIG. 4C(2), the map area displayed by the electronic device is the map area field of view 441 on the user interface 440.

In some embodiments, a map area displayed when the electronic device displays a search result obtained through query based on any historical record is a map area corresponding to the historical record, where the map area corresponding to the historical record may be a zoomed-in map area field of view, a zoomed-out map area field of view, or a dragged map area field of view of the map area.

For example, after the operation shown in FIG. 4C(1) and FIG. 4C(2), when the electronic device is located in a city other than "Nanjing" (assumed that the city is Beijing), the electronic device may display the historical record, for example, the record 431 on the user interface 430 shown in FIG. 4B. The electronic device may receive a touch operation (for example, a tap operation) performed on the record 431, and in response to the touch operation, display the geographical location "Gulou District, Nanjing" based on the map area corresponding to the record 431. For example, the map area corresponding to the record 431 is the zoomed-out map area field of view, namely, the map area field of view 441 on the user interface 440 shown in FIG. 4C(2), and the electronic device may display the user interface 440. In other words, in this application, when search is performed based on a historical record of the map application, not only a previously searched geographical location can be accurately reproduced, but also a map area displayed during the latest display of the geographical location can be accurately reproduced. This further reduces user operations (for example, at least an operation of entering the two-finger pinch-in gesture), and improves user experience.

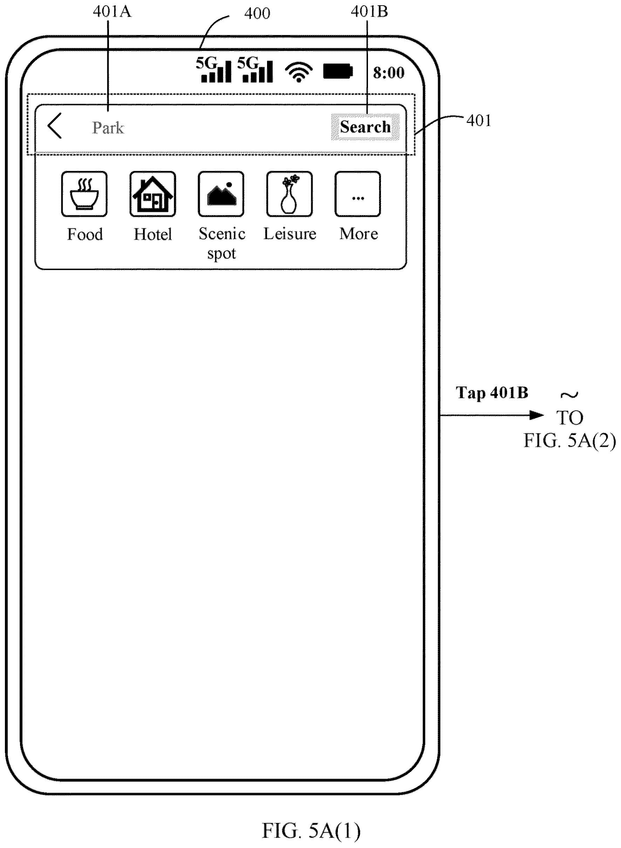

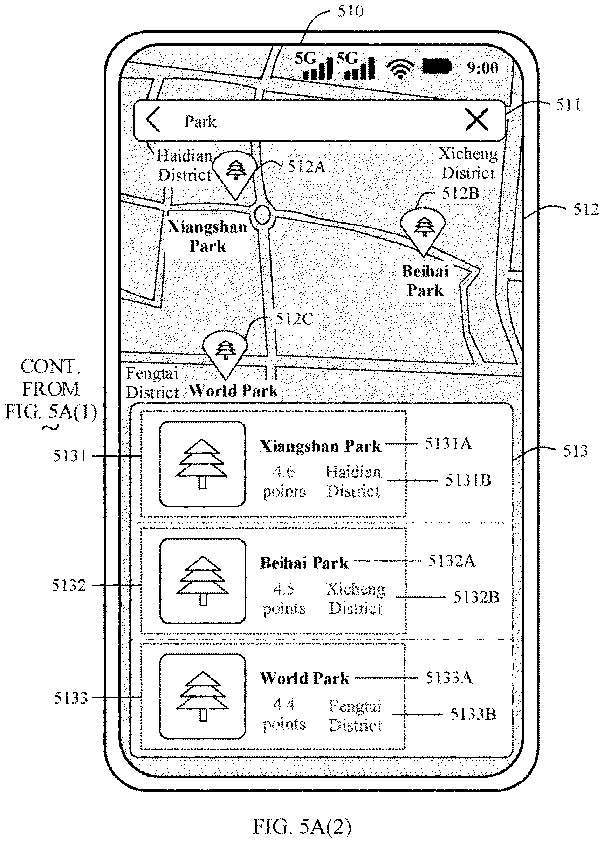

Scenario 2: It is assumed that the user wants to search for a park in Beijing. When the electronic device is located in Beijing, that is, when a default map area is "Beijing", the user may enter a query statement "Park" and perform search. For a specific example, refer to FIG. 5A(1) and FIG. 5A(2). FIG. 5A(1) and FIG. 5A(2) are a schematic diagram of examples of interfaces of another query behavior.

As shown in FIG. 5A(1), the electronic device may display a user interface 400 of a map application. The user interface 400 is similar to the user interface 400 shown in FIG. 4A(1). A difference lies in that on the user interface 400 shown in FIG. 5A(1), characters included in a search box 401A are the query statement "Park" currently entered by the user. The user interface 400 shown in FIG. 5A(1) does not include the preview list 402. The electronic device may receive a touch operation (for example, a tap operation) performed on the search control 310B, and obtain, through query in response to the touch operation, a search result related to the query statement "Park" in Beijing. For details, refer to FIG. 5A(2).

As shown in FIG. 5A(2), the electronic device may display a user interface 510 of the map application. The user interface 510 includes a plurality of geographical locations whose names include "Park" in Beijing. The user interface 510 may include a search bar 511, a map area field of view 512, and a search result list 513.

The search bar 511 is similar to the search box 401A on the user interface 400 shown in FIG. 5A(1).

The map area field of view 512 is similar to the map area field of view 412 on the user interface 410 shown in FIG. 4A(2). A difference lies in that the map area field of view 512 is a map area displayed when the electronic device displays the plurality of geographical locations whose names include "Park" in Beijing. A plurality of location identifiers are displayed in the map area field of view 512, and these location identifiers are respectively used to display locations of the plurality of geographical locations on a map. For example, a location identifier 512A is used to display a location of a geographical location "Xiangshan Park" on the map, which may be referred to as that the location identifier 512A corresponds to the geographical location "Xiangshan Park" for short; and similarly, a location identifier 512B corresponds to a geographical location "Beihai Park", and a location identifier 512C corresponds to a geographical location "World Park".

The search result list 513 is used to display brief information about the plurality of geographical locations whose names include "Park" in Beijing, for example, a search result 5131, a search result 5132, and a search result 5133. The search result 5131 may include a name 5131A and a map area 5131B. Characters included in the name 5131A are a name "Xiangshan Park" of a geographical location indicated by the search result 5131. Characters included in the map area 5131B are a map area "Haidian District" of the geographical location indicated by the search result 5131. The geographical location indicated by the search result 5131 is the geographical location "Xiangshan Park" corresponding to the location identifier 512A. Similarly, the search result 5132 includes a name 5132A and a map area 5132B, and may represent the geographical location "Beihai Park" (namely, the geographical location corresponding to the location identifier 512B) indicated by the search result 5132. A map area of the geographical location is "Xicheng District". The search result 5133 includes a name 5133A and a map area 5133B, and may represent the geographical location "World Park" (namely, the geographical location corresponding to the location identifier 512C) indicated by the search result 5133. A map area of the geographical location is "Fengtai District".

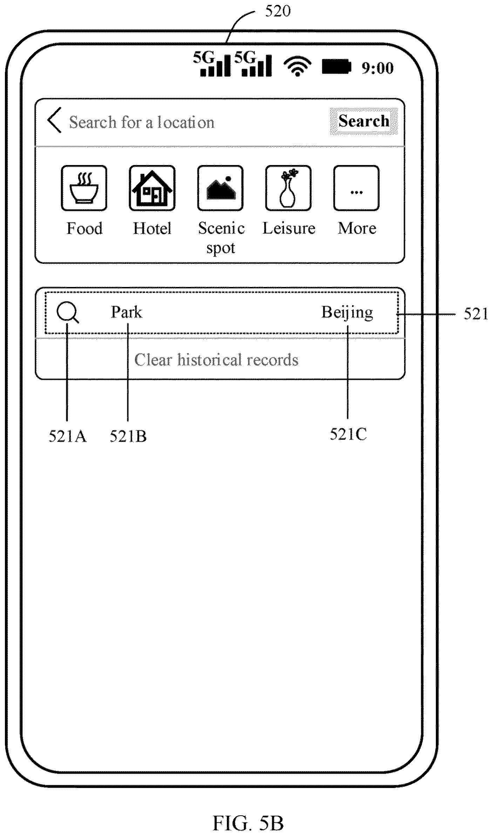

In some embodiments, after the operation shown in FIG. 5A(1) and FIG. 5A(2), the electronic device may display a historical record corresponding to this query behavior. The historical record includes the queried keyword "Park" and the map area of the search result (the plurality of geographical locations whose names include "Park" in Beijing). For a specific example, refer to FIG. 5B.

As shown in FIG. 5B, the electronic device may display a user interface 520 of the map application. The user interface 520 is configured to display a historical record of map query. The user interface 520 may include a record 521. The record 521 includes an icon 521A, characters 521B, and a map area 521C. The icon 521A and the characters 521 are similar to the icon 321A and the characters 321B included in the record 321 on the user interface 300 shown in FIG. 3, and may indicate that the record 521 corresponds to the behavior of historically querying the keyword "Park" of the type of query by the user. The map area 521C indicates that the map area of the search result (the plurality of geographical locations whose names include "Park" in Beijing) obtained by the user by historically querying "Park" is "Beijing". In this application, for example, a map area of a plurality of geographical locations is a minimum map area including map areas corresponding to the plurality of geographical locations. For example, the plurality of geographical locations whose names include "Park" in Beijing are specifically: the geographical location "Xiangshan Park", the geographical location "Beihai Park", and the geographical location "World Park", and the map areas corresponding to the geographical locations are successively "Haidian District", "Xicheng District", and "Fengtai District". It is assumed that a minimum map area including the three map areas is "Beijing", and therefore, the characters included in the map area 521C are "Beijing". In this way, the user can quickly obtain, by using the historical record, map area information of the search result through historical query, to assist the user in selecting a required historical record for query. Therefore, user operations are more convenient.

In some embodiments, after the operation shown in FIG. 5A(1) and FIG. 5A(2), when the electronic device is located in a city (assumed as Wuhan) other than "Beijing", the electronic device may display the historical record, for example, the record 521 on the user interface 520 shown in FIG. 5B. The electronic device may receive a touch operation (for example, a tap operation) performed on the record 521, and in response to the touch operation, display the geographical locations, namely, the plurality of geographical locations whose names include "Park" in Beijing, that are related to the keyword "Park" indicated by the characters 521B and that are within a map range "Beijing" indicated by the map area 521C. For example, the user interface 510 shown in FIG. 5A(2) is displayed, but a search result related to "Park" in "Wuhan" is not displayed. In this way, the search result is more accurate and meets a user requirement.

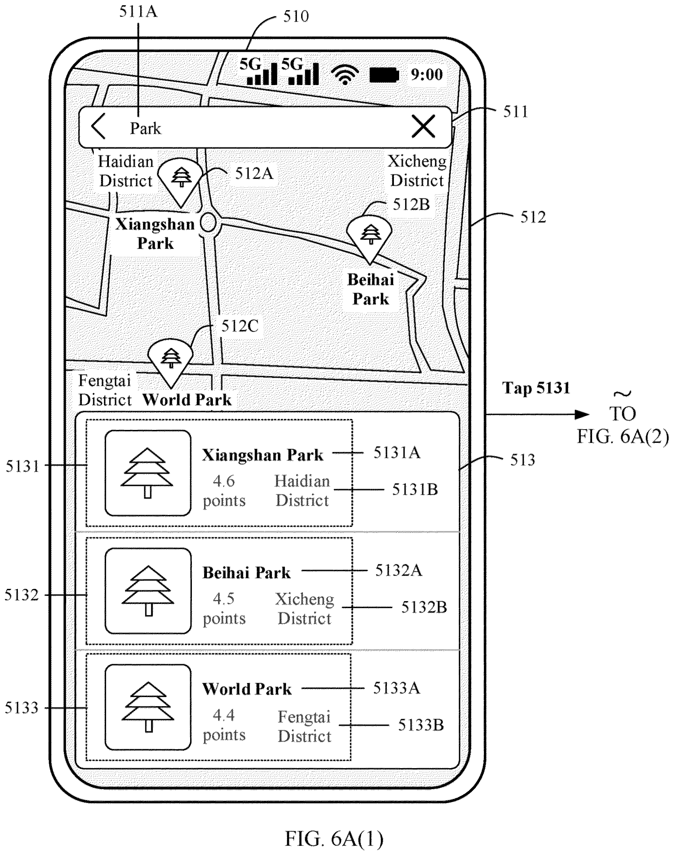

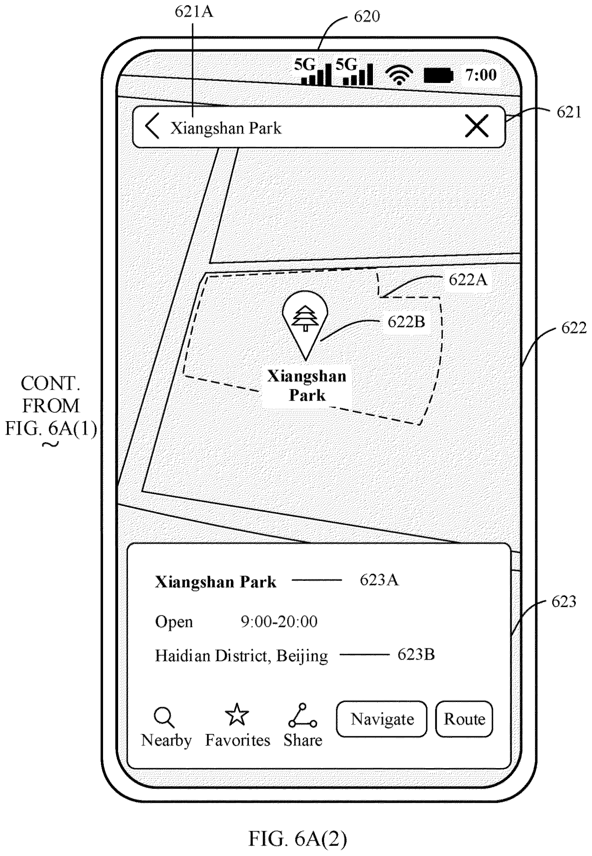

Scenario 3: After the operation shown in FIG. 5A(1) and FIG. 5A(2), on the user interface 510 shown in FIG. 5A(2) (also shown as FIG. 6A(1)), the user may select a geographical location (assumed as a POI named "Xiangshan Park") in the foregoing search result. For a specific example, refer to FIG. 6A(1) and FIG. 6A(2).

In some embodiments, the electronic device may display, in response to the touch operation performed on the location identifier 512A on the user interface 510, detailed information about the POI named "Xiangshan Park". In some other embodiments, the electronic device may display, in response to the touch operation performed on the search result 5131 on the user interface 510, detailed information about a POI named "Xiangshan Park". For details, refer to FIG. 6A(2).

As shown in FIG. 6A(2), the electronic device may display a user interface 620 of the map application. The user interface 620 includes the POI named "Xiangshan Park" that is selected by the user. The user interface 620 may include a search bar 621, a map area field of view 622, and location information 623.

The search bar 621 is similar to the search bar 411 on the user interface 410 shown in FIG. 4A(2). A difference lies in that a search box 621A of the search bar 621 displays a keyword currently queried by the user, namely, a name of the POI selected by the user: "Xiangshan Park".

The map area field of view 622 is similar to the map area field of view 412 on the user interface 410 shown in FIG. 4A(2). A difference lies in that the map area field of view 622 is a map area displayed when the electronic device displays the geographical location "Xiangshan Park". A location range 622A and a location identifier 622B are displayed in the map area field of view 622, which are similar to the location range 412A and the location identifier 412B on the user interface 410, and are used to display a location of the geographical location "Xiangshan Park" on the map.

The location information 623 may include a name 623A and a map area 623B. Characters included in the name 623A are a name "Xiangshan Park" of the geographical location "Xiangshan Park". Characters included in the map area 623B are a map area "Haidian District, Beijing" of the geographical location "Xiangshan Park". The location information 623 may be used to display detailed information about the geographical location "Xiangshan Park", for example, open hours and a navigate control of the geographical location. The navigate control may be used to obtain navigation information whose destination is the geographical location.

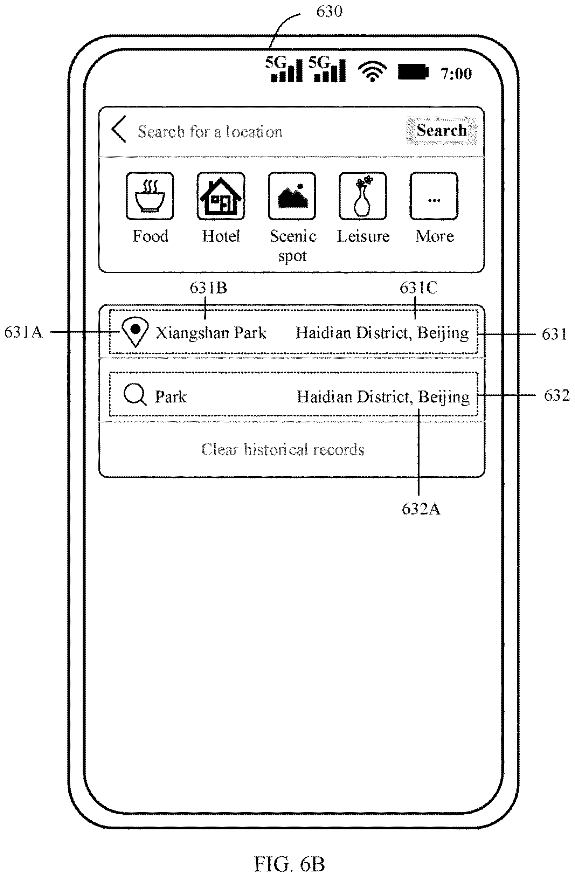

In some embodiments, after the operation shown in FIG. 6A(1) and FIG. 6A(2), the electronic device may display historical records corresponding to the two query behaviors. One historical record includes the keyword "Park" queried in the query behavior shown in FIG. 5A(1) and FIG. 5A(2), and the map area of the POI "Xiangshan Park" selected by the user from the query behavior shown in FIG. 6A(1) and FIG. 6A(2). The other historical record includes the name "Xiangshan Park" (which is also a queried keyword) of the POI queried in the query behavior shown in FIG. 6A(1) and FIG. 6A(2). For details of the map area of the POI, refer to FIG. 6B.

As shown in FIG. 6B, the electronic device may display a user interface 630 of the map application. The user interface 630 is configured to display a historical record of map query. The user interface 630 may include a record 631 and a record 632. Query time of the record 631 is later than that of the record 632. Therefore, a displayed position of the record 631 is prior to a displayed position of the record 632. The record 631 includes an icon 631A, characters 631B, and a map area 631C. The icon 631A and the characters 631B are similar to the icon 322Aand the characters 322B included in the record 322 on the user interface 300 shown in FIG. 3, and may indicate that the record 631 corresponds to the behavior of historically querying the keyword "Xiangshan Park" of the type of a POI by the user, namely, the query behavior shown in FIG. 6A(1) and FIG. 6A(2). The map area 631C indicates that the map area of the POI whose name is "Xiangshan Park" and that is historically queried by the user is "Haidian District, Beijing". The record 632 is similar to the record 521 on the user interface 520 shown in FIG. 5B. A difference lies in that a map area 632A included in the record 632 indicates that the map area of the POI "Xiangshan Park" selected by the user from the search result obtained by the user after the user historically queries "Park" is "Haidian District, Beijing". In FIG. 6B, after historically querying "Park" (corresponding to the record 632), the user selects only one geographical location (namely, "Xiangshan Park") (corresponding to the record 631) in the plurality of geographical locations obtained through query. Therefore, the electronic device may consider that a target of the two query behaviors performed by the user shown in FIG. 5A(1) and FIG. 5A(2) and FIG. 6A(1) and FIG. 6A(2) is the POI "Xiangshan Park". In this case, the map area 632A of the record 632 corresponding to the query behavior shown in FIG. 5A(1) and FIG. 5A(2) is consistent with the map area 631C of the record 631 corresponding to the query behavior shown in FIG. 6A(1) and FIG. 6A(2), and both indicate the map area of the POI "Xiangshan Park".

In some embodiments, after the operation shown in FIG. 6A(1) and FIG. 6A(2), when the electronic device is located in a city (assumed as Wuhan) other than "Beijing", the electronic device may display a historical record corresponding to a POI selected by the user, for example, the record 631 on the user interface 630 shown in FIG. 6B. The electronic device may receive the touch operation (for example, the tap operation) performed on the record 631, and in response to the touch operation, display the geographical location, namely, the geographical location "Xiangshan Park", related to the keyword "Xiangshan Park" indicated by the characters 631B within the map range "Haidian District, Beijing" indicated by the map area 631C. For example, the user interface 620 shown in FIG. 6A(2) is displayed, but a search result related to "Xiangshan Park" in "Wuhan" is not displayed. In this way, the search result is more accurate and meets a user requirement.

In some embodiments, after the operation shown in FIG. 6A(1) and FIG. 6A(2), when the electronic device is located in a city (assumed as Wuhan) other than "Beijing", the electronic device may display a historical record, for example, the record 632 on the user interface 630 shown in FIG. 6B. The electronic device may receive the touch operation (for example, the tap operation) performed on the record 632, and in response to the touch operation, display the geographical location, namely, the geographical location whose name includes "Park" in "Haidian District, Beijing", related to the keyword "Park" included in the record 632 within the map range "Haidian District, Beijing" indicated by the map area 632A. For example, the user interface 620 shown in FIG. 6A(2) is displayed, but a search result related to "Park" in "Wuhan" is not displayed, and a search result related to "Park" within a map area other than "Haidian District" in "Beijing" is not displayed. In this way, the search result is more accurate and meets a user requirement.

In some embodiments, when the geographical location obtained by the electronic device through query when the electronic device receives the query request based on the record 631 is the same as the geographical location obtained by the electronic device through query when the electronic device receives the query request based on the record 632, for example, when both are the geographical location "Xiangshan Park", only the record 631 may be displayed or only the record 632 may be displayed. In other words, a redundant historical record is removed (which may be referred to as deduplication). In this way, the historical record is more simplified, the user selects a required historical record more conveniently, and storage pressure of the device is reduced. In one case, only a record whose type of a keyword is query may be displayed by default, for example, the record 632. In another case, only a record whose type of the keyword is a POI may be displayed by default, for example, the record 631. In another case, only a record whose query time is the latest may be displayed by default, for example, the record 631. This is not limited thereto. Alternatively, only a record whose type of a keyword is query and whose query time is the latest may be displayed, for example, the record 632. This is not limited in this application.

This is not limited to the foregoing examples. In some other examples, the map area 632A included in the record 632 indicates a map area of a POI that is selected by the user at the latest time from a search result obtained through query after the user historically queries "Park". For example, after the user historically queries "Park", the electronic device displays the user interface 510 shown in FIG. 5A(2). The user not only selects the POI "Xiangshan Park" in the search result obtained through query, but selects the POI "Xiangshan Park" at a latest moment (which may also be referred to as the latest query time). In this case, the map area 632A included in the record 632 indicates the map area of the POI "Xiangshan Park".

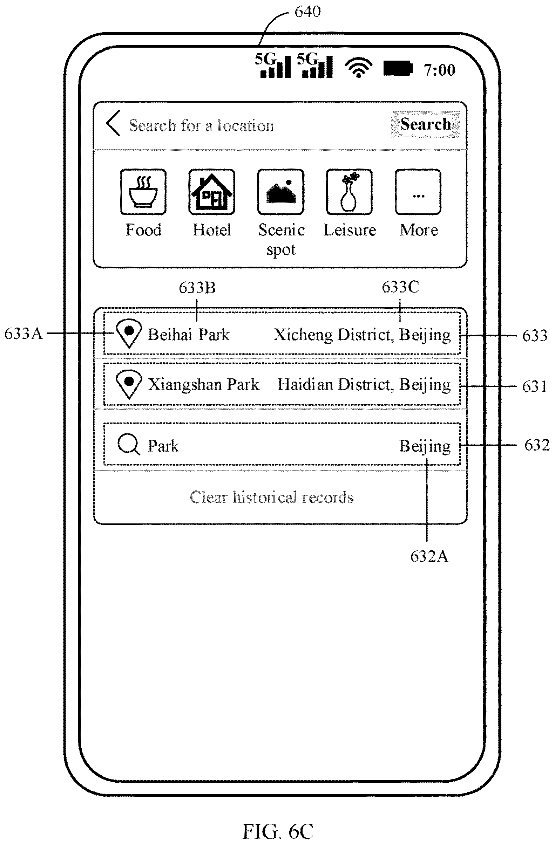

This is not limited to the foregoing examples. In some other examples, after the user historically queries "Park", the electronic device displays the user interface 510 shown in FIG. 5A(2). In addition to selecting the POI "Xiangshan Park" in the search result obtained through query, it is assumed that the user further selects the POI "Beihai Park". For a historical record displayed by the electronic device, refer to FIG. 6C.

As shown in FIG. 6C, the electronic device may display a user interface 640 of the map application. The user interface 640 is configured to display a historical record of map query. The user interface 640 is similar to the user interface 630 shown in FIG. 6B. A difference lies in that the user interface 640 further includes a record 633. The record 633 includes an icon 633A, characters 633B, and a map area 633C. The icon 633A and the characters 633B are similar to the icon 322A and the characters 322B included in the record 322 on the user interface 300 shown in FIG. 3, and may indicate that the record 633 corresponds to the behavior of historically querying the keyword "Beihai Park" of the type of a POI by the user. The map area 633C indicates that a map area of a POI whose name is "Beihai Park" and that is historically queried by the user is "Xicheng District, Beijing". In addition, different from that on the user interface 630 shown in FIG. 6B, a map area 632A included in the record 632 on the user interface 640 indicates that a map area of a plurality of POIs selected by the user from a search result obtained through query after the user historically queries "Park" (for details, refer to the user interface 510 shown in FIG. 5A(2)) is "Beijing". In FIG. 6C, after the user historically queries "Park" (corresponding to the record 632) (for details, refer to the user interface 510 shown in FIG. 5A(2)), the user selects the geographical location "Xiangshan Park" (corresponding to the record 631) and the geographical location "Beihai Park" (corresponding to the record 633) in the plurality of geographical locations obtained through query. Therefore, the electronic device may consider that targets of the user to perform query behavior are the POI "Xiangshan Park" and the POI "Beihai Park". In this case, a map area indicated by the map area 632 included in the record 632 is a minimum map area including map areas of the two POIs, namely, a minimum map area of a map area "Haidian District, Beijing" including the POI "Xiangshan Park" and a map area "Xicheng District, Beijing" including the POI "Beihai Park", and is assumed as "Beijing".

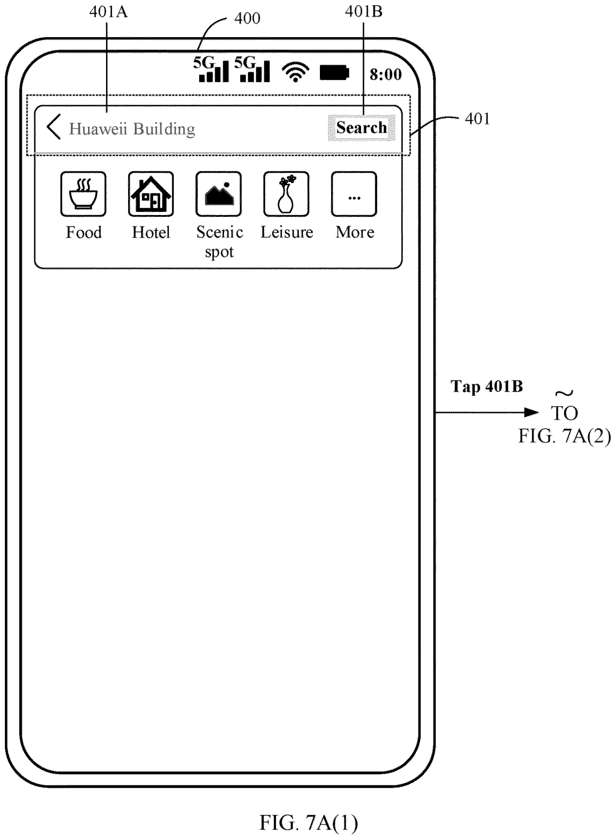

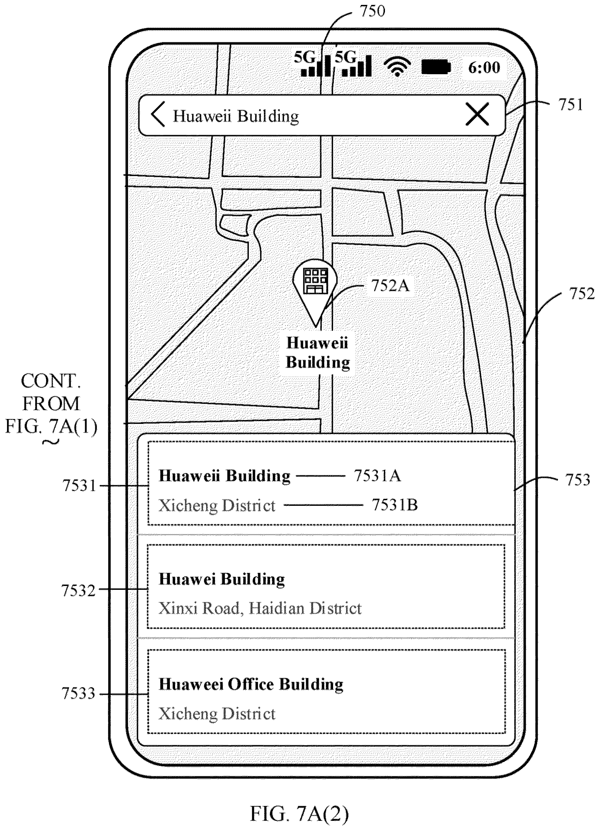

Scenario 4: It is assumed that the user wants to search for the Huawei Building in Beijing. When the electronic device is located in Beijing, that is, when a default map area is "Beijing", the user enters a query statement "Huaweii Building" (Huaweii here is a homophone for what the user wants to search for in a target language) by mistake and performs search. For a specific example, refer to FIG.7A(1) and FIG. 7A(2). FIG. 7A(1) and FIG. 7A(2) are a schematic diagram of examples of interfaces of another query behavior.

As shown in FIG. 7A(1), the electronic device may display a user interface 400 of a map application. The user interface 400 is similar to the user interface 400 shown in FIG. 5A(1). A difference lies in that on the user interface 400 shown in FIG. 7A(1), characters included in a search box 401A are the query statement "Huaweii Building" (the homophone) currently entered by the user. The electronic device may receive a touch operation (for example, a tap operation) performed on the search control 310B, and obtain, through query in response to the touch operation, a search result related to the query statement "Huaweii Building" (the homophone) in Beijing. For details, refer to FIG. 7A(2).

As shown in FIG. 7A(2), the electronic device may display a user interface 750 of the map application. The user interface 750 includes a plurality of geographical locations related to "Huaweii Building" (the homophone) in Beijing. The user interface 750 may include a search bar 751, a map area field of view 752, and a search result list 753.

The search bar 751 is similar to the search box 401A on the user interface 400 shown in FIG. 7A(1).

The map area field of view 752 is similar to the map area field of view 412 on the user interface 410 shown in FIG. 4A(2). A difference lies in that the map area field of view 752 is a map area displayed when the electronic device displays the plurality of geographical locations related to "Huawei Building" in Beijing. A location identifier 752A is displayed in the map area field of view 752. The location identifier 752A includes the characters "Huaweii Building" (the homophone), and is used to display a location of a first geographical location "Huaweii Building" (the homophone) in the plurality of geographical locations on a map.

The search result list 753 is used to display brief information about the plurality of geographical locations related to "Huaweii Building" (the homophone) in Beijing, for example, a search result 7531, a search result 7532, and a search result 7533. The search result 7531 may include a name 7531A and a location 7531B. Characters included in the name 7531A are a name "Huaweii Building" (the homophone) of a geographical location indicated by the search result 7531. Characters included in the location 7531B are location information "Xicheng District" of the geographical location indicated by the search result 7531. The geographical location indicated by the search result 7531 is the geographical location "Huaweii Building" (the homophone) corresponding to the location identifier 752A. Similarly, the search result 7532 indicates a geographical location whose name is "Huawei Building", and location information of the geographical location is "Xinxi Road, Haidian District". The search result 7533 indicates a geographical location whose name is "Huaweei Office Building" (Huaweei here is another homophone for what the user wants to search for in a target language), and location information of the geographical location is "Xicheng District".

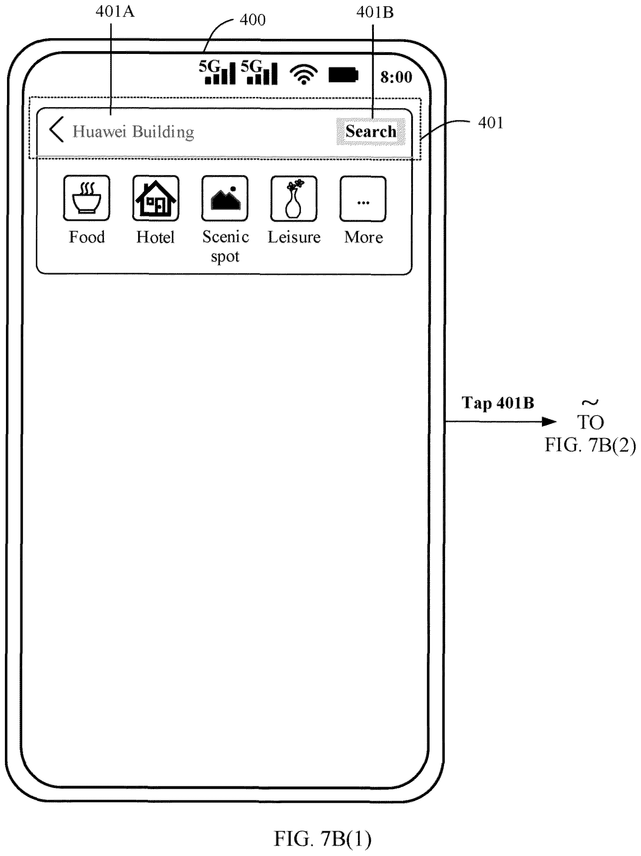

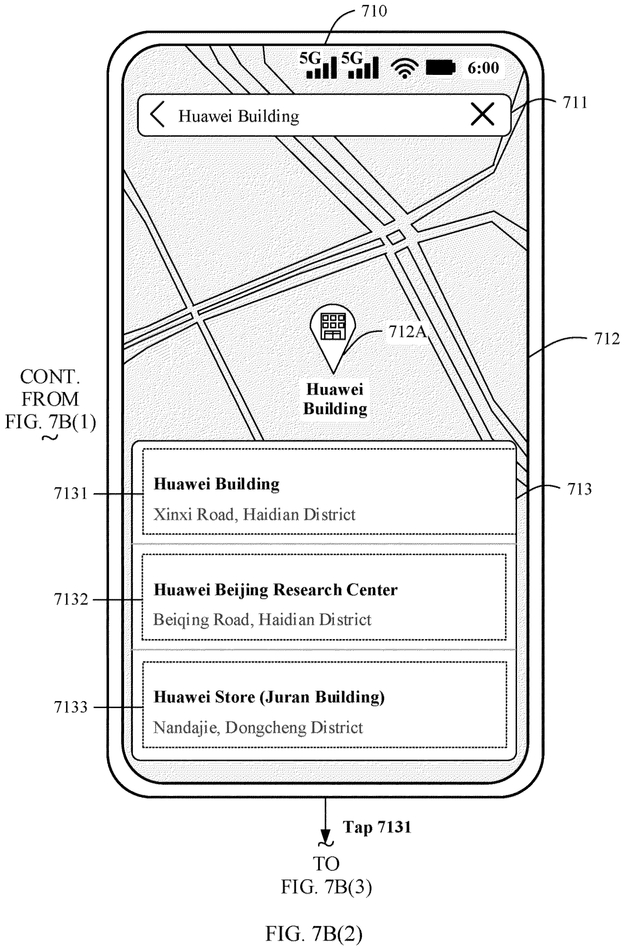

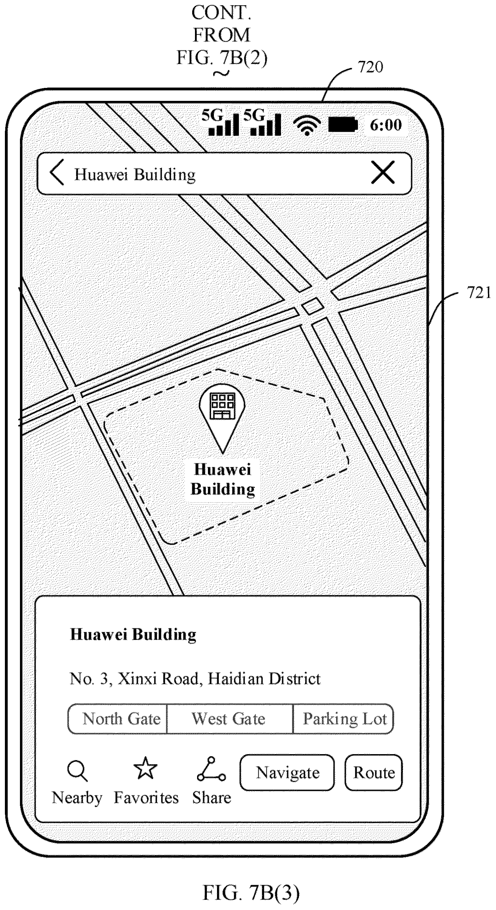

After the operation shown in FIG. 7A(1) and FIG. 7A(2), the user re-enters a query statement "Huawei Building" and performs search. For a specific example, refer to FIG. 7B(1) to FIG. 7B(3). FIG. 7B(1) to FIG. 7B(3) are a schematic diagram of examples of interfaces of another query behavior.

As shown in FIG. 7B(1), the electronic device may display a user interface 400 of the map application. The user interface 400 is similar to the user interface 400 shown in FIG. 5A(1). A difference lies in that on the user interface 400 shown in FIG. 7B(1), characters included in a search box 401A are the query statement "Huawei Building" currently entered by the user. The electronic device may receive a touch operation (for example, a tap operation) performed on the search control 3 10B, and obtain, through query in response to the touch operation, a search result related to the query statement "Huawei Building" in Beijing. For details, refer to FIG. 7B(2).

As shown in FIG. 7B(2), the electronic device may display a user interface 710 of the map application. The user interface 710 is similar to the user interface 750 shown in FIG. 7A(2). A difference lies in that characters included in a search bar 711 on the user interface 710 are a keyword "Huawei Building" currently entered by the user. The map area field of view 712 on the user interface 710 is a map area displayed when the electronic device displays a plurality of geographical locations related to the query statement "Huawei Building" in Beijing. A location identifier 712Ain the map area field of view 712 is used to display a location of a first geographical location "Huawei Building" in the plurality of geographical locations on the map. The search result list 713 on the user interface 710 includes a search result 7131, a search result 7132, and a search result 7133. The search result 7131 is the same as the search result 7532 on the user interface 750. The search result 7132 indicates a geographical location whose name is "Huawei Beijing Research Center", and location information of the geographical location is "Beiqing Road, Haidian District". The search result 7133 indicates a geographical location whose name is "Huawei Store (Juran Building)", and location information of the geographical location is "Nandajie, Dongcheng District". The electronic device may receive a touch operation (for example, a tap operation) performed on the search result 7131 or the location identifier 712A, and in response to the touch operation, display detailed information about a POI named "Huawei Building". For details, refer to FIG. 7B(3).

As shown in FIG. 7B(3), the electronic device may display a user interface 720 of the map application. The user interface 720 is similar to the user interface 620 shown in FIG. 6A(2). A difference lies in that the user interface 720 is used to display detailed information of the POI that is selected by the user and whose name is "Huawei Building". The user interface 720 further includes a map area field of view 721, and the map area field of view 721 is a map area displayed when the electronic device displays the geographical location "Huawei Building".

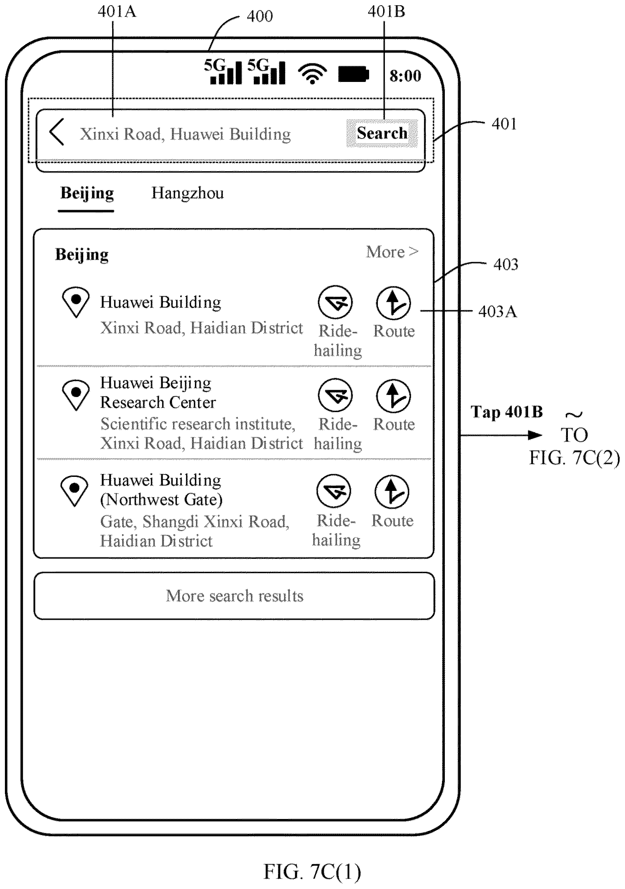

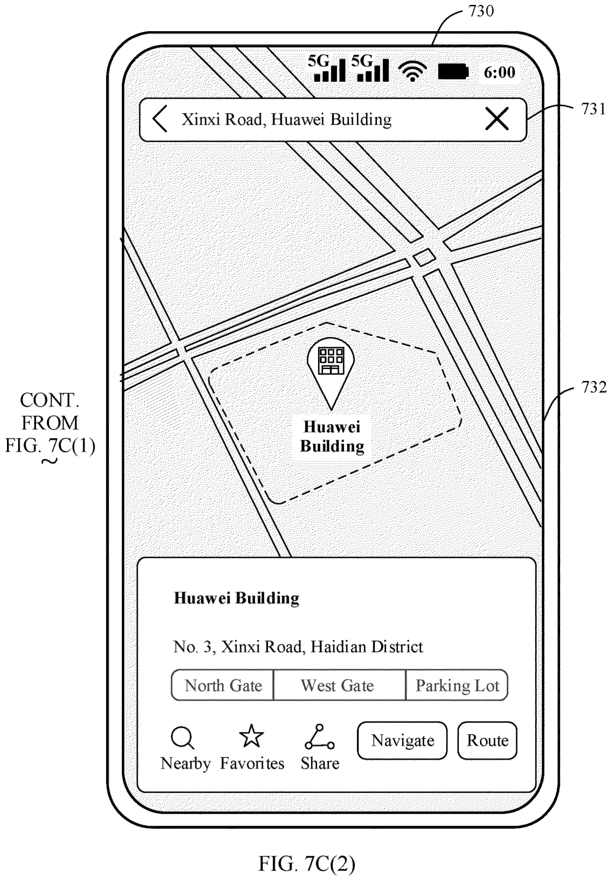

After the operations in FIG. 7B(1) to FIG. 7B(3), the user enters a more comprehensive query statement "Xinxi Road, Huawei Building" and performs search. For a specific example, refer to FIG. 7C(1) and FIG. 7C(2). FIG. 7C(1) and FIG. 7C(2) shows a schematic diagram of an example of an interface of another query behavior.

As shown in FIG. 7C(1), the electronic device may display a user interface 400 of the map application. The user interface 400 is similar to the user interface 400 shown in FIG. 5A(1). A difference lies in that on the user interface 400 shown in FIG. 7C(1), characters included in a search box 401A are the query statement "Xinxi Road, Huawei Building" currently entered by the user, and the user interface 400 shown in FIG. 7C(1) further includes a preview list 403. The preview list 403 is used to display geographical locations, for example, in a top-down order, a geographical location 403A named "Huawei Building", a geographical location named "Huawei Beijing Research Center", and a geographical location named "Huawei Building (Northwest Gate)", related to the query statement "Xinxi Road, Huawei Building" included in the search box 401Ain Beijing. The electronic device may obtain, through query in response to a touch operation (for example, a tap operation) performed on the search control 310B, a search result related to the query statement "Xinxi Road, Huawei Building" in Beijing. Optionally, the electronic device displays the geographical location 403A ranked first in the preview list 403. For details, refer to FIG. 7C(2).

As shown in FIG. 7C(2), the electronic device may display a user interface 730 of the map application. The user interface 730 includes a search result whose name is "Huawei Building" corresponding to the geographical location 403A on the user interface 400 shown in FIG. 7C(1). The user interface 730 is similar to the user interface 720 shown in FIG. 7B(3). A difference lies in that the characters included in the search bar 731 on the user interface 730 are the keyword "Xinxi Road, Huawei Building" currently queried by the user. The user interface 730 further includes a map area field of view 732, and the map area field of view 732 is a map area displayed when the electronic device displays the geographical location "Huawei Building".

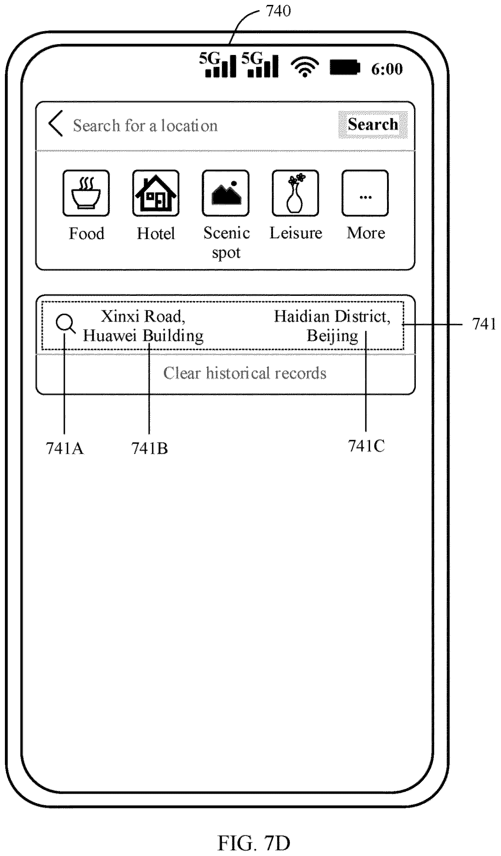

In some embodiments, after the operations in FIG. 7A(1) and FIG. 7A(2), FIG. 7B(1) to FIG. 7B(3), and FIG. 7C(1) and FIG. 7C(2), the electronic device may display a historical record corresponding to the query behavior shown in FIG. 7C(1) and FIG. 7C(2). The historical record includes the queried keyword "Xinxi Road, Huawei Building" and the map area of the search result "Huawei Building". For a specific example, refer to FIG. 7D.

As shown in FIG. 7D, the electronic device may display a user interface 740 of the map application. The user interface 740 is configured to display a historical record of map query. The user interface 740 may include a record 741. The record 741 may include an icon 741A, characters 741B, and a map area 741C. The icon 741A and the characters 741B are similar to the icon 321A and the characters 321B included in the record 321 on the user interface 300 shown in FIG. 3, and may indicate that the record 741 corresponds to the behavior of historically querying the keyword "Xinxi Road, Huawei Building" of the type of query by the user, namely, the query behavior shown in FIG. 7C(1) and FIG. 7C(2). The map area 741C indicates that a map area of a search result "Huawei Building" obtained by historically querying "Xinxi Road, Huawei Building" is "Haidian District, Beijing".

In some embodiments, a difference among query time of the three query behaviors shown in FIG. 7A(1) and FIG. 7A(2), FIG. 7B(1) to FIG. 7B(3), and FIG. 7C(1) and FIG. 7C(2) is within a preset time period (for example, 5 minutes), queried keywords (all include "Hua" and "Building", and only one word exists between "Hua" and "Building") are similar, and geographical locations obtained through query includes the geographical location "Huawei Building" selected by the user. After the query behavior shown in FIG. 7A(1) and FIG. 7A(2), the user does not select the geographical locations obtained through query. After the query behavior shown in FIG. 7B(1) to FIG. 7B(3) and FIG. 7C(1) and FIG. 7C(2), the user selects the geographical location "Huawei Building" in the geographical locations obtained through query. When a search result obtained through the query behavior shown in FIG. 7C(1) and FIG. 7C(2) is only one geographical location "Huawei Building", it is also understood as that the user selects the geographical location "Huawei Building". Because the query time of the query behavior shown in FIG. 7C(1) and FIG. 7C(2) is the latest, and the user selects the geographical location "Huawei Building", only the historical record 741 corresponding to this query behavior is displayed. Optionally, the electronic device may further determine a displayed historical record based on a queried keyword. For example, the queried keyword in the query behavior shown in FIG. 7C(1) and FIG. 7C(2) not only includes a name of the geographical location "Huawei Building", but also includes location information "Xinxi Road" of the geographical location "Huawei Building". Therefore, only the historical record 741 corresponding to this query behavior is displayed. This can avoid display of an invalid historical record (like the historical record corresponding to the query behavior shown in FIG. 7A(1) and FIG. 7A(2)) and a redundant historical record (like the historical record corresponding to the query behavior shown in FIG. 7B(1) to FIG. 7B(3)), help the user use the historical records more conveniently, and reduce storage pressure of the device.

In some embodiments, after the operations in FIG. 7A(1) and FIG. 7A(2), FIG. 7B(1) to FIG. 7B(3), and FIG. 7C(1) and FIG. 7C(2), when the electronic device is located in a city (assumed as Wuhan) other than "Beijing", the electronic device may display a historical record, for example, the record 741 on the user interface 740 shown in FIG. 7D. The electronic device may receive the touch operation (for example, the tap operation) performed on the record 741, and in response to the touch operation, display the geographic location, namely, the geographic location "Huawei Building", related to the keyword "Xinxi Road, Huawei Building" indicated by the characters 741B within the map range "Haidian District, Beijing" indicated by the map area 741C. For example, the user interface 730 shown in FIG. 7C(1) and FIG. 7C(2) is displayed, but a search result related to "Xinxi Road, Huawei Building" in "Wuhan" is not displayed. In this way, the search result is more accurate and meets a user requirement.

This is not limited to the foregoing examples. In some other examples, after the operations in FIG. 7A(1) and FIG. 7A(2) and FIG. 7B(1) to FIG. 7B(3), the electronic device may display only the historical record corresponding to the query behavior shown in FIG. 7B(1) to FIG. 7B(3). The historical record includes the queried keyword "Huawei Building" and the map area "Haidian District, Beijing" of the search result "Huawei Building". Optionally, because the query time of the query behavior shown in FIG. 7B(1) to FIG. 7B(3) is the latest, only the historical record corresponding to this query behavior is displayed. Optionally, because the user selects, in the query behavior shown in FIG. 7B(1) to FIG. 7B(3), the geographical location "Huawei Building" obtained through query, only the historical record corresponding to this query behavior is displayed. Optionally, in the query behavior shown in FIG. 7B(1) to FIG. 7B(3), the queried keyword includes a name of the geographical location "Huawei Building". Therefore, only the historical record corresponding to this query behavior is displayed. Similarly, after the operations in FIG. 7A(1) and FIG. 7A(2) and FIG. 7C(1) and FIG. 7C(2), the electronic device may display the historical record corresponding to the query behavior shown in FIG. 7C(1) and FIG. 7C(2). Details are not described again.

This is not limited to the foregoing examples. In some other examples, after the operations in FIG. 7A(1) and FIG. 7A(2), FIG. 7B(1) to FIG. 7B(3), and FIG. 7C(1) and FIG. 7C(2), the electronic device may display only the historical record corresponding to the query behavior shown in FIG. 7B(1) to FIG. 7B(3). Optionally, in the query behavior shown in FIG. 7B(1) to FIG. 7B(3), a similarity (100%) between the queried keyword and the name of the geographical location "Huawei Building" is the highest. Therefore, only the historical record corresponding to this query behavior is displayed.

This is not limited to the query behavior shown in FIG. 7C(1) and FIG. 7C(2). In some other examples, after the user enters the query statement "Xinxi Road, Huawei Building", the electronic device displays the plurality of geographical locations related to the query statement "Xinxi Road, Huawei Building" in Beijing, for example, displays the user interface 710 shown in FIG. 7B(2). Then the user selects the geographical location "Huawei Building" in the plurality of geographical locations, and the electronic device displays the user interface 730 shown in FIG. 7C(2). The description of displaying historical records is similar.

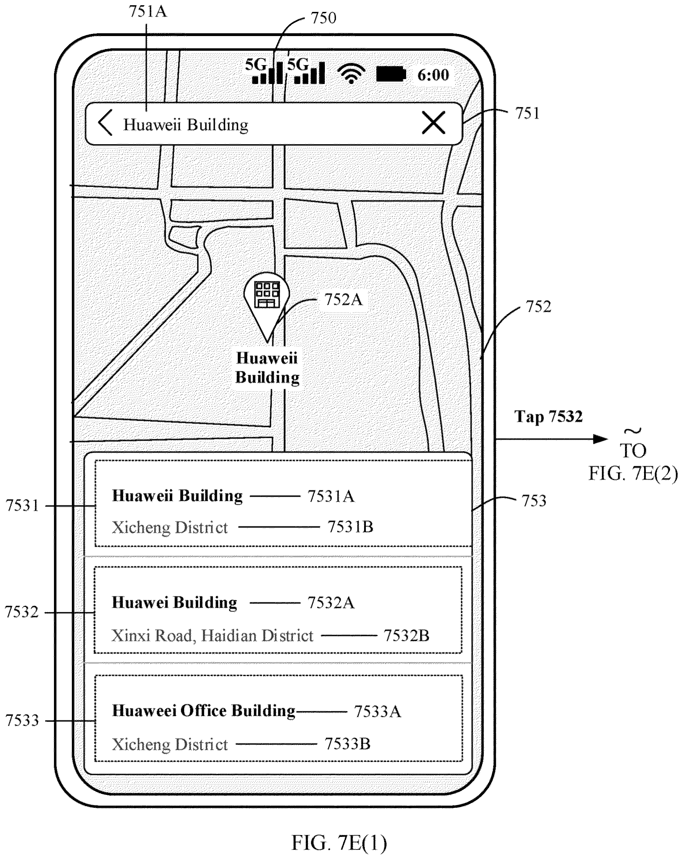

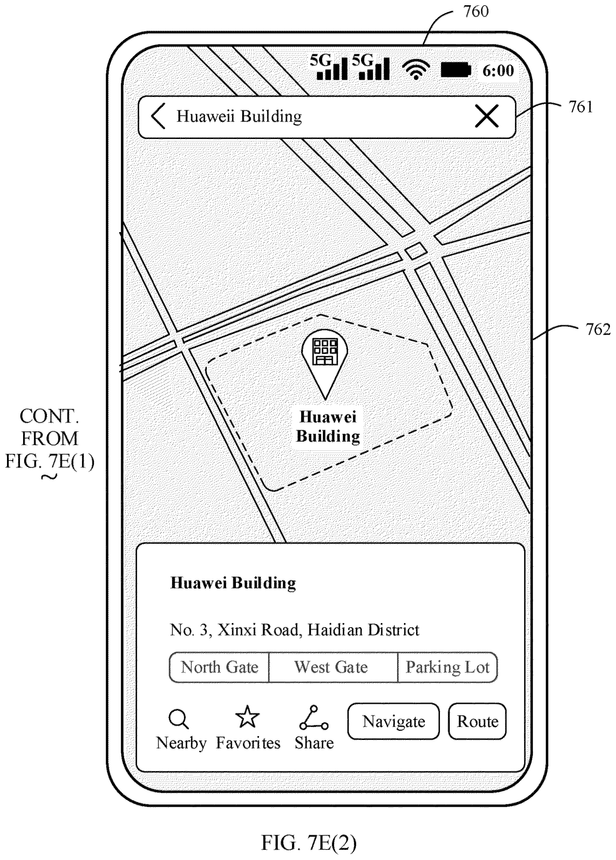

Scenario 5: It is assumed that the user wants to search for the Huawei Building in Beijing. When the electronic device is located in Beijing, the user enters a query statement "Huaweii Building" (the homophone) by mistake and performs search, and the electronic device may display a search result (including a geographical location "Huawei Building"). For details, refer to the embodiment shown in FIG. 7A(1) and FIG. 7A(2). Then, the user may select the geographical location "Huawei Building" in the search result. For a specific example, refer to FIG. 7E(1) and FIG. 7E(2).

As shown in FIG. 7E(1), the electronic device displays the user interface 750 shown in FIG. 7A(2). The electronic device may display, in response to the touch operation performed on the search result 7532 on the user interface 750, detailed information about a POI named "Huawei Building". For details, refer to FIG. 7E(2).

As shown in FIG. 7E(2), the electronic device may display a user interface 760 of a map application. The user interface 760 includes a search result named "Huawei Building". The user interface 760 is similar to the user interface 720 shown in FIG. 7B(3). A difference lies in that characters included in a search bar 761 on the user interface 760 are a keyword "Huaweii Building" (the homophone) currently queried by the user. The user interface 760 further includes a map area field of view 762, and the map area field of view 762 is a map area displayed when the electronic device displays the geographical location "Huawei Building".

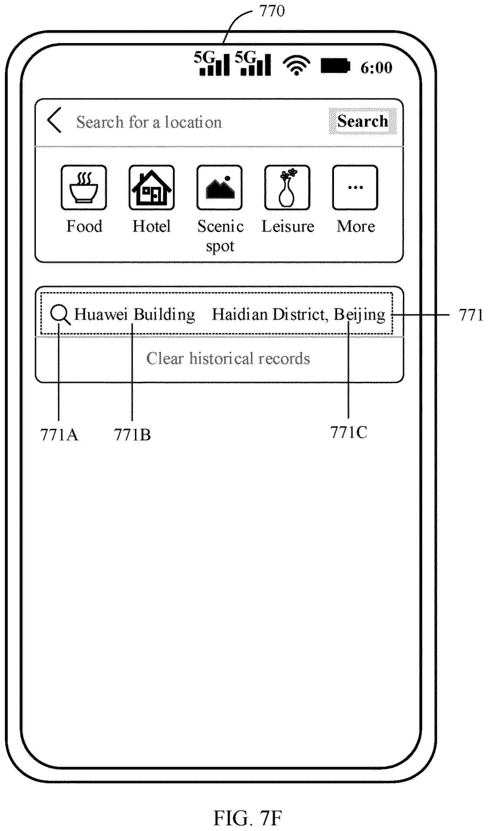

In some embodiments, after the operation shown in FIG. 7E(1) and FIG. 7E(2), the electronic device may display a historical record corresponding to this query behavior. The historical record includes an error-corrected keyword "Huawei Building" and a map area of the search result "Huawei Building". For a specific example, refer to FIG. 7F.

As shown in FIG. 7F, the electronic device may display a user interface 770 of the map application. The user interface 770 is configured to display a historical record of map query. The user interface 770 may include a record 771. The record 771 may include an icon 771A, characters 771B, and a map area 771C. The icon 771Aindicates that a type of a keyword historically queried by the user is query. In some embodiments, the electronic device identifies that the query statement "Huaweii Building" (the homophone) actually entered by the user is different from a name "Huawei Building" of the geographical location selected by the user, which may be considered as that a user input is incorrect. Therefore, the keyword recorded by the electronic device is the name of the geographical location selected by the user, and characters included in the character 771B are the keyword "Huawei Building" obtained after error correction performed by the electronic device. The map area 741C indicates that a map area of a search result "Huaweii Building" (the homophone) obtained by historically querying "Huawei Building" is "Haidian District, Beijing".

In some embodiments, after the operation shown in FIG. 7E(1) and FIG. 7E(2), the electronic device may display the historical record, for example, the record 771 on the user interface 770 shown in FIG. 7F. The electronic device may receive a touch operation (for example, a tap operation) performed on the record 771, and in response to the touch operation, display the geographical location, namely, the geographical location "Huawei Building", that is related to the keyword "Huawei Building" indicated by the characters 771B and that is within a map range "Haidian District, Beijing" indicated by the map area 771C. For example, the user interface 720 shown in FIG. 7B(3) is displayed.

In the embodiment shown in FIG. 7F, the electronic device does not display, in the historical record, the keyword "Huaweii Building" (the homophone) entered by the user by mistake. Therefore, when the electronic device receives a query request based on the historical record, a search result obtained through query is not a geographical location related to "Huaweii Building" (the homophone). This minimizes impact caused by the user's incorrect input. The historical record and the search result obtained through query based on the historical record are more accurate, and meet a user requirement.

In the embodiment shown in FIG. 7F, the electronic device does not display a redundant historical record. For example, both the historical record corresponding to the query behavior shown in FIG. 7A(1) and FIG. 7A(2) and the historical record corresponding to the query behavior shown in FIG. 7E(1) and FIG. 7E(2) are displayed. The historical record corresponding to the query behavior shown in FIG. 7A(1) and FIG. 7A(2) includes the keyword "Huaweii Building" (the homophone) of the type of query and the map area "Beijing" of the search result. The historical record corresponding to the query behavior shown in FIG. 7E(1) and FIG. 7E(2) includes the keyword "Huawei Building" of the type of a POI (namely, a name of a POI selected by the user) and the map area "Haidian District, Beijing" of the search result "Huawei Building". This helps the user use the historical records more conveniently, and reduces storage pressure of the device.

This is not limited to the example shown in FIG. 7F. In some other examples, after FIG. 7E(1) and FIG. 7E(2), the electronic device may display only a historical record corresponding to the query behavior shown in FIG. 7E(1) and FIG. 7E(2). The historical record includes the keyword "Huawei Building" of the type of a POI (namely, a name of a POI selected by the user) and the map area "Haidian District, Beijing" of the search result "Huawei Building". This avoids display of a redundant historical record (like the historical record corresponding to the query behavior shown in FIG. 7A(1) and FIG. 7A(2)), helps the user use the historical records more convenient, and reduces storage pressure of the device.

Based on the foregoing embodiments, a map query method in this application is described. The method may be applied to the map query system 10 shown in FIG. 1A and FIG. 1B.

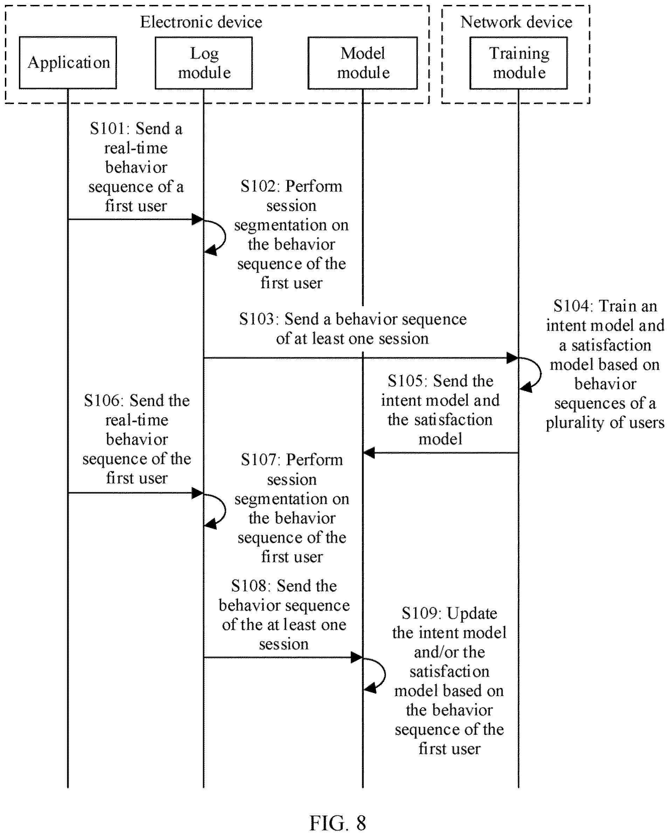

In a possible implementation, a network device may be configured to train an intent model and a satisfaction model, and the intent model and the satisfaction model that are obtained through training may be sent to any electronic device, to determine a historical record of map query. For a specific example, refer to FIG. 8. FIG. 8 is a schematic flowchart of a map query method according to an embodiment of this application. The method may include, but is not limited to, the following steps.

S101: An application of an electronic device sends a real-time behavior sequence of a first user to a log module of the electronic device.

In some embodiments, the application may record, in real time, map query behavior of the first user using the electronic device. Optionally, the application records query behavior of a user in a form of a behavior sequence, and any query behavior corresponds to one behavior sequence. Any behavior sequence includes, for example, but is not limited to: an entered keyword, query time, whether error correction is performed (for a keyword), an error correction word (a word obtained after error correction is performed on the keyword), an operation of selecting a search result (for example, an operation of selecting a search result from a search result list or an operation of tapping a search result on a displayed map), a selected POI, a parameter representing a map area displayed when a search result is displayed (which may be referred to as a map area field of view for short), and the like. The selected POI is, for example, but is not limited to, represented by an identity number (identity document, ID) of the POI. A parameter representing the map area field of view is, for example, but is not limited to, a minimum bounding rectangle (minimum bounding rectangle, MBR).

In this application, a manner in which the application receives the query behavior of the user includes, for example, but is not limited to, a touch operation performed on a display, a voice operation, a motion sensing operation, a brain wave, and the like.

S102: The log module performs session (session) segmentation on the behavior sequence of the first user.

In some embodiments, the log module may perform session segmentation on the behavior sequence of the first user based on the query time, to obtain a behavior sequence of at least one session (which may be referred to as a user log). There may be at least one behavior sequence of one session, and each behavior sequence may represent one query behavior. For example, behavior sequences whose query time is within a preset time period (for example, a start moment is earliest query time, and an end moment is a moment after 5 minutes from the start moment) belong to a same session.

In some embodiments, each time the log module receives a behavior sequence sent by the application, the log module may perform session segmentation on the behavior sequence, to determine a session corresponding to the behavior sequence. For example, it is assumed that behavior sequences whose a query time difference is less than or equal to a preset difference belong to a same session. The log module first receives a behavior sequence a. Because a difference between query time of the behavior sequence a and query time of a previously received behavior sequence is greater than the preset difference, it may be determined that the behavior sequence a corresponds to a new session a. Then the log module receives a behavior sequence b. Because a difference between query time of the behavior sequence b and the query time of the behavior sequence a is less than or equal to the preset difference, it may be determined that the behavior sequence b and the behavior sequence a belong to the same session a.

In some other embodiments, the log module may alternatively receive a preset quantity of behavior sequences sent by the application, and perform session segmentation on the preset quantity of behavior sequences. In some other embodiments, the log module may alternatively perform session segmentation on behavior sequences sent by the application at intervals of preset duration.

S103: The log module sends the behavior sequence of the at least one session to a training module of a network device.

In some embodiments, the log module may send the behavior sequence of at least one session to the training module at intervals of the preset duration.

S104: The training module trains the intent model and the satisfaction model based on behavior sequences of the plurality of users.

In some embodiments, the training module may use a behavior sequence of any session of any user (assumed as a behavior sequence of a first session of the first user) as an input, use a corresponding predicted target as an output, to train the intent model. The predicted target may be understood as a predicted target geographical location (for example, at least one POI) that is queried corresponding to query behavior indicated by the behavior sequence of the first session. In some embodiments, the predicted target is entered by the user to the network device. The predicted target may be represented by, but is not limited to, at least one of a queried keyword, a POI identifier (for example, a POIID), a name, a map area, and a parameter of a map area field of view displayed when the predicted target is displayed. The parameter of the map area field of view is, for example, the MBR.

In some embodiments, the training module may use a behavior sequence of any session of any user (assumed as a behavior sequence of a first session of the first user) as an input, use a corresponding predicted satisfaction as an output, to train the satisfaction model. The satisfaction may be for a keyword included in the behavior sequence of the first session. One satisfaction corresponds to one keyword, and may represent a matching degree between a search result obtained by performing query based on the keyword and a search result required by the user (for example, an output of the intent model, namely, a POI selected by the user). For example, the satisfaction is a non-negative number less than or equal to 1. A higher satisfaction indicates a higher matching degree, which may be understood that the search result obtained by performing query based on the keyword is more compliant with a user intention. In some embodiments, the predicted satisfaction is entered by the user to the network device.

For ease of description, in an example of this application, different MBRs are represented by "MBR-different numbers", different POIs are represented by "POIID-different numbers", and different coordinates are represented by "coordinates-different numbers".

For example, when the user is located in Wuhan, the user first queries a keyword "Beijing", a search result obtained by the electronic device is a geographical location whose name is "Beijing", and a behavior sequence 1 corresponding to this query behavior may be represented as: <Map area: Wuhan, Keyword: Beijing>. Then, the user queries a keyword "Huawei exclusive shop", a search result obtained by the electronic device is a geographical location whose name is "Huawei exclusive shop", and a behavior sequence 2 corresponding to this query behavior may be represented as: <Map area: fBeijing, MBR-1}, Keyword: Huawei exclusive shop, Tap: POIID-1, Name: Huawei exclusive shop, Coordinates: Coordinates-1>, where "MBR-1" may represent a map area field of view displayed when the geographical location "Huawei exclusive shop" is displayed, a POI identifier of the geographical location "Huawei exclusive shop" is "POIID-1", and the coordinates are coordinates-1. It is assumed that the two behavior sequences belong to a same session 1. It is assumed that, a predicted target that corresponds to a behavior sequence of the session 1 and that is manually labeled is the geographical location "Huawei exclusive shop" obtained through the second query, and may be represented as: <POI identifier: POIID-1, Map area field of view: MBR-1>; and a satisfaction that corresponds to the behavior sequence of the session 1 and that is manually labeled is for the keyword "Huawei exclusive shop", is valued 1, and may be represented as: <Keyword: Huawei exclusive shop, Satisfaction: 1>. The training module may train the intent model by using the two behavior sequences as an input of the intent model and the manually labeled predicted target as an output of the intent model. The training module may train the satisfaction model by using the two behavior sequences as an input of the satisfaction model and the manually labeled satisfaction as an output of the satisfaction model.

For example, it is assumed that the user wants to search for the Langyashan scenic spot in Baoding. When the user is located in Baoding, the user enters an incorrect keyword, and first queries a keyword "Lanyashan", and the user does not select any search result obtained through this query. A behavior sequence 3 corresponding to this query behavior may be represented as: <Map area: Baoding, Keyword: Lanyashan, No tap>. Then, the user queries a keyword "Langyashan", and the user selects a search result obtained through query (it is assumed that the search result is a geographical location whose name is "Langyashan scenic spot"). A behavior sequence 4 corresponding to the query behavior may be represented as: <Map area: {Baoding, MBR-2}, Keyword: Langyashan, Tap: POIID-2, Name: Langyashan scenic spot, Coordinates: Coordinates-2>, where "MBR-2" may represent a map area field of view displayed when the geographical location "Langyashan scenic spot" is displayed. A POI identifier of the geographical location "Langyashan scenic spot" is "POIID-2", and the coordinates are "coordinates-2". It is assumed that the two behavior sequences belong to a same session 2. It is assumed that, a predicted target that corresponds to a behavior sequence of the session 2 and that is manually labeled is the geographical location "Langyashan scenic spot" obtained through the second query, and may be represented as: <POI identifier: POIID-2, Map area field of view: MBR-2>; and a satisfaction that corresponds to the behavior sequence of the session 2 and that is manually labeled includes a satisfaction that is for the keyword "Lanyashan", is valued 0, and may be represented as: <Keyword: Lanyashan, Satisfaction: 0>, and further includes a satisfaction that is for the keyword "Langyashan", is valued 1, and may be represented as: <Keyword: Langyashan, Satisfaction: 1>. The training module may train the intent model by using the two behavior sequences as an input of the intent model and the manually labeled predicted target as an output of the intent model. The training module may train the satisfaction model by using the two behavior sequences as an input of the satisfaction model and the manually labeled satisfaction as an output of the satisfaction model.

S105: The training module of the network device sends the intent model and the satisfaction model to a model module of the electronic device.

In some embodiments, the training module of the network device may compress the intent model and the satisfaction model that are obtained through training, and send the compressed intent model and the compressed satisfaction model to the model module of the electronic device.

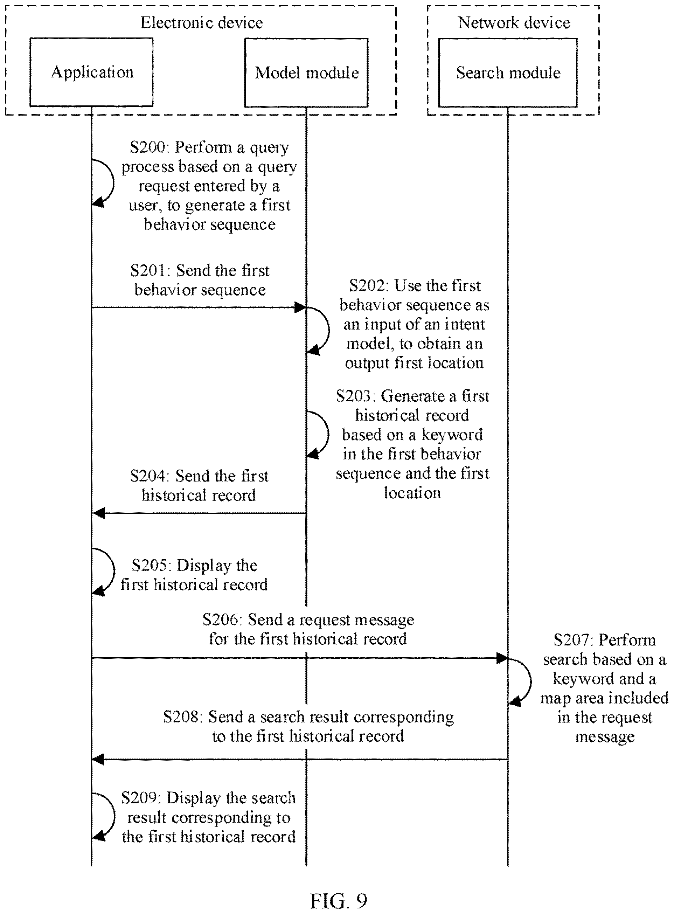

In some embodiments, the intent model and the satisfaction model that are received by the model module may be used to determine the historical record. Specific implementation is shown in FIG. 9, and details are not described temporarily.

In some embodiments, the training module may send the intent model and the satisfaction model to the model module at intervals of the preset duration, for example, once a week. In this way, the intent model and the satisfaction model obtained by the electronic device can be in line with user situations. Compared with sending the intent model and the satisfaction model only once, sending the intent model and the satisfaction model at intervals of the preset duration to determine a historical record and query a search result based on the historical record better meet a user requirement, to improve user experience.

In a possible implementation, after obtaining the intent model and the satisfaction model that are sent by the network device, the electronic device may update the intent model and/or the satisfaction model. The historical record determined by using an updated intent model and an updated satisfaction model and a search result obtained through query based on the historical record better comply with a user habit and personalization, to improve user experience. In this case, after step S 105, the method may further include but is not limited to the following steps.

S 106: The application sends the real-time behavior sequence of the first user to the log module.

S 107: The log module performs session segmentation on the behavior sequence of the first user.

S106 and S107 are similar to S101 and S102. For details, refer to the description of S101 and S102.

S108: The log module sends the behavior sequence of the at least one session to the model module.

In some embodiments, the log module may send the behavior sequence of the at least one session of the first user to the model module at intervals of the preset duration.

S109: The model module updates the intent model and/or the satisfaction model based on the behavior sequence of the first user.

In some embodiments, the model module may train and update the intent model and/or the satisfaction model based on the behavior sequence of the at least one session of the first user. Specific description is similar to the description of step S104. A difference lies in that the model module performs training only based on the behavior sequence of the first user in this case, and the predicted target and the predicted satisfaction are not entered by the user, but are determined by the electronic device.

In some embodiments, the electronic device may determine, based on an optimal behavior sequence in behavior sequences of any session, a predicted target and/or a predicted satisfaction corresponding to the behavior sequences of the session. The optimal behavior sequence is represented by, for example, at least one of latest query time, a highest similarity between a keyword and information (such as a name or a location) about a selected POI, and a POI selection operation.

Based on the example in S103, a manner of determining the predicted target and/or the predicted satisfaction by the electronic device is described as an example.

For example, the behavior sequence of the session 1 includes the behavior sequence 1: <Map area: Wuhan, Keyword: Beijing>, and the behavior sequence 2: <Map area: {Beijing, MBR-1}, Keyword: Huawei exclusive shop, Tap: POIID-1, Name: Huawei exclusive shop, Coordinates: Coordinates-1>, where query time of the behavior sequence 2 is later than query time of the behavior sequence 1, and there is POI selection operation behavior in the behavior sequence 2. Therefore, a predicted target and a predicted satisfaction corresponding to the behavior sequence of the session 1 may be determined based on the behavior sequence 2. To be specific, the search result (the geographical location "Huawei exclusive shop") corresponding to the behavior sequence 2 is determined as the predicted target, and a value of a satisfaction corresponding to the keyword "Huawei exclusive shop" included in the behavior sequence 2 is set to 1.

For example, the behavior sequence of the session 2 includes the behavior sequence 3: <Map area: Baoding, Keyword: Lanyashan, No tap>, and the behavior sequence 4: <Map area: {Baoding, MBR-2}, Keyword: Langyashan, Tap: POIID-2, Name: Langyashan scenic spot, Coordinates: Coordinates-2>, where query time of the behavior sequence 4 is later than query time of the behavior sequence 3, there is POI selection operation behavior in the behavior sequence 4, and a similarity between the keyword "Langyashan" included in the behavior sequence 4 and the name of the selected POI "Langyashan scenic spot" is the highest. Therefore, a predicted target and a predicted satisfaction corresponding to the behavior sequence of the session 2 may be determined based on the behavior sequence 4. To be specific, the search result (the geographical location "Langyashan scenic spot") corresponding to the behavior sequence 4 is determining as the predicted target, and a value of a satisfaction corresponding to the keyword "Langyashan" included in the behavior sequence 4 is set to 1. In addition, a value of a satisfaction corresponding to another keyword "Lanyashan" included in the behavior sequence 3 may be set to 0.

This is not limited to the foregoing examples. In some other embodiments, when the network device trains the intent model and the satisfaction model, the predicted target and the predicted satisfaction may not be manually labeled, but may be determined by the network device. A determining manner is similar to the foregoing manner of determining by the electronic device, and details are not described again.

This is not limited to the foregoing examples. In some other embodiments, the network device may train and send only the intent model.

In a possible implementation, an electronic device may determine a historical record based on an intent model. For a specific example, refer to FIG. 9. FIG. 9 is a schematic flowchart of another map query method according to an embodiment of this application. The method may include, but is not limited to, the following steps.

S200: An application of an electronic device performs a query process based on a query request entered by a user, to generate a first behavior sequence.

In some embodiments, the application may receive a query statement entered by the user and a query request based on the query statement, and obtain, through query, at least one geographical location (namely, a search result) related to the query statement. Optionally, when receiving the query request, the application may send a request message to a search module of a network device, where the request message is used to request to obtain a search result related to the query request; and the application may receive the search result sent by the search module. The application can display the received search result. The foregoing process may be understood as a process in which the application performs query based on the query request entered by the user. The application may record related information of this query process to generate the first behavior sequence. For information included in the first behavior sequence, refer to the description of S101 in FIG. 8.

The following shows examples of some first behavior sequences. In the following examples, the application is a map application as an example for description.

For example, the query process performed by the application based on the query request entered by the user is the query process shown in FIG. 4A(1) and FIG. 4A(2). For this query process, the map application may generate a behavior sequence 5: <Map area: {Nanjing, MBR-3}, Keyword: Gulou, Tap: POIID-3, Name: Gulou District, Nanjing, Coordinates: Coordinates-3>. The behavior sequence 5 may represent query behavior of searching for the keyword "Gulou" in the map area "Nanjing". In the query process shown in FIG. 4A(1) and FIG. 4A(2), although the user does not select a POI after querying "Gulou", because only one search result is obtained by querying "Gulou", the electronic device may consider that it can be determined that the user selects the search result after performing this query. Therefore, the behavior sequence 5 records an operation of selecting a POI whose name is "Gulou District, Nanjing" by the user, which is "Tap: POIID-3, Name: Gulou District, Nanjing, Coordinates: Coordinates-3". Therefore, the behavior sequence 5 may represent that the user selects a POI in this query. A POIID of the POI is "POIID-3", a name of the POI is "Gulou District, Nanjing", the coordinates are "coordinates-3", and a parameter of a map area field of view displayed when the POI is displayed is "MBR-3". For an example in which the electronic device displays the search result (namely, the geographical location "Gulou District, Nanjing") obtained in this query process, refer to the user interface 410 shown in FIG. 4A(2). "MBR-3" may be a parameter representing the map area field of view 412 on the user interface 410.

For example, a query process performed by the application based on the query request entered by the user is the query process shown in FIG. 4A(1) and FIG. 4A(2). After the query process shown in FIG. 4A(1) and FIG. 4A(2), the application adjusts a map area displayed when the geographical location "Gulou District, Nanjing" is displayed. For details, refer to the embodiment shown in FIG. 4C(1) and FIG. 4C(2). The map application may generate a behavior sequence 6: <Map area: {Nanjing, MBR-4}, Keyword: Gulou, Tap: POIID-3, Name: Gulou District, Nanjing, Coordinates: Coordinates-3>. The behavior sequence 6 is similar to the behavior sequence 5. A difference lies in that a parameter representing a map area field of view in the behavior sequence 6 is different from that in the behavior sequence 5, and is "MBR-4". For an example in which the electronic device displays the search result (namely, the geographical location "Gulou District, Nanjing") obtained in this query process, refer to the user interface 440 shown in FIG. 4C(2). "MBR-4" may be a parameter representing the map area field of view 441 on the user interface 440.

For example, the query process performed by the application based on the query request entered by the user is the query process shown in FIG. 5A(1) and FIG. 5A(2). For this query process, the map application may generate a behavior sequence 7: <Map area: {Beijing, MBR-5}, Keyword: Park>. The behavior sequence 7 may represent query behavior of searching for the keyword "Park" in the map area "Beijing", and a parameter representing a map area field of view is "MBR-5". For an example in which the electronic device displays the search results (namely, the plurality of geographical locations whose names include "Park" in Beijing) obtained in this query process, refer to the user interface 510 shown in FIG. 5A(2). "MBR-5" may be a parameter representing the map area field of view 512 on the user interface 510.

For example, the query process performed by the application based on the query request entered by the user is the query process shown in FIG. 6A(1) and FIG. 6A(2). For this query process, the map application may generate a behavior sequence 8: <Map area: {Beijing, MBR-6}, Keyword: Xiangshan Park, Tap: POIID-4, Name: Xiangshan Park, Coordinates: Coordinates-4>. The behavior sequence 8 may represent query behavior of searching for the keyword "Xiangshan Park" in the map area "Beijing". In addition, for this query, the user selects a POI, a POIID of the POI is "POIID-4", a name of the POI is "Xiangshan Park", and the coordinates are "coordinates-4". This may also be understood as query behavior of searching for the POI named "Xiangshan Park", and a parameter representing a map area field of view displayed when the POI is displayed is "MBR-6". For an example in which the electronic device displays the search result (namely, the geographical location "Xiangshan Park") obtained in this query process, refer to the user interface 620 shown in FIG. 6A(2). "MBR-6" may be a parameter representing the map area field of view 622 on the user interface 620.

For example, the query process performed by the application based on the query request entered by the user is the query process shown in FIG. 7A(1) and FIG. 7A(2). For this query process, the map application may generate a behavior sequence 9: <Map area: {Beijing, MBR-7}, Keyword: Huawei Building (the homophone)>. The behavior sequence 9 may represent query behavior of searching for the keyword "Huaweii Building" (the homophone) in the map area "Beijing", and a parameter representing a map area field of view is "MBR-7". For an example in which the electronic device displays the search result obtained in this query process, refer to the user interface 710 shown in FIG. 7A(2). "MBR-7" may be a parameter representing the map area field of view 712 on the user interface 710.

For example, the query process performed by the application based on the query request entered by the user is the query process shown in FIG. 7B(1) to FIG. 7B(3). For this query process, the map application may generate a behavior sequence 10: <Map area: {Beijing, MBR-8}, Keyword: Huawei Building, Tap: POIID-5, Name: Huawei Building, Coordinates: Coordinates-5>. The behavior sequence 10 may represent query behavior of searching for the keyword "Huawei Building" in the map area "Beijing". In addition, for this query, the user selects a POI, a POIID of the POI is "POIID-5", a name of the POI is "Huawei Building", and the coordinates of the POI are "coordinates-5". This may also be understood as query behavior of searching for the POI named "Huawei Building", and a parameter representing a map area field of view displayed when the POI is displayed is "MBR-8". For an example in which the electronic device displays the search result (namely, the geographical location "Huawei Building") obtained in this query process, refer to the user interface 720 shown in FIG. 7B(3). "MBR-8" may be a parameter representing the map area field of view 721 on the user interface 720.

For example, the query process performed by the application based on the query request entered by the user is the query process shown in FIG. 7C(1) and FIG. 7C(2). For this query process, the map application may generate a behavior sequence 11: <Map area: {Beijing, MBR-8}, Keyword: Xinxi Road, Huawei Building, Tap: POIID-5, Name: Huawei Building, Coordinates: Coordinates-5>. The behavior sequence 11 may represent query behavior of searching for the keyword "Xinxi Road, Huawei Building" in the map area "Beijing". In the query process shown in FIG. 7C(1) and FIG. 7C(2), although the user does not select a POI after querying "Xinxi Road, Huawei Building", because only one search result is obtained by querying "Xinxi Road, Huawei Building", the electronic device may consider that it can be determined that the user selects the search result after performing this query. Therefore, the behavior sequence 11 records an operation of selecting a POI whose name is "Huawei Building" by the user, which is "Tap: POIID-5, Name: Huawei Building, Coordinates: Coordinates-5". Therefore, the behavior sequence 11 may represent that the user selects a POI in this query. A POIID of the POI is "POIID-5", a name of the POI is "Huawei Building", the coordinates are "coordinates-5", and a parameter representing a map area field of view displayed when the POI is displayed is "MBR-8". For an example in which the electronic device displays the search result (namely, the geographical location "Huawei Building") obtained in this query process, refer to the user interface 730 shown in FIG. 7C(2). "MBR-8" may be a parameter representing the map area field of view 732 on the user interface 730.

For example, the query process performed by the application based on the query request entered by the user is the query process shown in FIG. 7E(1) and FIG. 7E(2). For this query process, the map application may generate a behavior sequence 12: <Map area: {Beijing, MBR-8}, Keyword: Huawei Building, Tap: POIID-5, Name: Huawei Building, Coordinates: Coordinates-5>. For details, refer to the description of the behavior sequence 10. For an example in which the electronic device displays the search result (namely, the geographical location "Huawei Building") obtained in this query process, refer to the user interface 760 shown in FIG. 7E(2). "MBR-8" may be a parameter representing the map area field of view 762 on the user interface 760.

S201: The application of the electronic device sends the first behavior sequence of a first user to a model module.

S202: The model module uses the first behavior sequence as an input of an intent model, to obtain an output first location.

In some embodiments, a location output by the intent model may be represented by, but is not limited to, a queried keyword and a map area, and the location output by the intent model is a geographical location that is related to the keyword and that is within a map range indicated by the map area. In some embodiments, a location output by the intent model may be represented by, but is not limited to, at least one of an identifier (for example, a POIID) of at least one POI, a name, and coordinates. The location output by the intent model is the at least one POI.

In some embodiments, the output of the intent model may further include a parameter representing a map area field of view, for example, an MBR. The map area field of view is a map area displayed when the location output by the intent model is displayed.

Based on the example of S200, the following shows examples of some first locations.

For example, the model module may use the behavior sequence 5 as an input of the intent model, to obtain an output location 1: a geographical location "Gulou District, Nanjing", which may be represented as: <Keyword: Gulou, Map area: Gulou District, Nanjing>, or may be represented as: <POI identifier: POIID-3, Name: Gulou District, Nanjing, Coordinates: Coordinates-3>.

For example, the model module may use the behavior sequence 6 as an input of the intent model, to obtain an output location 1 (namely, a geographical location "Gulou District, Nanjing") and a parameter "MBR-4" representing a map area field of view, which may be represented as: <Keyword: Gulou, Map area: Gulou District, Nanjing, Map area field of view: MBR-4>.

For example, the model module may use the behavior sequence 7 as an input of the intent model, to obtain an output location 2: a plurality of geographical locations whose names include "Park" in Beijing, which may be represented as: <Keyword: Park, Map area: Beijing>.

For example, the model module may use the behavior sequence 8 as an input of the intent model, to obtain an output location 3: a geographical location "Xiangshan Park", which may be represented as: <Keyword: Xiangshan Park, Map area: Haidian District, Beijing>, or may be represented as: <POI identifier: POIID-4, Name: Xiangshan Park, Coordinates: Coordinates-4>.

For example, the model module may use the behavior sequence 10, the behavior sequence 11, or the behavior sequence 12 as an input of the intent model, to obtain an output location 4: a geographical location "Huawei Building", which may be represented as: <Keyword: Huawei Building, Map area: Haidian District, Beijing>, or may be represented as: <POI identifier: POIID-5, Name: Huawei Building, Coordinates: Coordinates-5>.

In some embodiments, the model module may use the first behavior sequence and a second behavior sequence as inputs of the intent model, to obtain the first location corresponding to the first behavior sequence output by the intent model, and optionally, to obtain a second location corresponding to the second behavior sequence. The first behavior sequence and the second behavior sequence are behavior sequences that belong to a same session. It may be understood that the first location corresponding to the first behavior sequence is obtained with reference to a behavior sequence of a same session. A behavior sequence of at least one session may be obtained by performing session segmentation on the behavior sequence. For details, refer to the description of S102 in FIG. 8.

For example, the application sequentially performs the query processes shown in FIG. 5A(1) to FIG. 6A(2). Both the behavior sequence 7 corresponding to the query process shown in FIG. 5A(1) and FIG. 5A(2) and the behavior sequence 8 corresponding to the query process shown in FIG. 6A(1) and FIG. 6A(2) belong to a session 3. The model module may use the behavior sequence 7 and the behavior sequence 8 as inputs of the intent model, to obtain corresponding outputs. In the obtained outputs, both the behavior sequence 7 and the behavior sequence 8 correspond to the location 3 (namely, the geographical location "Xiangshan Park"). The location 3 corresponding to the behavior sequence 7 may be represented as: <Keyword: Park, Map area: Haidian District, Beijing>, or <POI identifier: POIID-4, Name: Xiangshan Park, Coordinates: Coordinates-4>. A representation manner of the location 3 corresponding to the behavior sequence 8 is similar to the representation manner of the location 3 corresponding to the behavior sequence 7. A difference lies in that an included keyword is "Xiangshan Park".

For example, the application sequentially performs the query processes shown in FIG. 7A(1) and FIG. 7A(2), FIG. 7B(1) to FIG. 7B(3), and FIG. 7C(1) and FIG. 7C(2). The behavior sequence 9 corresponding to the query process shown in FIG. 7A(1) and FIG. 7A(2), the behavior sequence 10 corresponding to the query process shown in FIG. 7B(1) to FIG. 7B(3), and the behavior sequence 11 corresponding to the query process shown in FIG. 7C(1) and FIG. 7C(2) all belong to a session 4. The model module may use the behavior sequences 9, 10, and 11 as inputs of the intent model, to obtain corresponding outputs. In the obtained outputs, the behavior sequences 9, 10, and 11 all correspond to the location 4 (namely, the geographical location "Huawei Building"). The location 4 corresponding to the behavior sequence 9 may be represented as: <Keyword: Huawei Building (the homophone), Map area: Haidian District, Beijing>, or <POI identifier: POIID-5, Name: Huawei Building, Coordinates: Coordinates-5>. A representation manner of the location 4 corresponding to each of the behavior sequences 10 and 11 is similar to the representation manner of the location 4 corresponding to the behavior sequence 9. A difference lies in that a keyword correspondingly included in the behavior sequence 10 is "Huawei Building", and a keyword correspondingly included in the behavior sequence 11 is "Xinxi Road, Huawei Building".

For example, the application sequentially performs the query processes shown in FIG. 7A(1) and FIG. 7A(2) and FIG. 7E(1) and FIG. 7E(2). Both the behavior sequence 9 corresponding to the query process shown in FIG. 7A(1) and FIG. 7A(2) and the behavior sequence 12 corresponding to the query process shown in FIG. 7E(1) and FIG. 7E(2) belong to a session 5. The model module may use the behavior sequence 9 and the behavior sequence 12 as inputs of the intent model, to obtain corresponding outputs. In the obtained outputs, both the behavior sequence 9 and the behavior sequence 12 correspond to the location 4 (namely, the geographical location "Huawei Building"). The location 4 corresponding to the behavior sequence 9 may be represented as: <Keyword: Huawei Building (the homophone), Map area: Haidian District, Beijing>, or <POI identifier: POIID-5, Name: Huawei Building, Coordinates: Coordinates-5>. A representation manner of the location 4 corresponding to the behavior sequence 12 is similar to the representation manner of the location 4 corresponding to the behavior sequence 9. A difference lies in that an included keyword is "Huawei Building".

S203: The model module generates a first historical record based on a keyword in the first behavior sequence and the first location.

In some embodiments, the first historical record may include the keyword in the first behavior sequence and a map area of the first location. Optionally, the first historical record may further include a parameter representing a map area field of view, for example, an MBR. The map area field of view is a map area displayed when the first location is displayed. Optionally, the parameter representing the map area field of view may be obtained from the output of the intent model.

Based on the examples of S200 and S202, the following shows examples of some first historical records.

For example, it is assumed that the first location corresponding to the behavior sequence 5 is the location 1 (namely, the geographical location "Gulou District, Nanjing"). In this case, a historical record 1 generated by the model module includes the keyword "Gulou" in the behavior sequence 5, and the map area "Gulou District, Nanjing" of the location 1.

For example, it is assumed that the first location corresponding to the behavior sequence 6 is the location 1 (namely, the geographical location "Gulou District, Nanjing"), and when the behavior sequence 6 is used as an input of the intent model, an output of the intent model further includes a parameter (namely, "MBR-4") representing a map area field of view. In this case, a historical record 2 generated by the model module includes the keyword "Gulou" in the behavior sequence 6, the map area "Gulou District, Nanjing" of the location 1, and the foregoing parameter "MBR-4" representing the map area field of view.

For example, it is assumed the first location corresponding to the behavior sequence 7 is the location 2 (namely, the plurality of geographical locations whose names include "Park" in Beijing). In this case, a historical record 3 generated by the model module includes the keyword "Park" in the behavior sequence 7, and the map area "Beijing" of the location 2.

For example, it is assumed that the first location corresponding to the behavior sequence 8 is the location 3 (namely, the geographical location "Xiangshan Park"). In this case, a historical record 4 generated by the model module includes the keyword "Xiangshan Park" in the behavior sequence 8, and the map area "Haidian District, Beijing" of the location 3.

For example, it is assumed the first location corresponding to the behavior sequence 11 is the location 4 (namely, the geographical location "Huawei Building"). In this case, a historical record 5 generated by the model module includes the keyword "Xinxi Road, Huawei Building" in the behavior sequence 11, and the map area "Haidian District, Beijing" of the location 4. Historical records corresponding to the behavior sequence 10 and the behavior sequence 12 generated by the model module are similar to the historical record 5. A difference lies in that a keyword included in the historical record 5 is "Huawei Building".

For example, it is assumed that both the behavior sequence 7 and the behavior sequence 8 belong to the session 3, and outputs of the intent model corresponding to the behavior sequence 7 and the behavior sequence 8 each are the location 3 (namely, the geographical location "Xiangshan Park"). In this case, a historical record 6 corresponding to the behavior sequence 7 generated by the model module includes the keyword "Park" in the behavior sequence 7, and the map area "Haidian District, Beijing" of the location 3. The historical record corresponding to the behavior sequence 8 generated by the model module is the historical record 4. Details are not described again.

For example, it is assumed that the behavior sequences 9, 10, and 11 all belong to the session 4, and outputs of the intent model corresponding to the behavior sequences 9, 10, and 11 each are the location 4 (namely, the geographical location "Huawei Building"). In this case, a historical record 7 corresponding to the behavior sequence 9 generated by the model module includes the keyword "Huaweii Building" (the homophone) in the behavior sequence 9, and the map area "Haidian District, Beijing" of the location 4. A historical record 8 corresponding to the behavior sequence 10 generated by the model module is similar to the historical record 7. A difference lies in that an included keyword is "Huawei Building". The historical record corresponding to the behavior sequence 11 generated by the model module is the historical record 5. Details are not described again.

For example, it is assumed that both the behavior sequence 9 and the behavior sequence 12 belong to the session 5, and outputs of the intent model corresponding to the behavior sequence 9 and the behavior sequence 12 each are the location 4 (namely, the geographical location "Huawei Building"). In this case, a historical record corresponding to the behavior sequence 9 generated by the model module is the historical record 7, and a historical record corresponding to the behavior sequence 12 generated by the model module is the historical record 8.

In some embodiments, the model module of the electronic device may further use the first behavior sequence as an input of a satisfaction model, to obtain an output first satisfaction. The model module determines, based on the first location and the first satisfaction, whether to generate and/or display the first historical record, and optionally, whether to delete an existing historical record.

In some embodiments, a satisfaction output by the satisfaction model may represent a matching degree between a search result corresponding to an input behavior sequence and a search result required by the user (for example, the predicted target in S104 in FIG. 8). Optionally, the satisfaction is a value. For example, the satisfaction is a non-negative number less than or equal to 1. A higher satisfaction indicates a higher matching degree, which may be understood that the search result corresponding to the behavior sequence is more compliant with a user intention.

In some embodiments, it is assumed that the first behavior sequence belongs to the behavior sequence of the first session. The model module may first determine whether the behavior sequence of the first session includes a behavior sequence of the first location that is the corresponding output of the intent model. In a case, if the behavior sequence of the first session does not include the behavior sequence of the first location that is the corresponding output of the intent model, the model module may determine to generate and display the first historical record, and optionally, do not delete the existing historical record. For a specific example, refer to the first historical record shown above. In another case, if the behavior sequence of the first session includes the behavior sequence (which may be referred to as a third behavior sequence) of the first location that is the corresponding output of the intent model, the model module may compare the first satisfaction corresponding to the first behavior sequence with a satisfaction (which may be referred to as a second satisfaction) output by the satisfaction model corresponding to the third behavior sequence. If the first satisfaction is greater than the second satisfaction, the model module may determine to generate and display the first historical record, and optionally, determine to delete a second historical record corresponding to the third behavior sequence that has been displayed by the application, and the model module may send, to the application, indication information indicating to delete the second historical record, so that the application does not display the second historical record when displaying the first historical record.

For example, it is assumed that the first behavior sequence is the behavior sequence 8, both the behavior sequence 7 and the behavior sequence 8 belong to the session 3, and an output of the intent model corresponding to the behavior sequence 7 is the first location (namely, the location 3: the geographical location "Xiangshan Park") corresponding to the behavior sequence 8. It is assumed that a satisfaction corresponding to the behavior sequence 7 is 0.6, and a satisfaction corresponding to the behavior sequence 8 is 1. Because the satisfaction corresponding to the behavior sequence 8 is higher, the model module may determine to generate and display the historical record corresponding to the behavior sequence 8, namely, the historical record 4.

For example, it is assumed that the first behavior sequence is the behavior sequence 11, the behavior sequences 9, 10 and 11 all belong to the session 4, and an output of the intent model corresponding to the behavior sequences 9 and 11 is the first location (namely, the location 4: "Huawei Building") corresponding to the behavior sequence 11. It is assumed that a satisfaction corresponding to the behavior sequence 9 is 0, a satisfaction corresponding to the behavior sequence 10 is 0.8, and a satisfaction corresponding to the behavior sequence 11 is 1. Because the satisfaction corresponding to the behavior sequence 11 is the highest, the model module may determine to generate and display the historical record corresponding to the behavior sequence 11, namely, the historical record 5. In addition, the model module may indicate the application to delete the historical record (namely, the historical record 7) corresponding to the behavior sequence 9 and the historical record (namely, the historical record 8) corresponding to the behavior sequence 10.

For example, it is assumed that the first behavior sequence is the behavior sequence 12, both the behavior sequence 9 and the behavior sequence 12 belong to the session 5, and an output of the intent model corresponding to the behavior sequence 9 is the first location (namely, the location 4: "Huawei Building") corresponding to the behavior sequence 9. It is assumed that a satisfaction corresponding to the behavior sequence 9 is 0, and a satisfaction corresponding to the behavior sequence 12 is 1. Because the satisfaction corresponding to the behavior sequence 12 is the highest, the model module may determine to generate and display the historical record corresponding to the behavior sequence 12, namely, the historical record 8. In addition, the model module may indicate the application to delete the historical record (namely, the historical record 7) corresponding to the behavior sequence 9.

If the first satisfaction is less than the second satisfaction, the model module may determine not to display the first historical record. In this case, the electronic device may not perform S203 to S205. If the first satisfaction is equal to the second satisfaction, the model module may determine to display the first historical record and not delete the second historical record, or the model module may determine not to display the first historical record, or the model module may determine to display the first historical record and delete the second historical record.

S204: The model module sends the first historical record to the application.

S205: The application displays the first historical record.

For example, the application may display the user interface 430 shown in FIG. 4B, and the record 431 on the user interface 430 is used to display the historical record 1 or the historical record 2.

For example, the application may display the user interface 520 shown in FIG. 5B, and the record 521 on the user interface 520 is used to display the historical record 3.

For example, the application may display the user interface 630 shown in FIG. 6B, the record 631 on the user interface 630 is used to display the historical record 4, and the record 632 on the user interface 630 is used to display the historical record 6.

For example, the application may display the user interface 740 shown in FIG. 7D, and the record 741 on the user interface 740 is used to display the historical record 5. In addition, the historical record 7 and the historical record 8 are not displayed on the user interface 740.

For example, the application may display the user interface 770 shown in FIG. 7F, and the record 771 on the user interface 770 is used to display the historical record 8. In addition, the historical record 7 is not displayed on the user interface 740.

In a possible implementation, the method may further include the following step.

S206: The application sends a request message for the first historical record to a search module of the network device.

In some embodiments, the electronic device may receive a user operation, for example, a touch operation, a voice operation, a motion sensing operation, or a brain wave, that is input by the user through the application and that is for the first historical record, which may be understood as receiving a query request that is based on the first historical record. The first historical record may be any historical record displayed by the application. When receiving the query request that is based on the first historical record, the application may send the request message for the first historical record to the search module of the network device.

In some embodiments, the request message for the first historical record includes the keyword and the map area in the first historical record. Optionally, the first historical record further includes the parameter representing the map area field of view, for example, an MBR. In this case, the request message for the first historical record further includes the parameter representing the map area field of view in the first historical record.

S207: The search module performs search based on the keyword and the map area that are included in the request message, to obtain a search result corresponding to the first historical record.

In some embodiments, when receiving the request message for the first historical record, the search module may search for, within a map range indicated by the map area included in the request message (namely, the map area included in the first historical record), a geographical location related to the keyword (namely, the keyword included in the first historical record) included in the request message, where the geographical location is the search result.

In some embodiments, if the request message further includes the parameter (assumed as the MBR included in the first historical record) representing the map area field of view, the search module may obtain, based on the MBR, the map area field of view when the search result is displayed.

S208: The search module sends the search result corresponding to the first historical record to the application.

In some embodiments, if the request message further includes the parameter representing the map area field of view, the search module may further send, to the application, the map area field of view displayed when the search result corresponding to the first historical record is displayed.

S209: The application displays the search result corresponding to the first historical record.

In some embodiments, when receiving the search result that corresponds to the first historical record and that is sent by the search module, the application may display the search result. Optionally, the application further receives the map area field of view sent by the search module, and the application may display the search result according to the map area field of view.

The following shows examples of search results corresponding to some first historical records.

For example, the first historical record is the historical record 1. For details, refer to the record 431 on the user interface 430 shown in FIG. 4B. The request message for the first historical record may include the keyword "Gulou" and the map area "Gulou District, Nanjing". The search result corresponding to the first historical record may be the geographical location "Gulou District, Nanjing". For an example in which the application displays the search result, refer to the user interface 410 shown in FIG. 4A(2).

For example, the first historical record is the historical record 2. For details, refer to the record 431 on the user interface 430 shown in FIG. 4B. The request message for the first historical record may include the keyword "Gulou", the map area "Gulou District, Nanjing", and the parameter "MBR-4" representing the map area field of view. The search result corresponding to the first historical record may be the geographical location "Gulou District, Nanjing". For an example in which the application displays the search result, refer to the user interface 440 shown in FIG. 4C(2). For the map area field of view obtained by the search module based on "MBR-4", refer to the map area field of view 441 on the user interface 440.

For example, the first historical record is the historical record 3. For details, refer to the record 521 on the user interface 520 shown in FIG. 5B. The request message for the first historical record may include the keyword "Park" and the map area "Beijing". The search result corresponding to the first historical record may be the plurality of geographical locations whose names include "Park" in Beijing. For an example in which the application displays the search result, refer to the user interface 510 shown in FIG. 5A(2).

For example, the first historical record is the historical record 6. For details, refer to the record 632 on the user interface 630 shown in FIG. 6B. The request message for the first historical record may include the keyword "Park" and the map area "Haidian District, Beijing". The search result corresponding to the first historical record may be the geographical location whose name includes "Park" in "Haidian District, Beijing", which is assumed as the geographical location "Xiangshan Park". For an example in which the application displays the search result, refer to the user interface 620 shown in FIG. 6A(2).

For example, the first historical record is the foregoing historical record 5. For details, refer to the record 741 on the user interface 740 shown in FIG. 7D. The request message for the first historical record may include the keyword "Xinxi Road, Huawei Building" and the map area "Haidian District, Beijing". The search result corresponding to the first historical record may be the geographical location whose information is related to "Xinxi Road, Huawei Building" in "Haidian District, Beijing", which is assumed as the geographical location "Huawei Building". For an example in which the application displays the search result, refer to the user interface 730 shown in FIG. 7C(2).

For example, the first historical record is the foregoing historical record 8. For details, refer to the record 771 on the user interface 770 shown in FIG. 7F. The request message for the first historical record may include the keyword "Huawei Building" and the map area "Haidian District, Beijing". The search result corresponding to the first historical record may be the geographic location whose information is related to "Huawei Building" in "Haidian District, Beijing", which is assumed as the geographical location "Huawei Building". For an example in which the application displays the search result, refer to the user interface 760 shown in FIG. 7E(2).

This is not limited to the foregoing example. In some other embodiments, the first location may not be the output obtained by using the first behavior sequence as the input of the intent model, but the search result corresponding to the first behavior sequence is directly determined as the first location. In some other embodiments, the first location may alternatively be obtained based on an optimal behavior sequence in behavior sequences of a session in which the first behavior sequence is located. For details, refer to the description of determining the predicted target by the electronic device in S104 in FIG. 8.

It may be understood that, for a behavior sequence of the user at any moment, the electronic device may perform at least one of the following items: sending the behavior sequence obtained after session segmentation to the network device to train the intent model and the satisfaction model (for example, step S103 in FIG. 8), updating the intent model and/or the satisfaction model based on the behavior sequence obtained after session segmentation (for example, step S109 in FIG. 8), and determining the historical record corresponding to the behavior sequence (for example, steps S202 and S203 in FIG. 9), where a sequence of the three items is not limited.

In the foregoing method, the electronic device may record map query behavior of the user, and optimize a displayed historical record based on the recorded query behavior. For example, a key element like a map area is reflected in the displayed historical record, and an invalid and redundant historical record is removed, to help the user perform query based on the historical record. In addition, a manner of performing query based on a historical record is optimized. For example, a keyword included in the historical record is queried in a map area included in the historical record, so that a search result obtained through previous query is accurately reproduced, and the user does not need to re-enter and search for a geographical location. This reduces user operations and processing pressure of the device.

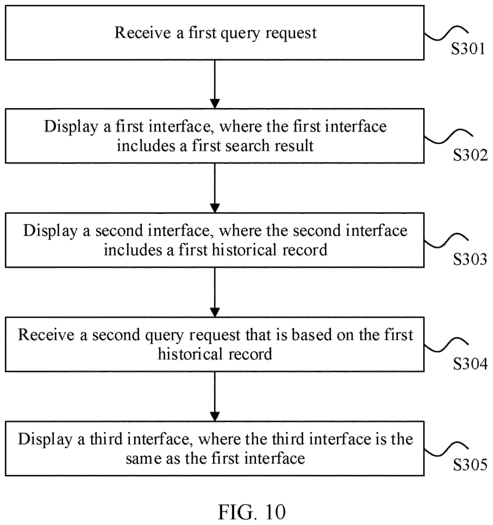

FIG. 10 is a schematic flowchart of another map query method according to an embodiment of this application. The method may be applied to the electronic device 100 in the map query system 10 shown in FIG. 1A and FIG. 1B. The method may be applied to the electronic device 100 shown in FIG. 2A. The method may be applied to the electronic device 100 shown in FIG. 2B. The method may include, but is not limited to, the following procedure.

S301: An electronic device receives a first query request.

In some embodiments, the first query request is used to request to query a keyword entered by a user.

In some embodiments, a manner of entering a keyword by the user based on the electronic device includes, for example, but is not limited to, entering, by the user, a keyword in a form of a text, a picture, or a video by touching a display of the electronic device; entering, by the user, a keyword in a form of a text by using a keyboard connected to the electronic device; entering, by the user, a keyword in a form of a voice by using a microphone connected to or built in the electronic device; and entering, by the user, a keyword in a form of a picture, a video, or a motion posture by using a camera connected to or built in the electronic device. A form of the keyword entered by the user may include but is not limited to a text, a picture, a voice, a video, a motion posture, and the like.

In some embodiments, the electronic device may receive a keyword entered by the user and a user operation, which may be understood receiving the first query request that is based on the keyword. For example, in the embodiment shown in FIG. 4A(1) and FIG. 4A(2), when displaying the user interface 400, the electronic device may receive the keyword "Gulou" entered by the user based on the search box 401A, and then may receive the touch operation (for example, the tap operation) performed on the search control 310B, which may be understood receiving the first query request that is based on "Gulou".

S302: The electronic device displays a first interface, where the first interface includes a first search result.

In some embodiments, the first search result includes at least one geographical location that is related to the first query request and that is within a map range indicated by a first map area. In one case, the first map area is a map area in which the electronic device is currently located, for example, a city in which the electronic device is currently located. In another case, the first map area is a map area adjusted by the user before S301. For example, when the electronic device is located in Beijing, the electronic device receives a request of the user for querying "Nanjing", and the electronic device displays a search result "Nanjing" in response to the request. In this case, the current map area is adjusted to "Nanjing". In this case, the electronic device receives the first query request again, and the obtained first search result is at least one geographical location that is related to the first query request and that is in "Nanjing".

In some embodiments, when receiving the first query request, the electronic device may send a request message to a network device, where the request message is used to request to obtain a search result related to the first query request. In some embodiments, after receiving the request message, the network device may query, in a current map area (for example, a city in which the electronic device is located), at least one geographical location related to a first keyword, that is, obtain the first search result. The first keyword is related to the first query request. Optionally, the first keyword is the keyword described in S301. The network device may send the first search result to the electronic device. In some embodiments, after obtaining the first search result, the electronic device may display the first interface.

For example, in the embodiment shown in FIG. 4A(1) and FIG. 4A(2), when displaying the user interface 400 shown in FIG. 4A(1), the electronic device receives an operation of tapping 401B (receiving a query request that is based on the keyword "Gulou"), and therefore the electronic device displays the user interface 410 (the first interface) shown in FIG. 4A(2). The user interface 410 includes the geographical location "Gulou District, Nanjing" (the first search result).

For example, in the embodiment shown in FIG. 5A(1) and FIG. 5A(2), when displaying the user interface 400 shown in FIG. 5A(1), the electronic device receives an operation of tapping 401B (receiving a query request based on the keyword "Park"), and therefore the electronic device displays the user interface 510 (the first interface) shown in FIG. 5A(2). The user interface 510 includes the plurality of geographical locations (the first search result) whose names include "Park" in Beijing.

For example, in the embodiment shown in FIG. 6A(1) and FIG. 6A(2), when displaying the user interface 510 shown in FIG. 6A(1), the electronic device receives an operation of tapping 5131 (receiving a query request based on the keyword "Xiangshan Park"), and therefore the electronic device displays the user interface 620 (the first interface) shown in FIG. 6A(2). The user interface 620 includes the geographical location "Xiangshan Park" (the first search result).

For example, in the embodiment shown in FIG. 7C(1) and FIG. 7C(2), when displaying the user interface 400 shown in FIG. 7C(1), the electronic device receives an operation of tapping 401B (receiving a query request based on the keyword "Xinxi road, Huawei Building"), and therefore the electronic device displays the user interface 730 (the first interface) shown in FIG. 7C(2). The user interface 730 includes the geographical location "Huawei Building" (the first search result).

This is not limited to query behavior in the foregoing examples. For example, there are still the embodiments shown in FIG. 7A(1) and FIG. 7A(2), FIG. 7B(1) to FIG. 7B(3), and FIG. 7E(1) and FIG. 7E(2). Specific description is similar to description in the foregoing examples, and details are not described again.

S303: The electronic device displays a second interface, where the second interface includes a first historical record.

In some embodiments, the first historical record corresponds to the first query behavior shown in S301 and S302. In some embodiments, the electronic device may record the first query behavior of the user, and the first query behavior may be represented by using a corresponding first behavior sequence. For details, refer to the description of S200 in FIG. 9.

In some embodiments, the first historical record includes the first keyword and the first map area, and the first keyword is related to the first query request. Optionally, the first keyword is the keyword described in S301. Optionally, the first keyword is a keyword in the first behavior sequence. In one case, the first map area is a map area in which the first search result is located. In another case, the first map area is a map area in which the first location corresponding to the first behavior sequence is located, and the first location is an output obtained by using the first behavior sequence as an input of the intent model. In some embodiments, the first historical record further includes a parameter representing a map area field of view, for example, an MBR representing a size of the map area field of view. The map area field of view is a map area displayed when the first search result is displayed. Optionally, the parameter representing the map area field of view may be an output obtained by using the first behavior sequence as an input of the intent model.

For description of generating the first historical record by the electronic device, refer to the description of S202 and S203 in FIG. 9.

For an example of displaying the second interface by the electronic device, refer to the description of S205 in FIG. 9.

In some embodiments, the first search result is a geographical location, the geographical location is within the map range indicated by the first map area, and the first historical record includes the first map area. For example, the search result obtained by the query behavior shown in FIG. 4A(1) and FIG. 4A(2) is the geographical location "Gulou District, Nanjing", the corresponding first historical record displayed by the electronic device is the record 431 on the user interface 430 shown in FIG. 4B, and the map area 431C included in the record 431 indicates that the map area of the geographical location "Gulou District, Nanjing" is "Gulou District, Nanjing".

In some other embodiments, the first search result includes a plurality of geographical locations, and the map range indicated by the first map area may include a map range indicated by map areas in which the plurality of geographical locations are located. For example, the first map area is a minimum map area including the map areas in which the plurality of geographical locations are located. The first historical record includes the first map area. For example, the search result obtained through the query behavior shown in FIG. 5A(1) and FIG. 5A(2) includes the geographical location "Xiangshan Park", the geographical location "Beihai Park", and the geographical location "World Park", and map areas corresponding to the geographical locations are respectively "Haidian District", "Xicheng District", and "Fengtai District". It is assumed that a minimum map area including the three map areas is "Beijing". The corresponding first historical record displayed by the electronic device is the record 521 on the user interface 520 shown in FIG. 5B, and the map area indicated by the map area 521C included in the record 521 is "Beijing".

In some embodiments, the electronic device may perform session segmentation on the behavior sequence. For details, refer to the description of S102 in FIG. 8. It is assumed that the first behavior sequence and the second behavior sequence belong to a same session. In some embodiments, the electronic device may determine, based on target locations and satisfactions that respectively correspond to the first behavior sequence and the second behavior sequence, whether to display the first historical record corresponding to the first behavior sequence. The satisfaction corresponding to the first behavior sequence may be an output obtained by using the first behavior sequence as an input of a satisfaction model, and the second behavior sequence is similar. For example, when the first behavior sequence and the second behavior sequence correspond to the same target location, if the satisfaction corresponding to the first behavior sequence is greater than the satisfaction corresponding to the second behavior sequence, it may be determined that the first historical record corresponding to the first behavior sequence is displayed, and optionally, the historical record corresponding to the second behavior sequence is deleted; and if the satisfaction corresponding to the first behavior sequence is less than the satisfaction corresponding to the second behavior sequence, it may be determined that the first historical record corresponding to the first behavior sequence is not limited. For details, refer to the description of S203 in FIG. 9.

In some embodiments, the intent model and/or the satisfaction model may be sent by the network device to the electronic device after being trained. For details, refer to the description of S101 to S105 in FIG. 8. Optionally, the electronic device receives the intent model and/or the satisfaction model sent by the network device, and may update the intent model and/or the satisfaction model. For details, refer to the description of S106 to S109 in FIG. 8. In some other embodiments, the intent model and/or the satisfaction model may be trained by the electronic device. A specific manner is similar to a manner of continuous connection of the network device, and details are not described again.

S304: The electronic device receives a second query request that is based on the first historical record.

In some embodiments, the electronic device may receive a user operation, for example, a touch operation, a voice operation, a motion sensing operation, or a brain wave, that is input by the user and that is for the first historical record, which may be understood as receiving a query request that is based on the first historical record. For example, when the electronic device displays the user interface 430 (the second interface) shown in FIG. 4B, the electronic device receives a touch operation (for example, a tap operation) performed on the record 431 (the first historical record), which may be understood as receiving the query request that is based on the record 431.

S305: The electronic device displays a third interface, where the third interface is the same as the first interface.

In some embodiments, the electronic device is located at the first geographical location when receiving the second query request, the first geographical location is within a map range indicated by a second map area, and the second map area is different from the first map area. It may be understood that, the map area in which the electronic device is located in S304 is different from the map area in which the electronic device is located in S301. For example, when the electronic device is located in "Nanjing", the electronic device performs the query behavior shown in FIG. 4A(1) and FIG. 4A(2) (including receiving the first query request), and an obtained search result is the geographical location "Gulou District, Nanjing" displayed on the user interface 410 shown in FIG. 4A(2). The first historical record is the record 431 on the user interface 430 shown in FIG. 4B. When the electronic device is located in "Beijing", the electronic device receives a touch operation performed on the record 431 (receiving the second query request), and an obtained search result is still the geographical location "Gulou District, Nanjing", instead of the geographical location related to the keyword "Gulou" included in the record 431 in "Beijing".

In some embodiments, when receiving the query request that is based on the first historical record, the electronic device may send the request message to the network device, where the request message is used to request to obtain the search result related to the second query request. The request message includes the first image area and the first keyword. In some embodiments, after receiving the request message, the network device may query, within the map range indicated by the first map area included in the first historical record, at least one geographical location related to the first keyword, that is, obtain the search result. In FIG. 10, for example, the obtained search result is the first search result. The network device may send the first search result to the electronic device. In some embodiments, after obtaining the first search result, the electronic device may display the third interface. For details, refer to the description of S206 to S209 in FIG. 9.

In a possible implementation, the map query method provided in this embodiment of this application further includes the following steps.

The electronic device receives a third query request, where the third query request is related to the second keyword. For example, when displaying the user interface 400 shown in FIG. 4A(1), the electronic device may receive the keyword "Gulou" (which may be understood as the second keyword related to the third query request) entered by the user based on the search box 401A, and then may receive a touch operation (for example, a tap operation) performed on the search control 310B, which may be understood as receiving the third query request.

The electronic device displays a fourth interface, where the fourth interface includes a second search result, and the second search result includes at least one geographical location that is related to the third query request and that is within a map range indicated by a fifth map area. For example, the electronic device displays the user interface 410 (which may be understood as the fourth interface) shown in FIG. 4A(2). The user interface 410 includes the geographical location "Gulou District, Nanjing" (which may be understood as the second search result), and the map area in which the geographical location is located is "Gulou District, Nanjing" (which may be understood as the fifth map area).

The electronic device receives a first user operation. In some embodiments, the first user operation is a zoom out gesture or a zoom in gesture. The electronic device displays a fifth interface, where the fifth interface includes the second search result, and a size of a fifth map area displayed on the fifth interface is different from a size of the fifth map area displayed on the fourth interface. For example, in the embodiment shown in FIG. 4C(1) and FIG. 4C(2), when the electronic device displays the user interface 410 shown in FIG. 4C(1), the electronic device receives a two-finger pinch-in gesture (which may be understood as the first user operation). In response to the gesture, a displayed map area is zoomed out, and the user interface 440 (which may be understood as the fifth interface) shown in FIG. 4C(2) is displayed. Compared with the map area field of view 412 on the user interface 410, the map area field of view 441 on the user interface 440 is smaller.

The electronic device displays a sixth interface, where the sixth interface includes a second historical record, and the second historical record includes a second keyword and the fifth map area. For example, the electronic device displays the user interface 430 (which may be understood as the sixth interface) shown in FIG. 4B. The user interface 430 includes the record 431 (which may be understood as the second historical record), the record 431 includes the characters 431B indicating the keyword "Gulou" (which may be understood as the second keyword), and the map area 431C indicating "Gulou District, Nanjing" (which may be understood as the fifth map area).

The electronic device receives a fourth query request that is based on the second historical record, and displays a seventh interface, where the seventh interface is the same as the fifth interface. For example, the electronic device receives a touch operation (for example, a tap operation) performed on the record 431 on the user interface 430 shown in FIG. 4B, which may be understood as receiving the fourth query request, and in response to the touch operation, the electronic device displays the user interface 440 (which may be understood as the seventh interface) shown in FIG. 4C(2).

In some embodiments, when receiving the query request that is based on the second historical record, the electronic device may send the request message to the network device, where the request message is used to request to obtain the search result related to the fourth query request. The request message includes the second keyword, the fifth map area, and a first parameter, and the first parameter indicates the size of the fifth map area displayed on the fifth interface, for example, the map area field of view 441 on the user interface 440. After receiving the request message, the network device may obtain the second search result, obtain the corresponding map area field of view based on the first parameter, and send the second search result and the corresponding map area field of view to the electronic device. After receiving the map area field of view and the second search result, the electronic device may display the first search result in the map area field of view. For details, refer to the description of S206 to S209 in FIG. 9.

In another possible implementation, the map query method provided in this embodiment of this application further includes the following steps.

The electronic device receives a fifth query request, where the fifth query request is related to the third keyword. For example, when displaying the user interface 400 shown in FIG. 5A(1), the electronic device may receive the keyword "Park" (which may be understood as the third keyword related to the fifth query request) entered by the user based on the search box 401A, and then may receive a touch operation (for example, a tap operation) performed on the search control 310B, which may be understood as receiving the fifth query request.

The electronic device displays an eighth interface, where the eighth interface includes a third search result, the third search result includes a fifth geographical location and a sixth geographical location that are related to the fifth query request, the fifth geographical location is within a map range indicated by a sixth map area, the sixth geographical location is within a map range indicated by a seventh map area, and the sixth map area is different from the seventh map area. For example, the electronic device displays the user interface 510 (which may be understood as the eighth interface) shown in FIG. 5A(2). The user interface 510 includes the plurality of geographical locations whose names include "Park" in Beijing, including the geographical location "Xiangshan Park" (which may be understood as the fifth geographical location) and the geographical location "Beihai Park" (which may be understood as the sixth geographical location). The map area of the geographical location "Xiangshan Park" is "Haidian District, Beijing" (which may be understood as the sixth map area), and the map area of the geographical location "Beihai Park" is "Xicheng District, Beijing" (which may be understood as the seventh map area).

The electronic device receives a second user operation for the fifth geographical location on the eighth interface. The electronic device displays a ninth interface, where the ninth interface includes the fifth geographical location within the map range indicated by the sixth map area. For example, in the embodiment shown in FIG. 6A(1) and FIG. 6A(2), when the electronic device displays the user interface 510 shown in FIG. 5A(2), the electronic device receives a touch operation performed on the search result 5131 or the location identifier 512A on the user interface 510, which may be understood as receiving the second user operation, and in response to the touch operation, the electronic device displays the user interface 620 (which may be understood as the ninth interface) shown in FIG. 6A(2). The user interface 620 includes the geographical location "Xiangshan Park" whose map area is "Haidian District, Beijing".

The electronic device displays a tenth interface, where the tenth interface includes a third historical record, and the third historical record includes a third keyword and the sixth map area. For example, the electronic device displays the user interface 630 (which may be understood as the tenth interface) shown in FIG. 6B. The user interface 630 includes the record 632 (which may be understood as the third historical record), the record 632 includes the characters indicating the keyword "Park" (which may be understood as the third keyword), and the map area 632A indicating "Haidian District, Beijing" (which may be understood as the sixth map area).

The electronic device receives a sixth query request that is based on the third historical record, and displays an eleventh interface, where the eleventh interface is the same as the ninth interface. For example, the electronic device receives a touch operation performed on the record 632 on the user interface 630 shown in FIG. 6B, which may be understood as receiving the sixth query request, and in response to the touch operation, the electronic device displays the user interface 620 (which may be understood as the eleventh interface) shown in FIG. 6A(2).

In some embodiments, the fifth geographical location and the sixth geographical location are within a map range indicated by an eighth map area, and the map range indicated by the eighth map area includes the map range indicated by the sixth map area and the map range indicated by the seventh map area. For example, the electronic device displays the user interface 510 shown in FIG. 5A(2). The user interface 510 includes the plurality of geographical locations whose names include "Park" in Beijing, including the geographical location "Xiangshan Park" (the fifth geographical location) and the geographical location "Beihai Park" (the sixth geographical location). The map area of the geographical location "Xiangshan Park" is "Haidian District, Beijing" (the sixth map area), and the map area of the geographical location "Beihai Park" is "Xicheng District, Beijing" (the seventh map area). The eighth map area may be "Beijing".

In some embodiments, the tenth interface further includes a fourth historical record, the fourth historical record includes information about a first POI, the first POI is the fifth geographic location, and the information about the first POI includes a name of the fifth geographic location and the sixth map area. For example, the electronic device displays the user interface 630 (which may be understood as the tenth interface) shown in FIG. 6B. The user interface 630 includes the record 632 (which may be understood as the third historical record) and the record 631 (which may be understood as the fourth historical record). The record 631 may correspond to the POI "Xiangshan Park" (which may be understood as the fifth geographical location) selected by the user from the search result obtained through query after the user historically queries "Park". The record 631 includes the icon 631A and the characters 631B, which may indicate the keyword "Xiangshan Park" of the type of a POI, namely, the name of the POI "Xiangshan Park". The record 631 further includes the map area 631C, which may indicate the map area "Haidian District, Beijing" of the POI "Xiangshan Park".

In another possible implementation, the map query method provided in this embodiment of this application further includes the following steps.

The electronic device receives a seventh query request, where the seventh query request is related to the fourth keyword. For example, when displaying the user interface 400 shown in FIG. 7B(1), the electronic device may receive the keyword "Huawei Building" (which may be understood as the fourth keyword related to the seventh query request) entered by the user based on the search box 401A, and then may receive a touch operation (for example, a tap operation) performed on the search control 310B, which may be understood as receiving the seventh query request.

The electronic device displays a twelfth interface, where the twelfth interface includes a fourth search result, and the fourth search result includes a seventh geographical location related to the seventh query request. For example, the electronic device displays the user interface 710 (which may be understood as the twelfth interface) shown in FIG. 7B(2). The user interface 710 includes the plurality of geographical locations related to "Huawei Building" in Beijing, and includes the geographical location "Huawei Building" (which may be understood as the seventh geographical location).

The electronic device receives a third user operation for the seventh geographical location on the twelfth interface. The electronic device displays a thirteenth interface, where the thirteenth interface includes the seventh geographical location within a map range indicated by a ninth map area. For example, when the electronic device displays the user interface 710 shown in FIG. 7B(2), the electronic device receives a touch operation performed on the search result 7131 or the location identifier 712A on the user interface 710, which may be understood as receiving the third user operation. In response to the touch operation, the electronic device displays the user interface 720 (which may be understood as the thirteenth interface) shown in FIG. 7B(3). The user interface 720 includes the geographical location "Huawei Building" (which may be understood as the seventh geographical location) whose map area is "Haidian District, Beijing" (which may be understood as the ninth map area).

The electronic device receives an eighth query request, where the eighth query request is related to a fifth keyword. The electronic device displays a fourteenth interface, where the fourteenth interface includes a fifth search result, and the fifth search result includes the seventh geographical location that is related to the eighth query request. For example, when the electronic device displays the user interface 400 shown in FIG. 7A(1), the electronic device may receive the keyword "Huaweii Building" (the homophone, which may be understood as the fifth keyword related to the eighth query request) entered by the user based on the search box 401A, and then may receive a touch operation performed on the search control 310B, which may be understood as receiving the eighth query request. In response to the touch operation, the electronic device displays the user interface 750 (which may be understood as the fourteenth interface) shown in FIG. 7A(2). The user interface 750 includes the plurality of geographical locations related to "Huaweii Building" (the homophone) in Beijing, and includes the geographical location "Huawei Building" (which may be understood as the seventh geographical location).

The electronic device displays a fifteenth interface, where the fifteenth interface includes a fifth historical record, and the fifth historical record includes a fourth keyword and the ninth map area. For example, the fourth keyword included in the fifth historical record is the keyword "Huawei Building" related to the seventh query request, and the ninth map area included in the fifth historical record is the map area "Haidian District, Beijing" of the seventh geographical location "Huawei Building".

The electronic device receives a ninth query request that is based on the fifth historical record, and displays a sixteenth interface, where the sixteenth interface is the same as the thirteenth interface. For example, the electronic device receives a touch operation performed on the fifth historical record, which may be understood as receiving the ninth query request. In response to the touch operation, the electronic device displays the user interface 720 (which may be understood as the sixteenth interface) shown in FIG. 7B(3).

In another possible implementations, before S301, the method further includes the following steps.

The electronic device receives a tenth query request, and displays a seventeenth interface, where the seventeenth interface includes a sixth search result, and the sixth search result includes at least one geographical location that is related to the tenth query request. For example, when displaying the user interface 400 shown in FIG. 7B(1), the electronic device may receive the keyword "Huawei Building" entered by the user based on the search box 401A and a touch operation performed on the search control 310B, which may be understood as receiving the tenth query request. In response to the touch operation, the electronic device displays the user interface 710 (which may be understood as the seventeenth interface) shown in FIG. 7B(2).

After displaying the seventeenth interface, the electronic device may perform S301 and S302. For example, when the electronic device displays the user interface 400 shown in FIG. 7C(1), the electronic device may receive the keyword "Xinxi Road, Huawei Building" entered by the user based on the search box 401A and a touch operation performed on the search control 310B, which may be understood as receiving the first query request. In response to the touch operation, the electronic device displays the user interface 730 (which may be understood as the first interface) shown in FIG. 7C(2). The user interface 730 includes the geographical location "Huawei Building" (which may be understood as the first search result).

The second interface displayed by the electronic device in S303 is, for example, the user interface 740 shown in FIG. 7D. The user interface 740 includes the record 741 (which may be understood as the first historical record). The record 741 includes the characters 741B indicating the first keyword "Xinxi Road, Huawei Building", and the map area 741C indicating the map area "Haidian District, Beijing" in which the first search result "Huawei Building" is located.

The electronic device may perform S304 and S305. For example, the electronic device may receive a touch operation performed on the record 741 on the user interface 740 shown in FIG. 7D, which may be understood as receiving the second query request. In response to the touch operation, the electronic device displays the user interface 730 (which may be understood as the third interface) shown in FIG. 7C(2).

In another possible implementation, the map query method provided in this embodiment of this application further includes the following steps.

The electronic device receives an eleventh query request, and displays an eighteenth interface, where the eighteenth interface includes a seventh search result, and the seventh search result includes an eighth geographical location that is related to the eleventh query request. For example, when displaying the user interface 400 shown in FIG. 7A(1), the electronic device may receive the keyword "Huaweii Building" (the homophone) entered by the user based on the search box 401A and a touch operation performed on the search control 310B, which may be understood as receiving the eleventh query request. In response to the touch operation, the electronic device displays the user interface 750 (which may be understood as the eighteenth interface) shown in FIG. 7A(2). The user interface 750 includes the plurality of geographical locations related to "Huaweii Building" (the homophone) in Beijing, and includes the geographical location "Huawei Building" (which may be understood as the eighth geographical location).

The electronic device receives a fourth user operation for the eighth geographical location on the eighteenth interface, and displays a nineteenth interface, where the nineteenth interface includes the eighth geographical location within a map range indicated by a tenth map area. For example, in the embodiment shown in FIG. 7E(1) and FIG. 7E(2), when the electronic device displays the user interface 750 shown in FIG. 7A(2), the electronic device receives a touch operation performed on the search result 7532 on the user interface 750, which may be understood as receiving the fourth user operation. In response to the touch operation, the electronic device displays the user interface 760 (which may be understood as the nineteenth interface) shown in FIG. 7E(2). The user interface 760 includes the geographical location "Huawei Building" (which may be understood as the eighth geographical location).

The electronic device displays a twentieth interface, where the twentieth interface includes a sixth historical record, the sixth historical record includes a sixth keyword and the tenth map area, and the sixth keyword is related to a name of the eighth geographic location. For example, the electronic device displays the user interface 770 (which may be understood as the twentieth interface) shown in FIG. 7F. The user interface 770 includes the record 771 (which may be understood as the sixth historical record). The record 771 includes the characters 771B indicating the sixth keyword "Huawei Building", and the sixth keyword is also the name of the eighth geographical location "Huawei Building". The record 771 further includes the map area 771C indicating the map area "Haidian District, Beijing" of the eighth geographical location "Huawei Building".

The electronic device receives a twelfth query request that is based on the sixth historical record, and displays a twenty-first interface, where the twenty-first interface is the same as the nineteenth interface. For example, the electronic device receives a touch operation performed on the record 771 on the user interface 770 shown in FIG. 7F, which may be understood as receiving the twelfth query request. In response to the touch operation, the electronic device displays the user interface 760 (which may be understood as the twenty-first interface) shown in FIG. 7E(2).

For examples of the user interfaces of the method shown in FIG. 10, refer to FIG. 4A(1) to FIG. 4C(2), FIG. 5A(1) to FIG. 5B, FIG. 6A(1) to FIG. 6C, and FIG. 7A(1) to FIG. 7F.

Steps performed by the foregoing modules or units may be implemented by a plurality of modules or units. One or more of the foregoing modules or units may be implemented by using software, hardware, or a combination thereof.

A person of ordinary skill in the art may understand that all or some of the processes of the methods in the foregoing embodiments may be implemented by a computer program instructing related hardware. The computer program may be stored in a computer-readable storage medium. When the computer program is run, the processes in the foregoing method embodiments are performed. The foregoing storage medium includes: any medium that can store computer program code, like a read-only memory (read-only memory, ROM), a random access memory (random access memory, RAM), a magnetic disk, or an optical disc.

## Claims

1. A map query method, applied to an electronic device, wherein the method comprises:
receiving a first query request;
displaying a first interface, wherein the first interface comprises a first search result, and the first search result comprises at least one geographical location that is related to the first query request and that is within a map range indicated by a first map area;
displaying a second interface, wherein the second interface comprises a first historical record, and the first historical record is related to the first query request;
receiving a second query request that is based on the first historical record; and
displaying a third interface, wherein the third interface is the same as the first interface.

2. The method according to claim 1, wherein the electronic device is located at a first geographical location when receiving the second query request that is based on the first historical record, the first geographical location is within a map range indicated by a second map area, and the second map area is different from the first map area.

3. The method according to claim 1 or 2, wherein the first historical record comprises a first keyword and the first map area, and the first keyword is related to the first query request.

4. The method according to claim 3, wherein the at least one geographical location comprises a second geographical location, and the second geographical location is within the map range indicated by the first map area; or
the at least one geographical location comprises a third geographical location and a fourth geographical location, the third geographical location is within a map range indicated by a third map area, the fourth geographical location is within a map range indicated by a fourth map area, and the map range indicated by the first map area comprises the map range indicated by the third map area and the map range indicated by the fourth map area.

5. The method according to any one of claims 1 to 4, wherein the method further comprises:
receiving a third query request;
displaying a fourth interface, wherein the fourth interface comprises a second search result, and the second search result comprises at least one geographical location that is related to the third query request and that is within a map range indicated by a fifth map area;
receiving a first user operation;
displaying a fifth interface, wherein the fifth interface comprises the second search result, and a size of the fifth map area displayed on the fifth interface is different from a size of the fifth map area displayed on the fourth interface;
displaying a sixth interface, wherein the sixth interface comprises a second historical record, the second historical record comprises a second keyword and the fifth map area, and the second keyword is related to the third query request;
receiving a fourth query request that is based on the second historical record; and
displaying a seventh interface, wherein the seventh interface is the same as the fifth interface.

6. The method according to claim 5, wherein the first user operation is a zoom out gesture or a zoom in gesture.

7. The method according to any one of claims 1 to 4, wherein the method further comprises:
receiving a fifth query request;
displaying an eighth interface, wherein the eighth interface comprises a third search result, the third search result comprises a fifth geographical location and a sixth geographical location that are related to the fifth query request, the fifth geographical location is within a map range indicated by a sixth map area, the sixth geographical location is within a map range indicated by a seventh map area, and the sixth map area is different from the seventh map area;
receiving a second user operation for the fifth geographical location on the eighth interface;
displaying a ninth interface, wherein the ninth interface comprises the fifth geographical location within the map range indicated by the sixth map area;
displaying a tenth interface, wherein the tenth interface comprises a third historical record, the third historical record comprises a third keyword and the sixth map area, and the third keyword is related to the fifth query request;
receiving a sixth query request that is based on the third historical record; and
displaying an eleventh interface, wherein the eleventh interface is the same as the ninth interface.

8. The method according to claim 7, wherein the fifth geographic location and the sixth geographic location are within a map range indicated by an eighth map area, and the map range indicated by the eighth map area comprises the map range indicated by the sixth map area and the map range indicated by the seventh map area.

9. The method according to claim 7 or 8, wherein the tenth interface further comprises a fourth historical record, the fourth historical record comprises information about a first point of information POI, the first POI is the fifth geographic location, and the information about the first POI comprises a name of the fifth geographic location and the sixth map area.

10. The method according to any one of claims 1 to 4, wherein the method further comprises:
receiving a seventh query request;
displaying a twelfth interface, wherein the twelfth interface comprises a fourth search result, and the fourth search result comprises a seventh geographical location that is related to the seventh query request;
receiving a third user operation for the seventh geographical location on the twelfth interface;
displaying a thirteenth interface, wherein the thirteenth interface comprises the seventh geographical location within a map range indicated by a ninth map area;
receiving an eighth query request;
displaying a fourteenth interface, wherein the fourteenth interface comprises a fifth search result, and the fifth search result comprises the seventh geographical location that is related to the eighth query request;
displaying a fifteenth interface, wherein the fifteenth interface comprises a fifth historical record, the fifth historical record comprises a fourth keyword and the ninth map area, and the fourth keyword is related to the seventh query request;
receiving a ninth query request that is based on the fifth historical record; and
displaying a sixteenth interface, wherein the sixteenth interface is the same as the thirteenth interface.

11. The method according to claim 10, wherein the fourth keyword is different from a fifth keyword, and the fifth keyword is related to the eighth query request.

12. The method according to any one of claims 1 to 4, wherein before the receiving a first query request, the method further comprises:
receiving a tenth query request; and
displaying a seventeenth interface, wherein the seventeenth interface comprises a sixth search result, and the sixth search result comprises at least one geographical location that is related to the tenth query request.

13. The method according to any one of claims 1 to 4, wherein the method further comprises:
receiving an eleventh query request;
displaying an eighteenth interface, wherein the eighteenth interface comprises a seventh search result, and the seventh search result comprises an eighth geographical location that is related to the eleventh query request;
receiving a fourth user operation for the eighth geographical location on the eighteenth interface;
displaying a nineteenth interface, wherein the nineteenth interface comprises the eighth geographical location within a map range indicated by a tenth map area;
displaying a twentieth interface, wherein the twentieth interface comprises a sixth historical record, the sixth historical record comprises a sixth keyword and the tenth map area, and the sixth keyword is related to a name of the eighth geographic location;
receiving a twelfth query request that is based on the sixth historical record; and
displaying a twenty-first interface, wherein the twenty-first interface is the same as the nineteenth interface.

14. The method according to claim 3 or 4, wherein before the displaying a third interface, the method further comprises:
sending a first request message to a network device, wherein the first request message is used to request to obtain a search result related to the second query request, and the first request message comprises the first keyword and the first map area; and
obtaining the first search result sent by the network device, wherein the first search result is used by the electronic device to display the third interface.

15. The method according to claim 5 or 6, wherein before the displaying a seventh interface, the method further comprises:
sending a second request message to a network device, wherein the second request message is used to request to obtain a search result related to the fourth query request, the second request message comprises the second keyword, the fifth map area, and a first parameter, and the first parameter indicates the size of the fifth map area displayed on the fifth interface; and
obtaining the second search result sent by the network device, wherein the second search result is used by the electronic device to display the seventh interface.

16. An electronic device, comprising a transceiver, a processor, and a memory, wherein the memory is configured to store a computer program, and the processor invokes the computer program to perform the method according to any one of claims 1 to 15.

17. A computer storage medium, wherein the computer storage medium stores a computer program, and when the computer program is executed by a processor, the method according to any one of claims 1 to 15 is implemented.
